(19) Europäisches Patentamt
European Patent Office
Office européen des brevets

(11) **EP 2 087 459 B1**

(12) **EUROPÄISCHE PATENTSCHRIFT**

(45) Veröffentlichungstag und Bekanntmachung des Hinweises auf die Patenterteilung:
**21.03.2018 Patentblatt 2018/12**

(21) Anmeldenummer: **07857133.8**

(22) Anmeldetag: **27.12.2007**

(51) Int Cl.:
**G06K 9/46** (2006.01)     **G01C 21/30** (2006.01)

(86) Internationale Anmeldenummer:
**PCT/EP2007/011437**

(87) Internationale Veröffentlichungsnummer:
**WO 2008/080606 (10.07.2008 Gazette 2008/28)**

(54) **VORRICHTUNG, VERFAHREN UND COMPUTERPROGRAMM ZUM BESTIMMEN EINER POSITION BASIEREND AUF EINEM KAMERABILD**

DEVICE, METHOD, AND COMPUTER PROGRAM FOR DETERMINING A POSITION ON THE BASIS OF A CAMERA IMAGE

DISPOSITIF, PROCÉDÉ ET PROGRAMME INFORMATIQUE POUR DÉTERMINER UNE POSITION SUR LA BASE D'UNE IMAGE PRISE PAR UN APPAREIL DE PRISE DE VUES

(84) Benannte Vertragsstaaten:
**AT BE BG CH CY CZ DK EE ES FI FR GB GR HU IE IS IT LI LT LU LV MC MT NL PL PT RO SE SI SK TR**

(30) Priorität: **29.12.2006 DE 102006062061**

(43) Veröffentlichungstag der Anmeldung:
**12.08.2009 Patentblatt 2009/33**

(73) Patentinhaber: **Fraunhofer-Gesellschaft zur Förderung der angewandten Forschung e.V.
80686 München (DE)**

(72) Erfinder: **KLEFENZ, Franz
68159 Mannheim (DE)**

(74) Vertreter: **Burger, Markus et al
Schoppe, Zimmermann, Stöckeler Zinkler, Schenk & Partner mbB
Patentanwälte
Radlkoferstraße 2
81373 München (DE)**

(56) Entgegenhaltungen:
EP-A- 1 677 076        EP-A2- 0 740 163
DE-A1-102005 047 160   DE-C1- 3 830 496
US-A1- 2002 031 242    US-A1- 2006 210 116
US-B1- 6 732 046

- HO C-T ET AL: "A HIGH-SPEED ALGORITHM FOR ELLIPTICAL OBJECT DETECTION", IEEE TRANSACTIONS ON IMAGE PROCESSING, IEEE SERVICE CENTER, PISCATAWAY, NJ, US, vol. 5, no. 3, 1 March 1996 (1996-03-01), pages 547-550, XP000582936, ISSN: 1057-7149, DOI: 10.1109/83.491329
- Avi Epstein: "Parallel Hardware Architectures for the Life Sciences", , 9 September 2004 (2004-09-09), XP055328038, Retrieved from the Internet: URL:http://www.tnw.tudelft.nl/fileadmin/Fa culteit/TNW/Over_de_faculteit/Afdelingen/I maging_Science_and_Technology/Research/Re s earch_Groups/Quantitative_Imaging/Publicat ions/List_Publications/doc/Avi_Epstein.pdf [retrieved on 2016-12-12]

**EP 2 087 459 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung bezieht sich im Allgemeinen auf eine Vorrichtung, ein Verfahren und ein Computerprogramm zum Bestimmen einer Position basierend auf einem Kamerabild, im Speziellen auf eine videogestützte Navigation.

In der Technik sind eine Vielzahl von Konzepten bekannt, um eine Position eines Objekts in dem Raum zu bestimmen. So gibt es beispielsweise Navigationssysteme, die eine Positionsbestimmung basierend auf ein oder mehreren Funksignalen ermöglichen. Beispielsweise ermöglicht es das GPS-Positionsbestimmungssystem, eine Position zu bestimmen, indem Signale von einer Mehrzahl von Satelliten empfangen und verarbeitet werden.

Ferner existieren bereits Systeme, bei denen eine Position basierend auf einem durch eine Kamera aufgenommenen Bild bestimmt wird. So beschreibt die DE 102 48 534 A1 ein Verfahren zur Positionsbestimmung eines mobilen Endgeräts. Zur Positionsbestimmung nimmt das mobile Endgerät des Teilnehmers über eine optische Aufnahmevorrichtung Bilder oder Bildfolgen einer Umgebung auf, in der sich der Teilnehmer befindet. Die von der Aufnahmeeinrichtung aufgenommenen Bilder oder Bilderfolgen werden zusammen mit Positionsdaten sowie Daten zur Geräteeinstellung des mobilen Endgeräts und der zugeordneten Kamera an ein Positions- und Navigationsserver gesendet. Die dort eingegangenen Daten und Bilder oder Bilderfolgen werden mit Bildern oder Bilderfolgen einer Bild-Datenbank verglichen, wobei den Bildern oder Bilderfolgen der Bilddatenbank Positionsdaten zugeordnet sind, die aus exakten Vermessungsdaten des Gebiets bestehen, das die Bilder oder Bilderfolgen wiedergeben. Für den Bildvergleich werden aus der Videoüberwachung bekannte Algorithmen verwendet.

Der Vergleich der aufgenommenen Bilder mit den Bildern bzw. den Bildfolgen der Bilddatenbank erfolgt auf Basis eines Bildmustervergleichs. Dabei werden vorzugsweise die aus der Video- und Bildüberwachung bekannten Algorithmen verwendet. Beispielsweise werden Verfahren zur Texterkennung verwendet, so dass Straßennamen, Hausnummern oder Bezeichnungen von Gebäuden aus der Bildinformation extrahiert werden. Wird anhand des Bildmustervergleichs eine Übereinstimmung mit einem in der Bilddatenbank gespeichertem Bild erkannt, so wird die Position des Betrachters berechnet.

In Anbetracht des bekannten Stands der Technik wie z.B. offenbart im Dokument EP1677076, ist es die Aufgabe der vorliegenden Erfindung, ein Konzept zur Bestimmung einer Position basierend auf einem Kamerabild zu schaffen, das eine besonders effiziente bzw. zuverlässige Positionsbestimmung ermöglicht.

Diese Aufgabe wird durch eine Vorrichtung zum Bestimmen einer Position basierend auf einem Kamerabild gemäß Anspruch 1, ein Verfahren zum Bestimmen einer Position basierend auf einem Kamerabild gemäß Anspruch 20 und durch ein Computerprogramm gemäß Anspruch 21 gelöst.

Die vorliegende Erfindung schafft eine Vorrichtung zum Bestimmen einer Position basierend auf einem Kamerabild, gemäß dem Anspruch 1.

Es ist ein Kerngedanke der vorliegenden Erfindung, dass eine Positionsbestimmung in besonders effizienter bzw. zuverlässiger Weise möglich ist, indem in einem Kamerabild durch einen Hough-Transformator Bögen (Kreisbögen oder Ellipsenbögen) sowie gerade Strecken identifiziert werden, da die Information über die Bögen und geraden Strecken eine besonders charakteristische Information über eine Position umfasst.

Die Vorrichtung zum Bestimmen einer Position umfasst daher einen Positions-Beschreibungs-Ersteller, der ausgelegt ist, um basierend auf den identifizierten Bögen oder identifizierten geraden Strecken eine Positionsbeschreibung zu erhalten, die die identifizierten Bögen und die identifizierten geraden Strecken durch Parameter beschreibt. Die entsprechende Beschreibung, die somit eine Umgebung durch eine Information über in dem Kamerabild erkannte Bildelemente (Bögen und gerade Strecken) beschreibt, kann somit einem Datenbankvergleicher zugeführt werden, wobei der Datenbankvergleicher ausgelegt ist, um die Positionsbeschreibung mit einer Mehrzahl von Vergleichs-Positionsbeschreibungen zu vergleichen, um als Ergebnis des Vergleichs eine Information über eine Position zu erhalten.

Im Rahmen des erfindungsgemäßen Verfahrens ergeben sich besondere Vorteile aus dem Einsatz des Hough-Transformators. So ist der Hough-Transformator typischerweise in der Lage, charakteristische Bildelemente, also beispielsweise Kreisbögen oder Ellipsenbögen und in verschiedenen Richtungen durch das Bild verlaufende gerade Strecken, auch dann zu erkennen, wenn die Bildelemente Unterbrechungen aufweisen. So kommt es nicht selten vor, dass in einem Kamerabild von einer Kamera, das eine Umgebung zeigt, charakteristische Linien wie z. B. ein Straßenverlauf nicht durchgängig sichtbar sind, da sie beispielsweise durch verschiedene Objekte teilweise verdeckt sind. So kann beispielsweise eine Straßenmarkierung, die eine besonders charakteristische Linie in einem Bild darstellt, teilweise verschmutzt oder schwer sichtbar sein. Weist die Linie allerdings zumindest lokal einen Verlauf auf, der dem Verlauf einer dem Hough-Transformator bekannten Vergleichslinie entspricht, so kann der Hough-Transformator dementsprechende Linien auch dann identifizieren, wenn diese teilweise unterbrochen ist. Somit ist der Hough-Transformator insgesamt in der Lage, auch unvollständige Bildelemente zu identifizieren.

Im Übrigen sein darauf hingewiesen, dass bei der erfindungsgemäßen Vorrichtung der Inhalt des Bildes bzw. des Kamerabildes auf die wesentlichen Elemente, nämlich durch den Hough-Transformator identifizierbare Bildelemente, reduziert wird. Es hat sich gezeigt, dass gerade die durch einen Hough-Transformator identifizierbaren Bildelemente einen besonders hohen Informationswert haben, und dass somit der Inhalt des durch die Kamera gelieferten Kamerabildes durch eine geringe Anzahl von Parametern, die die durch den Hough-Transformator identifizierten Bildelemente beschreiben, charakterisiert werden kann. Somit stellt die Positions-Beschreibung, die durch den Positions-Beschreibungs-Ersteller basierend auf den durch den Hough-Transformator identifizierten Bildelementen erstellt wird, eine zuverlässige und von der Informationsmenge her gut handhabbare Beschreibung des Bildes dar. Daher eignet sich die in der erfindungsgemäßen Weise erzeugte Positionsbeschreibung sehr gut für einen Datenbank-Vergleich. So existieren bevorzugt nur wenige Typen von Bildelementen (beispielsweise Kreisbögen oder Ellipsenbögen sowie in verschiedenen Richtungen verlaufende gerade Strecken), die jeweils durch wenige Parameter (z. B. Position, Krümmungsradius, Länge, Richtung) beschreibbar ist. Daher kann ein effizienter Datenbank-Vergleich durchgeführt werden, dessen Komplexität wesentlich geringer ist als ein herkömmlicherweise verwendeter Vollbild-Vergleich.

In anderen Worten, es ist festzuhalten, dass die durch den Hough-Transformator identifizierten Bildelemente einen besonders aussagekräftigen und störungsunempfindlichen Fingerabdruck des Bildes darstellen, der sich somit hervorragend zur Bestimmung einer Position basierend auf dem Kamerabild eignet.

Bevorzugte weitere Ausführungsbeispiele der vorliegenden Erfindung sind im Übrigen durch die abhängigen Patenansprüche definiert.

Die vorliegende Erfindung schafft im Übrigen ferner ein Verfahren zum Bestimmen einer Position basierend auf einem Kamerabild von einer Kamera sowie ein entsprechendes Computerprogramm.

Bevorzugte Ausführungsbeispiele der vorliegenden Erfindung werden nachfolgend Bezug nehmend auf die beiliegenden Figuren näher erläutert. Es zeigen:

Fig. 1 ein Blockschaltbild einer erfindungsgemäßen Vorrichtung zum Bestimmen einer Position;

Fig. 2a ein Flussdiagramm eines Verfahrens zum Bestimmen eines Extremabildes aus einem Bild, gemäß einem Ausführungsbeispiel der vorliegenden Erfindung;

Fig. 2b ein Flussdiagramm eines erfindungsgemäßen Verfahrens zum Bestimmen einer zusammengesetzten Draufsicht auf ein Extremabild basierend auf mehreren Extremabildern, gemäß einem Ausführungsbeispiel der vorliegenden Erfindung;

Fig. 2c ein Flussdiagramm eines erfindungsgemäßen Verfahrens zum Bestimmen einer Liste von Geraden und Bögen basierend auf einer zusammengesetzten Draufsicht auf ein Extremabild, gemäß einem Ausführungsbeispiel der vorliegenden Erfindung;

Fig. 2d ein Flussdiagramm eines erfindungsgemäßen Verfahrens zum Erhalten einer Information über eine Position basierend auf einer Liste von Geraden und Bögen, gemäß einem Ausführungsbeispiel der vorliegenden Erfindung;

Fig. 2e eine graphische Darstellung einer zusammengesetzten Draufsicht auf ein Extremabild;

Fig. 3a eine graphische Darstellung eines perspektivischen Abbilds einer Straße;

Fig. 3b eine graphische Darstellung einer Draufsicht auf eine Straße;

Fig. 3c eine beispielhafte Darstellung einer Beschreibung eines Streckenverlaufs als eine Liste von geraden Strecken und Bögen;

Fig. 4 eine schematisch Darstellung einer Vorgehensweise bei einer Bestimmung einer zusammengesetzten Draufsicht auf einen Streckenverlauf;

Fig. 5 eine graphische Darstellung eines Straßenverlaufs sowie darin identifizierter Extrema;

Fig. 6 eine graphische Darstellung eines Streckenverlaufs sowie darin identifizierter Extrema;

Fig. 7 eine graphische Darstellung eines Streckenverlaufs sowie darin identifizierter Extrema;

Fig. 8 eine graphische Darstellung eines Streckenverlaufs sowie darin identifizierter Extrema;

Fig. 9 eine graphische Darstellung eines Streckenverlaufs sowie darin identifizierter Extrema;

Fig. 10a eine graphische Darstellung eines Original-Video-Bildes;

Fig. 10b eine graphische Darstellung eines durch Schwellwertbildung verarbeiteten Schwellwertbildes;

Fig. 10c eine graphische Darstellung eines durch eine Konturenerkennung verarbeiteten Konturenbildes;

Fig. 10d eine graphische Darstellung eines durch einen Hough-Transformator verarbeiteten Extremabildes;

Fig. 10e    eine graphische Darstellung eines weiteren Extrambildes;

Fig. 10f    eine graphische Darstellung eines bei der Erzeugung des Extremabildes gemäß der Fig. 10e verwendeten Parametersatzes;

Fig. 10g    eine graphische Darstellung eines weiteren Extremabildes;

Fig. 10h    eine graphische Darstellung eines bei der Erzeugung des Extrema-Bildes der Fig. 10g verwendeten Parametersatzes;

Fig. 11a    zeigt eine graphische Darstellung eines Beispiels für eine Spurerkennung mit Hilfe einer Hough-Transformation;

Fig. 11b    zeigt eine weitere graphische Darstellung eines Beispiels für eine Spurerkennung mit Hilfe einer Hough-Transformation;

Fig. 12    ein Blockschaltbild einer erfindungsgemäßen Vorrichtung zum Bestimmen einer Position basierend auf einem Kamerabild von einer Kamera, gemäß einem Ausführungsbeispiel der vorliegenden Erfindung;

Fig. 13    ein Blockschaltbild einer erfindungsgemäßen Vorrichtung zum Bestimmen einer Position basierend auf einem Kamerabild von einer Kamera, gemäß einem Ausführungsbeispiel der vorliegenden Erfindung;

Fig. 13A    eine graphische Darstellung eines Kantenbilds mit markierten Knickpunkten und Extrempunkten;

Fig. 13B    eine graphische Darstellung von Vergleichsmustern für eine Suche von Knickpunkten und Extrempunkten;

Fig. 13C    eine graphische Darstellung von aus einem Kantenbild extrahierten Knickpunkten und Extrempunkten;

Fig. 14    eine schematische Darstellung eines erfindungsgemäßen Modellbild-Bestimmers, gemäß einem Ausführungsbeispiel der vorliegenden Erfindung;

Fig. 15    ein Blockschaltbild einer erfindungsgemäßen Bildvergleichseinrichtung, gemäß einem Ausführungsbeispiel der vorliegenden Erfindung;

Fig. 16    ein Flussdiagramm eines erfindungsgemäßen Verfahrens gemäß einem Ausführungsbeispiel der vorliegenden Erfindung; und

Fig. 17    ein Blockschaltbild eines erfindungsgemäßen Verfahrens zum Bestimmen einer Position basierend auf einem Kamerabild von einer Kamera.

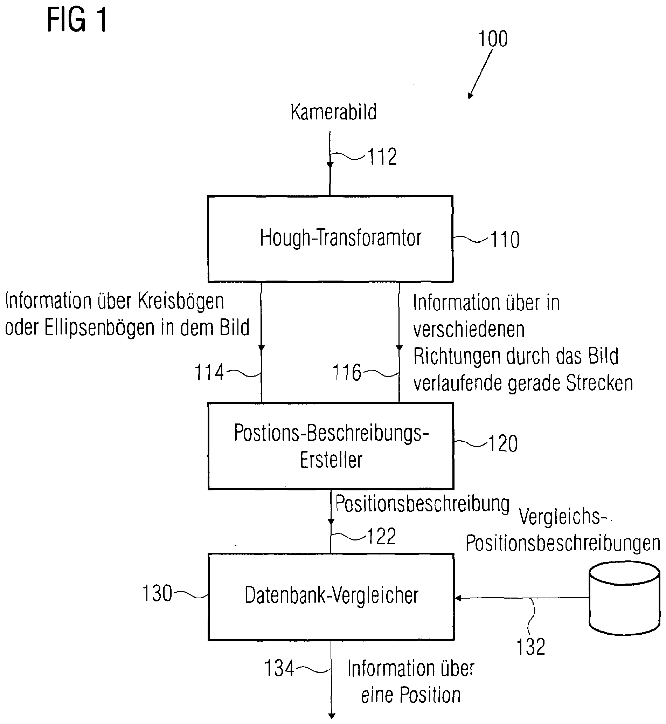

Fig. 1 zeigt ein Blockschaltbild einer erfindungsgemäßen Vorrichtung zum Bestimmen einer Position basierend auf einem Kamerabild von einer Kamera. Die Vorrichtung gemäß Fig. 1 ist in ihrer Gesamtheit mit 100 bezeichnet.

Die Vorrichtung 100 umfasst einen Hough-Transformator 110. Der Hough-Transformator 110 ist ausgelegt, um ein Kamerabild 112 oder eine vorverarbeitete Version eines Kamerabildes zu empfangen. Der Hough-Transformator ist ausgelegt, um eine Information 114 über in dem Kamerabild 112 identifizierte Kreisbögen oder Ellipsenbögen zu liefern. Zudem ist der Hough-Transformator ausgelegt, um eine Information 116 über in verschiedenen Richtungen durch das Kamerabild 112 verlaufende gerade Strecken zu liefern. Die Vorrichtung 100 umfasst ferner einen Positions-Beschreibungs-Ersteller 120, der ausgelegt ist, um die Information 114 über Kreisbögen oder Ellipsenbögen in dem Kamerabild sowie die Informationen 116 über in verschiedene Richtungen durch das Kamerabild verlaufende gerade Strecken zu empfangen. Der Positions-Beschreibungs-Ersteller ist ferner ausgelegt, um basierend auf den identifizierten Kreisbögen oder Ellipsenbögen und ferner basierend auf den identifizierten geraden Strecken eine Positionsbeschreibung 122 zu erhalten, die die identifizierten Kreisbögen oder Ellipsenbögen und die identifizierten geraden Strecken durch Parameter beschreibt.

Die Vorrichtung 100 umfasst ferner einen Datenbankvergleicher 130, der ausgelegt ist, um die Positionsbeschreibung 122 von dem Positionsbeschreibungsersteller 120 zu empfangen und mit einer Mehrzahl von Vergleichs-Positionsbeschreibungen 132 zu vergleichen. Ferner ist der Datenbankvergleicher ausgelegt, um basierend auf dem Ergebnis der Vergleichs zwischen der Positionsbeschreibung 122 und den Vergleichs-Positionsbeschreibungen 132 als Ergebnis eine Information 134 über eine Position zu erhalten.

Basierend auf der obigen strukturellen Beschreibung wird im Folgenden die Funktionsweise der Vorrichtung 100 kurz erläutert. Der Hough-Transformator 110 empfängt das Kamerabild 112 und identifiziert durch die Ausführung einer Hough-Transformation verschiedene Bildelemente in dem Kamerabild 112. So ist der Hough-Transformator 110 bevorzugt ausgelegt, um beispielsweise Ausschnitte aus Kreislinien oder Ausschnitte aus elliptischen Linien, die in dem Kamerabild 112 vorhanden sind, zu identifizieren. Bevorzugt liefert der Hough-Transformator 110 dabei eine Information, die die identifizierten Kreisbögen oder Ellipsenbögen näher charakterisiert. Beispielsweise kann der Hough-Transformator 110 eine Information über eine Lage eines Kreisbogens oder Ellipsenbogens liefern. So wird es bevorzugt, dass der Hough-Transformator 110 durch die Information 114 einen Extrempunkt eines Kreisbogens (bzw. Kreisbogen-Ausschnitts) oder eines Ellipsenbogens (bzw. Ellipsenbogen-Ausschnitts) beschreibt. Unter einem Extrempunkt wird dabei ein Punkt eines Kreisbogens oder eines Ellipsenbogens verstanden, der am weitesten in einer vorbestimmten Richtung gelegen ist. Liegt beispielsweise das Kamerabild in Form von Bildpunkten vor, die in einem Raster bestehend aus Rasterzeilen und Rasterspalten angeordnet sind, so wird unter einem Extrempunkt eines Bogens beispielsweise ein am weitesten links gelegener Punkt eines Bogen, ein am weitesten rechts gelegener Punkt eines Bogens, ein am weitesten oben gelegener Punkt eines Bogens oder ein am weitesten unten gelegener Punkt eines Bogens bezeichnet.

Ferner kann der Hough-Transformator 110 (optional) zusätzlich ausgelegt sein, um eine Information über einen Krümmungsradius eines in dem Kamerabild 112 identifizierten Bogens zu bestimmen und die entsprechende Information an den Positions-Beschreibungs-Ersteller 120 im Rahmen der Information 114 weiterzugeben.

Im Hinblick auf in dem Kamerabild 112 identifizierte gerade Strecken kann der Hough-Transformator 110 beispielsweise ausgelegt sein, um die identifizierten geraden Strecken durch eine Information über eine Länge, eine Richtung, einen Anfangspunkt und/oder einen Endpunkt zu beschreiben. Die entsprechende Information liefert der Hough-Transformator 110 bevorzugt im Rahmen der Information 116 an den Positions-Beschreibungs-Ersteller 120.

Somit ist festzuhalten, dass der Hough-Transformator 110 bevorzugt ausgelegt ist, um die Information 114, 116 zu erhalten. Der Hough-Transformator 110 kann dabei beispielsweise konfiguriert sein, um Bögen und gerade Strecken in einem einzigen Durchlauf zu identifizieren. Alternativ dazu kann der Hough-Transformator 110 zwei separate Teil-Hough-Transformatoren umfassen, von denen einer erster Teil-Hough-Transformator ausgelegt ist, um Bögen (also Ausschnitte aus Kreisbögen oder Ellipsenbögen) zu identifizieren, und von denen ein zweiter Teil-Hough-Transformator ausgelegt ist, um in verschiedenen Richtungen durch das Bild verlaufende gerade Strecken zu identifizieren. Bei einem alternativen Ausführungsbeispiel kann der Hough-Transformator 110 aber auch ein unkonfigurierbares Hough-Feld umfassen, das umkonfiguriert werden kann, um in einem ersten Durchlauf Bögen in dem Kamerabild 112 zu identifizieren, und um in einem zweiten Durchlauf gerade Strecken in dem Kamerabild zu identifizieren. Ferner sei darauf hingewiesen, dass bei einem bevorzugten Ausführungsbeispiel das Kamerabild 112 in verschiedenen Richtung (z. B. einmal mit einer aufsteigenden Reihenfolge der Bildspalten, beispielsweise beginnend mit einer ersten Bildspalte, und einmal mit einer absteigenden Reihenfolge der Bildspalten, beispielsweise beginnend mit der letzten Bildspalte, dem Hough-Transformator zugeführt werden kann. Zusätzlich oder alternativ kann das Kamerabild 112 beispielsweise dem Hough-Transformator auch zeilenweise in einer aufsteigenden Reihenfolge der Bildzeilen und/oder zeilenweise in einer absteigenden Reihenfolge der Bildzeilen zugeführt werden.

Somit können beispielsweise in effizienter Weise Bögen mit Krümmungen in verschiedenen Richtungen (nach unten, nach oben, nach links und/oder nach rechts) identifiziert werden. Auch eine Identifikation von in verschiedenen Richtungen durch das Bild verlaufenden geraden Strecken ist in besonders effizienter Weise möglich, wenn das Kamerabild 112 in verschiedenen Richtung (also beispielsweise einmal zeilenweise und einmal spaltenweise, bzw. einmal in aufsteigender Reihenfolge der Zeilen und einmal in absteigender Reihefolge der Zeilen, bzw. einmal in aufsteigender Reihenfolge der Spalten und einmal in absteigender Reihenfolge der Spalten) verarbeitet wird.

Es sei darauf hingewiesen, dass die verschiedenen Verarbeitungsschritte alternativ nacheinander oder parallel zueinander durchgeführt werden können.

Der Positions-Beschreibungs-Ersteller 120 ist bevorzugt ausgelegt, um die Informationen 114 über Kreisbögen oder Ellipsenbögen in dem Bild bzw. Kamerabild 112 sowie die Informationen 116 über in verschiedenen Richtungen durch das Bild bzw. Kamerabild 112 verlaufende gerade Strecken zu einer Positionsbeschreibung 122 zusammenzufassen. Diesbezüglich kann der Positionsbeschreibungsersteller 120 beispielsweise ausgelegt sein, um als die Positionsbeschreibung 122 einen Merkmalsvektor zu erstellen, der die Information über die verschiedenen identifizierten Bildelemente (Kreisbögen bzw. Kreisbogen-Ausschnitte, Ellipsenbögen bzw. Ellipsenbogenausschnitte und/oder gerade Strecken) in einer bestimmten Reihenfolge umfasst. Ferner kann der Positions-BEschreibungs-Ersteller 120 beispielsweise ausgelegt sein, um aus einer Gesamtheit von identifizierten Bögen und geraden Strecken ausgewählte Bildelemente auszuwählen. So kann der Positionsbeschreibungsersteller 120 beispielsweise ausgelegt sein, um aus der Gesamtheit von identifizierten Bögen und geraden Strecken solche Bögen und gerade Strecken für die Erstellung der Positionsbeschreibung auszuwählen, die einen zusammenhängenden Streckenverlauf bzw. eine zumindest näherungsweise zusammenhänge durchgehende Linie beschreiben. Alternativ dazu kann der Positionsbeschreibungsersteller 120 allerdings in die Positionsbeschreibung 122 auch die Informationen über sämtliche durch den Hough-Transformator 110 identifizierten Bildelemente übernehmen.

Ferner kann der Positions-Beschreibungs-Ersteller 120 eine vordefinierte Filter-Regel anwenden, um aus den durch den Hough-Transformator 110 identifizierten Bildelementen ausgewählte Bildelemente auswählen und die Positionsbeschreibung 122 basierend auf den ausgewählten Bildelementen (Bögen und geraden Strecken) zu bilden.

Ferner kann der Positions-Beschreibungs-Ersteller 120 beispielsweise ausgelegt sein, um die durch den Hough-Transformator 110 identifizierten Bildelemente in einer bestimmten Weise, beispielsweise gemäß einer vorgegebenen Anordnungsregel, anzuordnen. So kann der Positions-Beschreibungs-Ersteller 120 beispielsweise ausgelegt sein, um die Bildelemente für die Erstellung der Positionsbeschreibung 122 im Hinblick auf eine Reihenfolge so anordnen, dass die angeordneten Bildelemente einen durchgehenden Linienverlauf bilden. Alternativ dazu kann der Positions-Beschreibungs-Ersteller 120 die Positionsbeschreibung 122 beispielsweise auch so bilden, dass die Beschreibung der Bildelemente in der Positionsbeschreibung 122 einer anderen Anordnungsregel entspricht. Beispielsweise kann der Positionsbeschreibungsersteller 120 die Positionsbeschreibung 122 so erstellen, dass die Positionsbeschreibung 122 die durch den Hough-Transformator identifizierten Bildelemente nach Parametern der Bildelementen sortiert umfasst. So können beispielsweise Bögen im Hinblick darauf sortiert werden, wo in dem Kamerabild 122 sie gelegen sind (z. B. von links nach rechts und/der von oben nach unten). Alternativ können die Bögen beispielsweise auch nach ihrem Krümmungsradius sortiert sein. In ähnlicher Weise können beispielsweise identifizierte gerade Strecken in der Positionsbeschreibung 122 nach ihrer Lage und/oder Länge und/oder Richtung sortiert sein.

Somit ist insgesamt festzuhalten, dass die Positionsbeschreibung 122 durch den Positionsbeschreibungsersteller 120 bevorzugt so erstellt wird, dass die Positionsbeschreibung 122 möglichst charakteristisch für das Kamerabild ist.

Der Datenbankvergleicher 130 empfängt die Positionsbeschreibung 122 und vergleicht die Positionsbeschreibung mit einer Mehrzahl von Vergleichs-Positions-Beschreibungen 132, die beispielsweise in einer Datenbank abgelegt sind. Empfängt der Datenbankvergleicher 130 die Positionsbeschreibung 122 beispielsweise in Form eines Merkmalsvektors, so kann der Datenbankvergleicher beispielsweise ausgelegt sein, um einen Unterschied zwischen dem Merkmalsvektor der Positionsbeschreibung 122 und Merkmalsvektoren der Vergleichs-Positionsbeschreibungen 132 zu bilden. Ist ein Abstand bzw. Unterschied zwischen zwei Merkmalsvektoren ausreichend klein, beispielsweise kleiner als eine vorgegebene maximal zulässige Abweichung, oder minimal, so kann der Datenbankvergleicher 130 beispielsweise erkennen, dass eine ausreichende Übereinstimmung zwischen der Positionsbeschreibung 122 und der Vergleichs-Positionsbeschreibung 132 besteht. Somit kann der Datenbankvergleicher 130 beispielsweise eine zu der entsprechenden Vergleichs-Positions-Beschreibung 132 gehörige Positionsinformation als das Ergebnis 134 ausgeben.

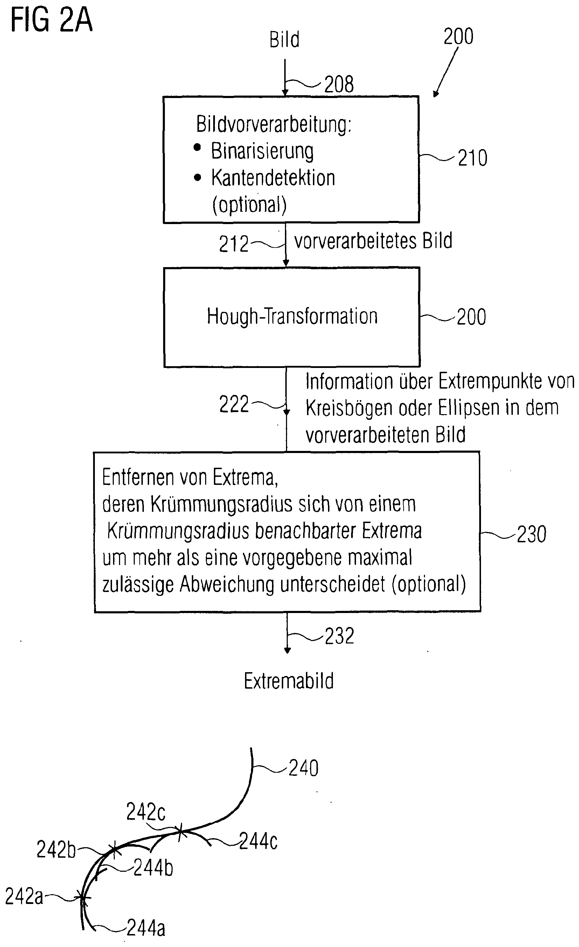

Details im Hinblick auf das erfindungsgemäßen Konzept zur Bestimmung einer Position basierend auf einem Kamerabild werden im Folgenden Bezug nehmend auf die Fig. 2a bis 2d beschrieben.

Fig. 2a zeigt ein Flussdiagramm eines erfindungsgemäßen Verfahrens zur Berechnung eines Extremabilds aus einem Bild, gemäß einem Ausführungsbeispiel der vorliegenden Erfindung.

Das Verfahren gemäß der Fig. 2a ist in seiner Gesamtheit mit 200 bezeichnet. Das Verfahren 200 umfasst in einem ersten Schritt 210 eine Durchführung einer Bildvorverarbeitung. Die Bildvorverarbeitung umfasst beispielsweise eine Binarisierung des Bildes für eine Kantendetektion in dem Bild. Aufgrund der Bildvorverarbeitung 210 entsteht somit aus dem Bild 208 ein vorverarbeitetes Bild 212. Das Verfahren 200 umfasst ferner die Durchführung einer Hough-Transformation 220 unter Verwendung des vorverarbeiteten Bildes 212. Die Durchführung 220 der Hough-Transformation liefert somit eine Information 222 über Extrempunkte von Kreisbögen oder Ellipsenbögen in dem vorverarbeiteten Bild.

Die Hough-Transformation 220 kann ferner alternativ oder zusätzlich eine Information über schräg durch das Bild 208 bzw. durch das vorverarbeitete Bild 212 verlaufende gerade Strecken liefern. Umfasst die Information 222 in diesem Fall eine Information über gerade Strecken in dem vorverarbeiteten Bild 212 bzw. in dem Bild 208, so tritt an die Stelle der Information über die Extrempunkte beispielsweise eine Information über Mittelpunkte der geraden Strecken.

Die Hough-Transformation 220 liefert somit als die Information 222 beispielsweise eine Information über Extrempunkte von Kreisbögen oder Ellipsenpunkten und, optional, zusätzlich eine Information über Mittelpunkte von geraden Strecken in dem Bild 208 oder in dem vorverarbeiteten Bild 212. Die Information 222 umfasst damit eine Information über charakteristische Punkte (Extrempunkte von Kreisbögen oder Ellipsenbögen, und zusätzlich, optional, Mittelpunkte von geraden Strecken) in dem Bild 208 bzw. in dem vorverarbeiteten Bild 212. Den Extrempunkten der Kreisbögen oder Ellipsenbögen sind bevorzugt Krümmungsradien zugeordnet, die durch die Hough-Transformation 220 erzeugt bzw. bestimmt werden. Den Mittelpunkten von geraden Strecken, die optional durch die basierend auf der Hough-Transformation 220 gelieferten Informationen 222 beschrieben werden, ist beispielsweise ein Krümmungsradius von unendlich zugeordnet.

Das Verfahren 200 umfasst ferner in einem dritten Schritt 230 ein Entfernen von Extrema, und zusätzlich optional von Mittelpunkten von geraden Strecken, deren zugeordneter Krümmungsradius sich von einem Krümmungsradius zumindest eines benachbarten Extremums um mehr als eine vorgegebene maximal zulässige Abweichung unterscheidet. Durch den dritten Schritt 230 wird somit basierend auf der Information über Extrempunkte von Kreisbögen oder Ellipsenbögen in dem Bild 208 bzw. in dem vorverarbeiteten Bild 212 (und zusätzlich, optional, basierend auf der Information über Mittelpunkte von geraden Strecken) ein Extremabild 232 erzeugt. In dem Schritt 230 des Entfernens von Extrema wird somit beispielsweise erreicht, dass das Extremabild 232 nur solche Extrempunkte von Bögen (Kreisbögen oder Ellipsenbögen) bzw. Mittelpunkte (von geraden Strecken) umfasst, deren Krümmungsradius mit Krümmungsradien von benachbarten Extrempunkten bzw. Mittelpunkten zumindest näherungsweise stetig ist. In anderen Worten, in dem Extremabild 232 sind solche Extrempunkte bzw. Mittelpunkte von geraden Strecken entfernt, deren Krümmungsradius sich um mehr als eine maximal zulässige Abweichung von Krümmungsradien von benachbarten Extrempunkten bzw. Mittelpunkten von geraden Strecken unterscheidet. Somit wird sichergestellt, dass in dem Extremabild 232 enthaltene Extrempunkte bzw. Mittelpunkte von geraden Strecken einen zumindest näherungsweise stetigen Verlauf im Hinblick auf den Krümmungsradius bilden.

Eine derartige Vor-Filterung 230 der durch die Hough-Transformation 220 gebildeten Informationen 222 ist sinnvoll, da im Rahmen einer Positionsbestimmung erwünscht ist, im Wesentlichen solche Linien in dem Bild bzw. Kamerabild 208 zu identifizieren, die für das Kamerabild charakteristisch sind. Dies sind typischerweise vergleichsweise lange und regelmäßige Linien. Lange und regelmäßige Linien zeichnen sich aber in vielen Fällen dadurch aus, dass sie, falls sie gekrümmt sind, vergleichsweise "sanfte" Übergänge zwischen verschiedenen Krümmungen aufweisen.

Eine einzige durchgehende und knickfreie Linie kann beispielsweise an benachbarten Linienpunkten jeweils durch Näherungskreise bzw. Näherungs-Ellipsen angenähert werden. Eine entsprechende gekrümmte Linie ist in der Fig. 2a mit 240 bezeichnet. Drei ausgezeichnete Linienpunkte sind mit 242a, 242b und 242c bezeichnet. Entsprechende Krümmungskreise bzw. Krümmungs-Ellipsen sind mit 244a, 244b und 244c bezeichnet. Es ist ersichtlich, dass die Krümmungskreise 244a, 244b, 244c der benachbarten Linienpunkte 242a, 242b, 242c zumindest näherungsweise gleiche Radien aufweisen, wenn die Linie 240 knickfrei ist. Ferner sei darauf hingewiesen, dass andere, unerwünschte Bildinhalte, z. B. Vegetation oder andere unregelmäßige oder gezackte Formen, eine Vielzahl von Kreisbögen oder Ellipsenbögen unterschiedlicher Krümmungen enthalten. Somit weisen bei Vorliegen von derartigen unregelmäßigen Strukturen benachbarte Extrempunkte typischerweise stark voneinander verschiedene Krümmungsradien auf, und werden daher durch den Schritt 230 entfernt. Somit entsteht ein Extremabild 232, in dem Informationen über unregelmäßig geformte Objekte, wie z. B. unregelmäßige Vegetations-Objekte, entfernt bzw. zumindest im Hinblick auf die Informationen 222 verringert sind. Somit stellt das Extremabild 232 eine gefilterte und um für eine Positionsbestimmung irrelevante Informationen bereinigte Darstellung dar.

Es sei allerdings darauf hingewiesen, dass der Schritt 230 als optional anzusehen ist. In anderen Worten, an die Stelle des Extremabildes 232 kann auch direkt die durch die Hough-Transformation 220 gelieferte Information 222 über Extrempunkte von Kreisbögen oder Ellipsenbögen in dem vorverarbeiteten Bild 212 treten.

Im Übrigen sei darauf hingewiesen, dass auch die Bildvorverarbeitung 210 optional entfallen kann, wenn beispielsweise die Hough-Transformation 220 ausgelegt ist, um direkt auf dem Bild bzw. Kamerabild 208 zu operieren.

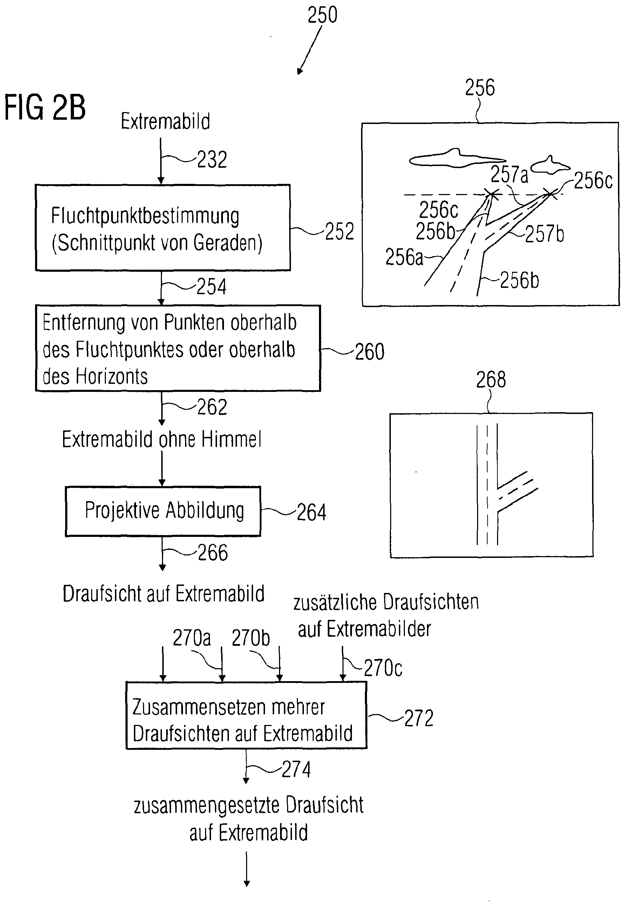

Im Folgenden wird anhand der Fig. 2b erläutert, wie aus dem Extremabild, also beispielsweise aus dem Extremabild 232 eine zusammengesetzte Draufsicht auf ein Extremabild erzeugt werden kann. Die Fig. 2b zeigt zu diesem Zweck ein Flussdiagramm eines erfindungsgemäßen Verfahrens zum Bestimmen einer zusammengesetzten Draufsicht auf ein Extremabild aus einem Extremabild.

Das Verfahren gemäß der Fig. 2b ist in seiner Gesamtheit mit 250 bezeichnet. Das Verfahren 250 umfasst einen ersten Schritt 252 einer Fluchtpunktbestimmung. Durch die Fluchtpunktbestimmung 252 werden beispielsweise aus dem Extremabild 232 ein oder mehrere Fluchtpunkte, also Schnittpunkte von Geraden, bestimmt. Entsprechend liefert die Fluchtpunktbestimmung 252 eine Information 254 über einen oder mehrere Fluchtpunkte. Bei der Fluchtpunktbestimmung 252 werden bevorzugt Geraden einer vorgegebenen minimalen Länge in dem Extremabild 232 bzw., alternativ, in dem vorverarbeiteten Bild 212 oder in dem Kamerabild 208 bestimmt. Dabei kann bevorzugt die durch die Hough-Transformation 220 gelieferte Information herangezogen werden.

Sind mindestens zwei gerade Strecken in dem Bild 208, in dem vorverarbeiteten Bild 212 bzw. in dem Extremabild 232 identifiziert, so kann ein Schnittpunkt der Geraden bestimmt werden. Der Schnittpunkt der Geraden ist typischerweise der Punkt, an dem sich parallele Strecken, die von der Kamera, mit der das Kamerabild aufgenommen wird, weg verlaufen, aufgrund einer projektiven Abbildung zu schneiden scheinen. Zur Veranschaulichung zeigt die Fig. 2b ein perspektivisches Bild 256 zweier sehr langer gerader Straßen. Eine linke Begrenzung 256a eine rechte Begrenzung 256b scheinen sich aufgrund einer projektiven Abbildung in einem ersten Fluchtpunkt 256c zu schneiden. Zwei Begrenzungen 257a, 257b einer zweiten langen geraden Straße, die in die erste Straße mündet, scheinen sich aufgrund der projektiven Abbildung in einem zweiten Fluchtpunkt 257c zu schneiden. Sind beispielsweise mit Hilfe einer Hough-Transformation die Strecken bzw. Geraden bestimmt, die die zumindest über ein gewisses Teilstück geraden Straßen begrenzen, so kann, beispielsweise mit Hilfe einer Berechnung eines Schnittpunkts der beiden Geraden, die Position des Fluchtpunkts 256c mit geringem Rechenaufwand berechnet werden. Somit können im Rahmen der Fluchtpunktbestimmung 252 ein oder mehrere Fluchtpunkte 256c, 257c ermittelt werden.

In einem weiteren Schritt 260 werden beispielsweise Punkte oberhalb des Fluchtpunkts oder Punkte oberhalb eines Horizonts entfernt, um ein Extremabild 262 ohne einen Himmel zu erhalten. Ist beispielsweise nur ein Fluchtpunkt 256c bekannt, so kann davon ausgegangen werden, dass der Horizont durch den einen Fluchtpunkt 256c verläuft und ferner typischerweise waagrecht durch das Bild verläuft, wenn davon ausgegangen wird, dass das Kamerabild 208 mit einer Kamera aufgenommen wird, die zumindest näherungsweise waagrecht angeordnet ist.

Somit können beispielsweise im Rahmen des Schritts 260 alle Punkte, die in dem Kamerabild 208 oberhalb des Fluchtpunkts 256c liegen, entfernt werden, da beispielsweise davon ausgegangen werden kann, dass es sich bei dem entsprechenden Bildanteil um Himmel handelt. Sind ferner zwei Fluchtpunkte, beispielsweise die Fluchtpunkte 256c und 257c, bekannt, so kann beispielsweise davon ausgegangen werden, dass der Horizont durch die Verbindungslinie zwischen den beiden Fluchtpunkten 256c, 257c definiert ist. Somit kann beispielsweise eine Horizontlinie definiert werden, die die Fluchtpunkte 256c, 257c verbindet. Ferner können in dem Bild 208, in dem vorverarbeiteten Bild 212 oder in dem Extremabild 232 Bildanteile entfernt werden, die oberhalb der Horizontlinie liegen. Somit entsteht das Extremabild ohne Himmel.

Es sei darauf hingewiesen, dass die entsprechende Verarbeitung unter Verwendung einer Fluchtpunktbestimmung 252 und einer Entfernung 260 von Punkten oberhalb des Fluchtpunkts oder des Horizonts als optional anzusehen ist. Verläuft nämlich beispielsweise eine Straße auf einen Berg bzw. ein Gebirge hin, so kann beispielsweise der Berg, der sich oberhalb der ermittelten Horizontlinie befindet, durchaus eine für die Positionsbestimmung wichtige Information darstellen.

Es kann allerdings beispielsweise auch eine selektive Filterung des Bildes derart erfolgen, dass beispielsweise oberhalb einer Horizontlinie eine weitere Ausfilterung von Extrempunkten erfolgt, bei der beispielsweise zu Wolkenstrukturen gehörige Extrempunkte durch geeignete Wahl einer Filterregel entfernt werden, während hingegen zu Bergen gehörige Extrempunkte beibehalten werden. In anderen Worten, es kann oberhalb der Horizontlinie eine zusätzliche Filterung des Extremabilds 232 erfolgen, wobei bestimmte Extremapunkte, die beispielsweise im Hinblick auf einen zugehörigen Krümmungsradius oder eine zugehörige Geraden-Richtung bestimmte Kriterien erfüllen oder nicht erfüllen, entfernt werden.

Ferner erfolgt basierend auf dem Extremabild 232 oder basierend auf dem Extremabild 262 ohne Himmel eine projektive Abbildung 264. Durch die projektive Abbildung 264 wird bevorzugt aus dem Extremabild 262 ohne Himmel (alternativ aber aus dem Extremabild 232) eine Draufsicht 266 auf das Extremabild erzeugt. Diesbezüglich sei darauf hingewiesen, dass aus dem Bereich der Optik projektive Abbildungen bekannt sind, mit Hilfe derer eine perspektivische Ansicht in eine Draufsicht zumindest näherungsweise umgerechnet werden kann. Ein Beispiel diesbezüglich ist in einer graphischen Darstellung 268 gezeigt. Die graphische Darstellung 268 zeigt eine Draufsicht auf die Straßenverläufe, die in der perspektivischen Darstellung der graphischen Darstellung 256 gezeigt sind.

Es sei hier im Übrigen darauf hingewiesen, dass die graphischen Darstellungen 256, 268 nicht Extremabilder zeigen, wie sie im Rahmen des erfindungsgemäßen Verfahrens typischerweise verarbeitet werden. Vielmehr zeigen die graphischen Darstellungen 256, 268 zur Veranschaulichung schematische Bilder. Es sei allerdings darauf hingewiesen, dass beispielsweise die geraden Strecken durch Mittelpunkte von Teilstrecken beschrieben werden. Gekrümmte Linien in dem Extremabild 232, dem Extremabild 262 ohne Himmel und in der Draufsicht 266 auf das Extremabild werden hingegen durch Extrempunkte von Bögen dargestellt.

Somit der Übergang zwischen den graphischen Darstellungen 256, 268 und der tatsächlichen Darstellung in Form von Extrempunkten von Bögen bzw. Mittelpunkten von geraden Strecken einfach nachvollziehbar.

Im Übrigen sei darauf hingewiesen, dass bei einem bevorzugten Ausführungsbeispiel eine Mehrzahl von Kamerabildern 208 zeitlich aufeinander folgend aufgenommen werden, wobei davon ausgegangen wird, dass die Kamera, die die Kamerabilder 208 aufnimmt, beispielsweise mit einem Fahrzeug mitbewegt wird. In anderen Worten, steht eine Mehrzahl von Kamerabildern 208 zur Verfügung, die nacheinander und daher auch von verschiedenen Orten aus aufgenommen werden (wenn davon ausgegangen wird, dass sich das Fahrzeug, an dem die Kamera befestigt ist bewegt). Somit steht bei einem bevorzugten Ausführungsbeispiel der vorliegenden Erfindung nicht nur eine einzige Draufsicht 266 auf ein Extremabild zur Verfügung, sondern es stehen vielmehr neben der genannten Draufsicht 266 auf das Extremabild weitere Draufsichten 270a, 270b, 270c auf Extremabilder zur Verfügung. Daher umfasst das Verfahren 250 bevorzugt ein Zusammensetzen 272 von mehreren Draufsichten auf Extremabilder, wodurch eine zusammengesetzte Draufsicht 274 auf ein Extremabild entsteht. Details im Hinblick auf das Zusammensetzen von mehreren Draufsichten auf Extremabilder werden im Folgenden noch näher erläutert.

Es sei allerdings darauf hingewiesen, dass der Schritt 272 des Zusammensetzens von mehreren Draufsichten auf Extremabilder zu einer zusammengesetzten Draufsicht 274 auf ein Extremabild als optional anzusehen ist. In anderen Worten, die Verarbeitung, die anhand einer zusammengesetzten Draufsicht 274 im Folgenden noch beschrieben wird, kann alternativ auch unter Verwendung der Draufsicht 266 auf ein einzelnes Extremabild erfolgen.

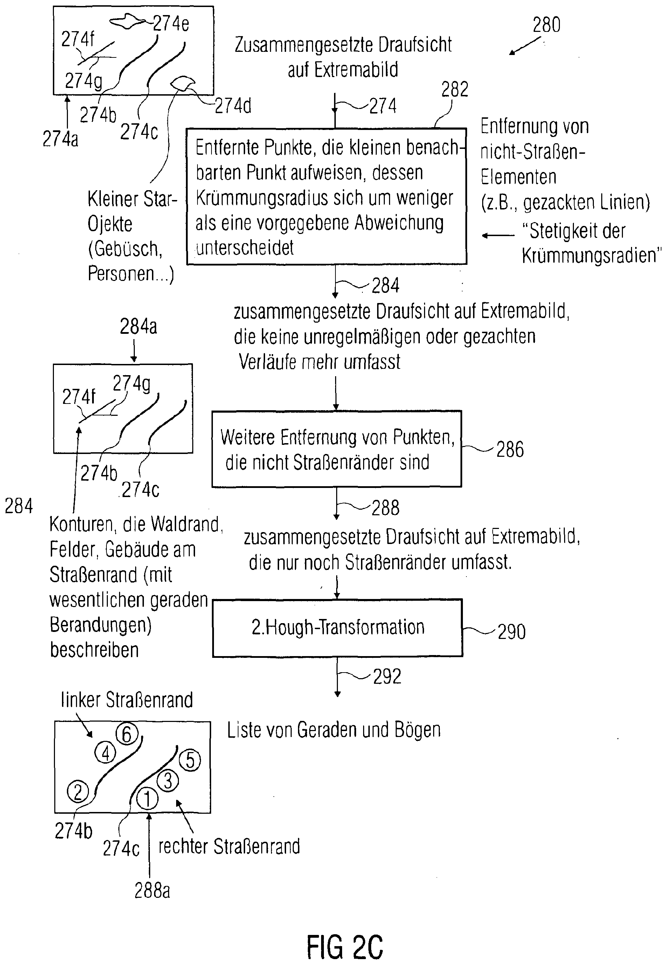

Im Folgenden wird anhand der Fig. 2c beschrieben, wie aus einer zusammengesetzten Draufsicht auf ein Extremabild eine Liste von Geraden und Bögen erzeugt werden kann. Zu diesem Zweck zeigt die Fig. 2c ein Flussdiagramm eines erfindungsgemäßen Verfahrens zum Erzeugen einer Liste von Geraden und Bögen aus einer zusammengesetzten Draufsicht auf eine Extremabild. Das Verfahren gemäß der Fig. 2c ist in seiner Gesamtheit mit 280 bezeichnet.

Das Verfahren 280 umfasst einen Schritt 282 eines Entfernens von Nicht-Straßen-Elementen aus der zusammengesetzten Draufsicht 274 auf ein Extremabild. Der Schritt 282 des Entfernens von Nicht-Straßen-Elementen umfasst bevorzugt ein Entfernen von Extrempunkten, die keinen benachbarten Extrempunkt aufweisen, dessen Krümmungsradius sich um weniger als eine vorgegebene Abweichung unterscheidet. In anderen Worten, es wird die Tatsache ausgenutzt, dass Straßenelemente, wie beispielsweise Straßenbegrenzungsmarkierungen, typischerweise knickfreie Linien sind, so dass sich die Krümmungsradien von Näherungskreisen bzw. Näherungsellipsen stetig (bzw. in kleinen Schritten) ändern. In anderen Worten, eine Stetigkeit von Krümmungsradien bei Straßen-Elementen wird ausgenutzt. Es sei hier darauf hingewiesen, dass beispielsweise eine gerade Strecken einen Krümmungsradius von unendlich aufweist. Eine nicht zu scharfe Krümmung weist im Übrigen einen vergleichsweise großen Krümmungsradius auf. Geht beispielsweise ein gerader Streckenverlauf in eine leichte Kurve über, so ändert sich der Krümmungsradius von unendlich (gerade Strecke) zu dem Krümmungsradius der Kurve von beispielsweise 500 Metern. Dabei wird im Übrigen davon ausgegangen, dass der Krümmungsradius "unendlich" sich ausreichend wenig von einem genügend groß gewählten Krümmungsradius (beispielsweise von dem Krümmungsradius von 500 Metern) unterscheidet. Somit werden in dem Schritt 282 Nicht-Straßen-Elemente, z. B. gezackte Linien, die eine Vegetation oder andere Stör-Objekte beschreiben, aus der zusammengesetzten Draufsicht 274 auf ein Extremabild entfernt. Somit entsteht eine zusammengesetzte Draufsicht 284 auf ein Extremabild, die keine unregelmäßigen oder gezackten Verläufe mehr umfasst. In anderen Worten, durch den Schritt 282 entsteht aus der zusammengesetzten Draufsicht 274 auf ein Extremabild eine bereinigte zusammengesetzte Draufsicht 284.

Diesbezüglich sei im Übrigen darauf hingewiesen, dass der Schritt 282 des Entfernens von Nicht-Straßen-Elementen als optional angesehen werden kann.

Das Verfahren 280 umfasst ferner in einem Schritt 286 eine weitere Entfernung von Punkten, die nicht Straßenränder sind, aus der bereinigten zusammengesetzten Draufsicht 284. Extrempunkte, die keine Straßenränder beschreiben, können beispielsweise dadurch identifiziert werden, dass ein Linienverlauf, der durch die entsprechenden Punkte gebildet wird, nicht einen zusammenhängenden Linienverlauf von einem Anfangspunkt, an dem ein erstes Kamerabild aufgenommen wird, zu einem Endpunkt, an dem ein darauf folgendes Kamerabild aufgenommen wird, bildet.

Es kann nämlich davon ausgegangen werden, dass das Fahrzeug, an dem die Kamera angebracht ist, sich entlang des Straßenverlaufs bewegt, und dass somit die Begrenzung des Straßenverlaufs durch eine Linie gegeben ist, entlang derer sich das Fahrzeug bewegt. Sind der Anfangspunkt des Fahrzeugs zu einem ersten Zeitpunkt und der Endpunkt des Fahrzeugs zu einem zweiten Zeitpunkt beispielsweise relativ zu der zusammengesetzten Draufsicht 274 auf ein Extremabild bekannt, so ist damit zumindest näherungsweise ein Anfangspunkt und ein Endpunkt eines Linienverlaufs, der die Fahrbahnbegrenzung bildet, bekannt. Somit kann festgestellt werden, dass Linienverläufe, die nicht von dem Anfangspunkt bis zu dem Endpunkt verlaufen, nicht den zurückgelegten Straßenverlauf beschreiben.

Somit entsteht durch die Entfernung von Extrempunkten, die nicht Straßenränder beschreiben (bzw. von Linien, die nicht Straßenrändern zugeordnet sind) in dem Schritt 286 eine weitere bereinigte zusammengesetzte Draufsicht 288 auf ein Extremabild. Die weitere bereinigte zusammengesetzt Draufsicht 288 beschreibt bevorzugt, aber nicht notwendigerweise, nur noch Straßenverläufe. In anderen Worten, die zusammengesetzte Draufsicht 288 umfasst bevorzugt Extrempunkte von Bögen bzw. Extrempunkte von geraden Strecken, die Straßenverläufen zugeordnet sind.

Das Verfahren 280 umfasst ferner in einem Schritt 290 eine Durchführung einer zweiten Hough-Transformation. Die zweite Hough-Transformation 290 wird bevorzugt auf die bereinigte zusammengesetzte Draufsicht 288 angewendet. Diesbezüglich sei darauf hingewiesen, dass durch die vorher beschriebene Verarbeitung unter Verwendung der Schritte 210, 220, 230, 252, 260, 262, 272, 282, 286 eine zusammengesetzte Draufsicht auf ein Extremabild erzeugt wurde, in der Straßenränder bevorzugt durch Verläufe von benachbarten Extrempunkten von Kreisbögen oder Ellipsenbögen bzw. von Mittelpunkten von geraden Strecken dargestellt sind. In anderen Worten, die Begrenzung des Straßenverlaufs ist in der Darstellung 288 bevorzugt durch eine Mehrzahl von identifizierten Extrema beschrieben.

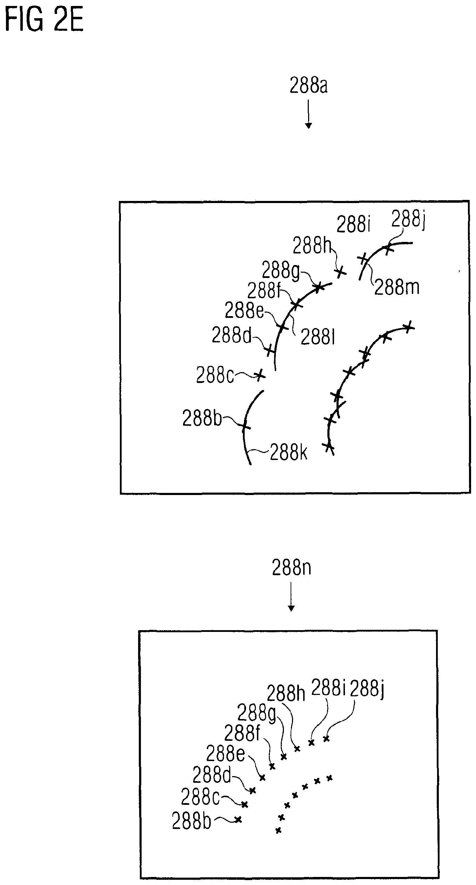

Zur Veranschaulichung zeigt die Fig. 2e eine Draufsicht auf ein Extremabild 288. Eine erste graphische Darstellung 288a zeigt die zusammengesetzte Draufsicht 288 zusammen mit darin eingezeichneten Kreisbögen bzw. Ellipsenbögen. Die graphische Darstellung 288a zeigt eine Mehrzahl von Extrempunkten 288b bis 288j. Für die Extrempunkte 288b, 288f und 288j sind zugehörige Kreisbögen bzw. Ellipsenbögen 288k, 288l, 288m gezeigt. Eine weitere graphische Darstellung 288n zeigt lediglich die Extrempunkte 288b bis 288j, die im Wesentlichen die zusammengesetzte Draufsicht 288 bilden.

Es sei allerdings darauf hingewiesen, dass es sich bei der zusammengesetzten Draufsicht 288 alternativ auch um das Kamerabild 208 oder um das vorverarbeitete Kamerabild 212 handeln kann. In anderen Worten, als Eingangsdaten der zweiten Hough-Transformation 290 können auch das Bild 208 oder das vorverarbeitete Bild 212 dienen. Es kann allerdings auf das Bild 208 bzw. auf das vorverarbeitete Bild 212 auch eine projektive Abbildung 264 angewendet werden, und es können ferner mehrere Teilbilder zusammengesetzt werden, um die durch die zweite Hough-Transformation 290 verwendeten Eingangsdaten zu erhalten.

Zusammenfassend lässt sich somit festhalten, dass bei einem Ausführungsbeispiel auch ausschließlich die zweite Hough-Transformation 290 zur Anwendung kommen kann, während hingegen beispielsweise die erste Hough-Transformation 220 entfällt. In diesem Fall empfängt die zweite Hough-Transformation 290 als ein Eingangsbild somit beispielsweise das Bild 208, das vorverarbeitete Bild 212, oder eine weiterverarbeitete Version des Bildes 208 oder des vorverarbeiteten Bildes 212. Die weiterverarbeitete Version des Bildes 208 bzw. des vorverarbeiteten Bildes 212 kann beispielsweise unter Anwendung einiger oder aller der Schritte 252, 260, 264, 272 aus dem Bild 208 oder dem vorverarbeiteten Bild 212 gewonnen worden sein.

Im Rahmen der zweiten Hough-Transformation 290 wird im Übrigen aus dem Eingangsbild der zweiten Hough-Transformation 290 eine Liste 292 von Geraden und Bögen in dem Eingangsbild der zweiten Hough-Transformation 290 erzeugt. In anderen Worten, die zweite Hough-Transformation 290 erzeugt basierend auf dem wie oben beschriebenen Eingangsbild der zweiten Hough-Transformation eine Information über Bögen (z. B. Kreisbögen bzw. Kreisbogensegmente und/oder Ellipsenbögen bzw. Ellipsenbogensegmente) sowie über gerade Strecken in dem Bild.

Basierend auf der Liste 292 von Bögen und geraden Strecken wird anschließend in einem Schritt 294 eine Positionsbeschreibung 296 erstellt. Bei der Erstellung 294 einer Positionsbeschreibung wird beispielsweise die Liste 292 von Geraden und Bögen gemäß einem vorgegebenen Reihenfolge-Kriterium sortiert. Ferner wird alternativ oder zusätzlich die Liste 292 von geraden Strecken und Bögen bei der Erstellung 294 einer Positionsbeschreibung gemäß einem Filterkriterium gefiltert, um einzelne gerade Strecken oder Bögen aus der Liste 292 von Geraden oder Bögen zu entfernen, so dass die Positionsbeschreibung 296 insgesamt weniger gerade Strecken oder Bögen umfasst als die Liste 292 von geraden Strecken und Bögen.

Ferner kann das Erstellen 294 einer Positionsbeschreibung ein Bereitstellen von mehreren Permutationen (im Hinblick auf die Reihenfolge) der Liste 292 von geraden Strecken und Bögen umfassen, um als die Positionsbeschreibung 296 mehrere permutierte Sätze von Beschreibungen von geraden Strecken und Bögen zu erhalten.

Ferner kann das Erstellen 294 einer Positionsbeschreibung alternativ oder zusätzlich ein Auswählen von mehreren echten Teilmengen von geraden Strecken und Bögen aus der Liste 292 von geraden Strecken und Bögen umfassen, so dass beispielsweise die Positionsbeschreibung 296 mehrere ausgewählte echte Teilmengen der Liste 292 von geraden Strecken und Bögen enthalten, wobei sich die einzelnen Teilmengen voneinander unterscheiden.

Das Verfahren gemäß den Fig. 2a bis 2d umfasst ferner eine Durchführung 298 eines Datenbankvergleichs. Bei dem Datenbankvergleich 298 wird die Positionsbeschreibung 296 mit einer Mehrzahl von Vergleichs-Positionsbeschreibungen, die in einer Datenbank gespeichert sind, verglichen, und es wird ein Maß für eine Ähnlichkeit zwischen der Positionsbeschreibung 296 und der Mehrzahl von Vergleichs-Positionsbeschreibungen bestimmt. Ferner wird eine der Vergleichs-Positionsbeschreibungen ermittelt, so dass beispielsweise ein Unterschied zwischen der Positionsbeschreibung 296 und der ermittelten Vergleichs-Positionsbeschreibung minimal ist. Alternativ dazu kann es aber auch als ausreichend angesehen werden, wenn ein Unterschied zwischen der Positionsbeschreibung 296 und einer Vergleichs-Positionsbeschreibung ausreichend klein, also beispielsweise kleiner als eine vorgegebene maximal zulässige Abweichung, ist. Ist somit eine Vergleichs-Positionsbeschreibung ermittelt, die mit der Positionsbeschreibung 296 ausreichend gut übereinstimmt (so dass beispielsweise ein Unterschied minimiert ist, oder so dass ein Unterschied kleiner als ein vorgegebener maximal zulässiger Unterschied ist), so wird die zu der Vergleichs-Positionsbeschreibung gehörige Positionsinformation als ein Ergebnis 299 geliefert. Das Ergebnis 299 trägt somit eine Information darüber, von welcher Position aus das Bild 208 aufgenommen wurde.

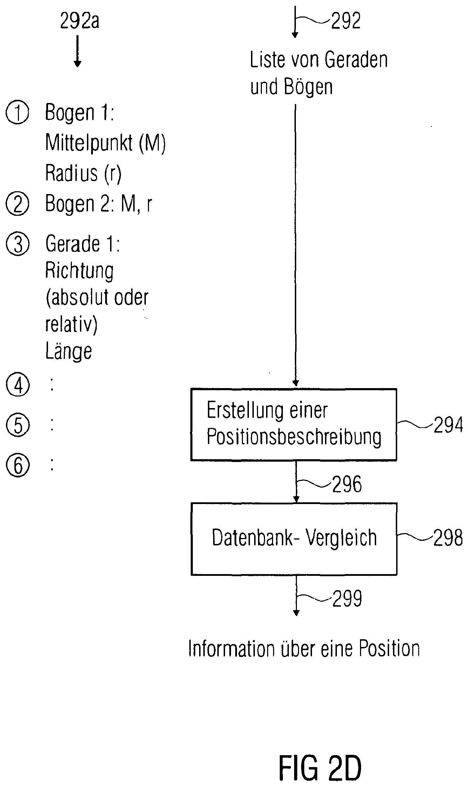

Im Folgenden wird kurz auf die in den Fig. 2c und 2d gezeigten schematischen Bilder eingegangen. So zeigt die Fig. 2c eine graphische Darstellung 274a, die beispielsweise eine zusammengesetzte Draufsicht 274 auf ein Extremabild beschreibt. Die graphische Darstellung 274a zeigt beispielsweise eine linke Begrenzung 274b eines Straßenverlaufs sowie ein rechte Begrenzung 274c eines Straßenverlaufs. Ferner zeigt die graphische Darstellung 274a zwei kleinere Stör-Objekte 274d, 274e, die beispielsweise Vegetation (z. B. Gebüsch) oder Personen beschreiben. Ferner zeigt die graphische Darstellung 274a zusätzliche lang gestreckte oder leicht gekrümmte Verläufe 274f, 274g, die beispielsweise Begrenzungen von Gebäuden oder von Feldern darstellen. In dem Schritt 282, in dem aufgrund von Anforderungen an die Stetigkeit von Krümmungsradien unregelmäßig berandete Elemente entfernt werden, werden beispielsweise aus dem Bild gemäß der graphischen Darstellung 274a die kleineren Störobjekte 274d, 274e entfernt, da diese typischerweise unregelmäßig geformt und ferner vergleichsweise (im Vergleich zu einer Ausdehnung des Straßenverlaufs) klein sind.

Somit entsteht die zusammengesetzte Draufsicht 284 auf das Extremabild, die keine unregelmäßigen oder gezackten Verläufe mehr umfasst. Die zusammengesetzte Draufsicht 284 ist in einer graphischen Darstellung 284a gezeigt.

Im Rahmen des Schritts 286 werden, wie schon erwähnt, Punkte bzw. Linien entfernt, die nicht Straßenränder sind. Somit entsteht die zusammengesetzte Draufsicht 288 auf das Extremabild, die nur noch (oder zumindest im Wesentlichen) Straßenverläufe umfasst. Eine schematische Darstellung der zusammengesetzten Draufsicht 288 ist in einer graphischen Darstellung 288a gezeigt. Die graphische Darstellung 288a zeigt beispielsweise lediglich eine linke Streckenbegrenzung 274b und eine rechte Streckenbegrenzung 274c. Die linke Streckenbegrenzung 274d wird beispielsweise in dem Eingangsbild der zweiten Hough-Transformation 290 durch eine Linie beschrieben, die beispielsweise einen Bogen nach rechts (gekennzeichnet durch eine eingekreiste "2"), eine gerade Strecke (gekennzeichnet durch eine eingekreiste "4") und einen Bogen nach links (gekennzeichnet durch eine eingekreiste "6") umfasst. Die rechte Streckenbegrenzung 274c umfasst einen ersten Bogen nach rechts (gekennzeichnet durch eine eingekreiste "1"), eine erste gerade Strecke (gekennzeichnet durch eine eingekreiste "3") und einen ersten Bogen nach links (gekennzeichnet durch eine eingekreiste "5"). Es ist allerdings im Übrigen ausreichend, wenn das Eingangsbild 288 der zweiten Hough-Transformation 290 eine einzige Streckenbegrenzung, also entweder die linke Streckenbegrenzung 274b oder die rechte Streckenbegrenzung 274c beschreibt.

Im Rahmen der zweiten Hough-Transformation 290 werden dann basierend auf dem Eingangsbild 288 der zweiten Hough-Transformation die Bögen und geraden Strecken in dem Eingangsbild der Hough-Transformation durch zugehörige Parameter beschrieben. In anderen Worten, es entsteht eine parametrisierte Liste 292 von Geraden und Bögen, wie sie beispielsweise in der graphischen Darstellung 292a gemäß Fig. 2d gezeigt ist. Die Liste 292 von Geraden und Bögen beschreibt somit beispielsweise die Bögen "1", "2", "5" und "6" durch zugehörige Parameter, wie beispielsweise eine Lage eines Bogen-Mittelpunktes oder eines Bogen-Extrempunktes und/oder einen Krümmungsradius. Die Liste 292 beschreibt ferner beispielsweise die geraden Strecken "3" und "4" gemäß der graphischen Darstellung 288a durch Parameter, wie beispielsweise eine absolute oder relative Richtung und/oder eine Länge und/oder eine Lage. Beispielsweise kann die Richtung absolut (z. B. unter Heranziehung einer Richtungsinformation von einem Kompass) oder relativ zu einer Blickrichtung der Kamera beschrieben werden. Ferner kann die Richtung beispielsweise relativ zu weiteren geraden Strecken in dem Bild beschrieben werden. Die Lage der geraden Strecken, kann beispielsweise durch Koordinaten eines Anfangspunktes, eines Mittelpunktes oder eines Endpunktes beschrieben sein. Soweit erforderlich kann ferner zusätzlich eine Information über eine Länge der geraden Strecke in der Liste 292 enthalten sein. Es sei darauf hingewiesen, dass die genannten Informationen über die Parameter der Bögen oder geraden Strecken bevorzugt durch die zweite Hough-Transformation 290 geliefert werden. Diesbezüglich sei darauf hingewiesen, dass eine Hough-Transformation typischerweise geeignet ist, Linienverläufe mit verschiedenen Parametern (z. B. Bögen mit verschiedenen Krümmungsradien oder gerade Strecken mit verschiedenen Richtungen) zu unterscheiden und ferner eine Information über die Parameter von verschiedenen in einem Bild enthaltenen Linienverläufen zu liefern.

Die Positionsbeschreibung 296 umfasst bevorzugt gleiche Parameter wie die Liste 292 von Geraden und Bögen, wobei Auswahl und/oder Anordnung der Elemente (Bögen und geraden Strecken) in der Positionsbeschreibung 296 gegenüber der Liste 292 typischerweise, aber nicht notwendigerweise, verändert ist.

Ferner sei darauf hingewiesen, dass die für den Datenbank-vergleich 298 herangezogenen Vergleichs-Positionsbeschreibungen bevorzugt die gleichen Typen von Parametern umfassen wie die Positionsbeschreibung 296, so dass ein Vergleich möglich ist.

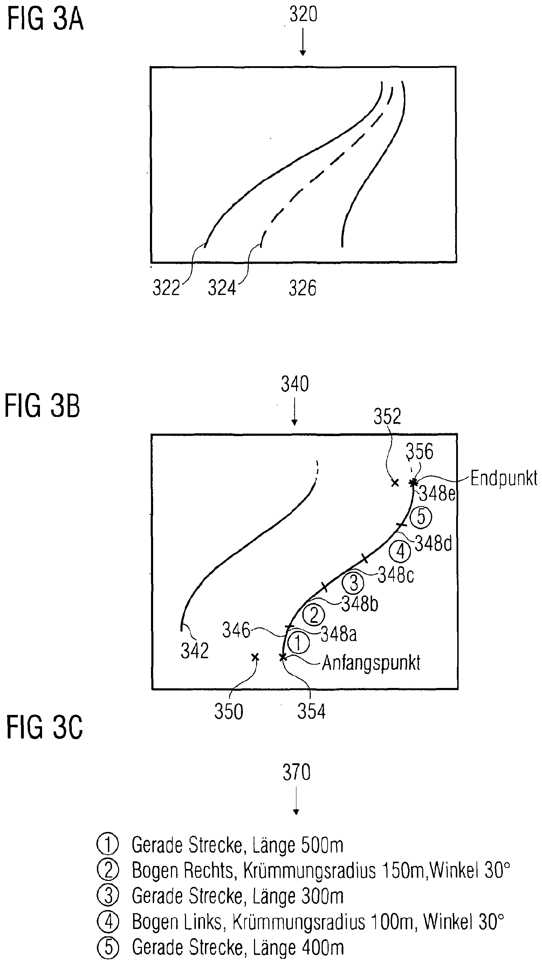

Im Folgenden wird anhand der Fig. 3a, 3b und 3c ein weiteres Ausführungsbeispiel der erfindungsgemäßen Positionsbestimmung beschrieben.

Die Fig. 3a zeigt dabei ein perspektivisches Bild eines Streckenverlaufs. Die graphische Darstellung gemäß der Fig. 3a ist in ihrer Gesamtheit mit 320 bezeichnet. Die perspektivische Darstellung 320 zeigt eine linke Fahrbahnbegrenzung 322 einer Straße, einen Mittelstreifen 324 der Straße sowie eine rechte Fahrbahnbegrenzung 326 der Straße.

Fig. 3b zeigt eine Draufsicht auf den in der graphischen Darstellung 320 der Fig. 3a gezeigten Streckenverlauf. Die graphische Darstellung der Fig. 3b ist in ihrer Gesamtheit mit 340 bezeichnet. Es sei darauf hingewiesen, dass die Draufsicht 340 gemäß der Fig. 3b beispielsweise aus der perspektivischen Ansicht 320 gemäß der Fig. 3a durch eine projektive Abbildung hervorgeht, wie diese beispielsweise anhand der Fig. 2b, Schritt 264 beschrieben wurde.

Die graphische Darstellung 340 zeigt eine Draufsicht auf einen Streckenverlauf, wobei die linke Streckenbegrenzung mit 342 bezeichnet ist, und wobei die rechte Streckenbegrenzung mit 346 bezeichnet ist. Es sei darauf hingewiesen, dass die rechte Streckenbegrenzung 346 beispielsweise aus einer Mehrzahl von geraden Strecken und Bögen besteht, die hier mit 348a, 348b, 348c, 348d und 348e bezeichnet sind. Die einzelnen Elemente sind im Übrigen auch mit eingekreisten Ziffern "1" bis "5" gekennzeichnet, um einen Bezug zu der Fig. 3c herzustellen.

Ferner ist im Übrigen beispielsweise eine Anfangsposition 350 eines Fahrzeugs sowie eine Endposition 352 des Fahrzeugs, von dem aus der Streckenverlauf durch eine Kamera aufgenommen wird, bekannt. Aufgrund der bekannten Anfangsposition 350 kann beispielsweise darauf geschlossen werden, dass es sich bei einem ersten Punkt der geraden Strecke 348a um einen Anfangspunkt 354 einer Streckenbegrenzung handelt. Ferner kann aus der Endposition 352 darauf geschlossen werden, dass es sich bei eine zweiten Punkt der geraden Strecke 348e um einen Endpunkt 356 einer Streckenbegrenzung bzw. eines Streckenverlaufs handelt. Somit kann insgesamt auch festgestellt werden, dass beispielsweise die geraden Strecken und Bögen 348a bis 348e einen zusammenhängenden Linienverlauf zwischen dem Anfangspunkt 354 und dem Endpunkt 356 bilden.

Bei einer Durchführung einer Hough-Transformation werden beispielsweise die geraden Strecken und Bögen 348a bis 348e der rechten Streckenbegrenzung 346 identifiziert. Durch die Hough-Transformationen können allerdings beispielsweise auch gerade Strecken oder Bögen der linken Streckenbegrenzung 342 sowie gegebenenfalls andere gerade Strecken oder Bögen identifiziert werden. Somit umfasst eine durch die Hough-Transformation (beispielsweise die Hough-Transformation 290) gelieferte Liste 292 von Geraden und Bögen beispielsweise eine Information über die geraden Strecken und Bögen 348a bis 348e sowie gegebenenfalls Informationen über zusätzliche gerade Strecken und/oder Bögen.

Eine entsprechende Beschreibung 370 der geraden Strecken und Bögen 348a bis 348e ist beispielsweise in der Fig. 3c gezeigt. Alle identifizierten Elemente (alle geraden Strecken und Bögen) sind dabei beispielsweise durch einen Streckentyp-Identifizierer gekennzeichnet, der angibt, ob es sich bei dem identifizierten Element um eine gerade Strecke, um einen nach rechts gekrümmten Bogen ("Bogen rechts") oder um einen nach links gekrümmten Bogen ("Bogen links") handelt. Für gerade Strecken umfasst die Liste gemäß der Fig. 3c ferner die Länge, beispielsweise in Metern. Für Bögen umfasst die Liste gemäß der Fig. 3c hingegen beispielsweise einen Krümmungsradius und einen Winkel. Der Winkel beschreibt beispielsweise einen Unterschied zwischen einer Richtung (bzw. Tangentenrichtung) an dem Anfang des Bogens und einer Richtung (bzw. Tangentenrichtung) an dem Ende des Bogens. Die Liste gemäß der Fig. 3c kann im Übrigen weitere Einträge (beispielsweise Informationen über gerade Strecken oder Bögen der linken Streckenbegrenzung 342) enthalten. Im Übrigen kann die durch den Hough-Transformator 290 gelieferte Liste auch anders angeordnet sein. In anderen Worten, die Hough-Transformation 290 liefert nicht notwendigerweise eine Liste, die gemäß der geometrischen Anordnung der identifizierten Elemente (gerade Strecken und Bögen) geordnet ist.

Eine entsprechende Anordnung bzw. eine geordnete Positionsbeschreibung 296 kann aber beispielsweise im Rahmen der Erstellung 294 einer Positionsbeschreibung erstellt werden. In anderen Worten, die Positionsbeschreibung 296 beschreibt bevorzugt in geordneter Weise einen durchgehenden Streckenverlauf von einem Anfangspunkt 354 zu einem Endpunkt 356.

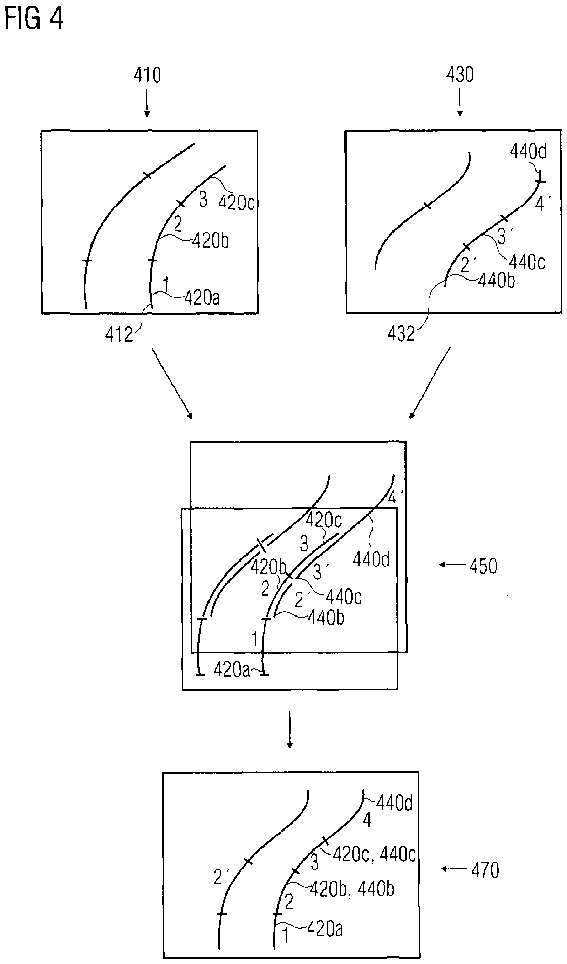

Im Folgenden wird anhand der Fig. 4 beschrieben, wie zwei Einzelbilder, die durch eine Kamera bei verschiedenen Positionen des Fahrzeugs, an dem die Kamera befestigt ist, aufgenommen wurden, zusammengesetzt werden. Eine erste graphische Darstellung 410 zeigt ein erstes Teilbild. Elemente (gerade Strecken und Bögen) einer rechten Streckenbegrenzung 412 sind mit 420a, 420b und 420c bezeichnet. Eine zweite graphische Darstellung 430 zeigt ein zweites Teilbild, das von einer zweiten Kameraposition aufgenommen wurde. Beispielsweise hat sich das Fahrzeug, an dem die Kamera befestigt ist, zu einem Zeitpunkt, an dem das zweite Teilbild 430 aufgenommen wurde, gegenüber einen Zeitpunkt, an dem das erste Teilbild 410 aufgenommen wurde, entlang des Streckenverlaufs weiter bewegt. Die graphische Darstellung 430 zeigt Elemente (gerade Strecken und Kreisbögen) einer rechten Streckenbegrenzung 432. Die geraden Strecken und Kreisbögen sind dabei mit 440b, 440c und 440d bezeichnet. Diesbezüglich sei darauf hingewiesen, dass der Bogen 440b dem Bogen 420b entspricht, und dass ferner die gerade Strecke 440c der geraden Strecke 420c entspricht.

Aus dem ersten Teilbild 410 und zweiten Teilbild 430 wird, beispielsweise in dem Schritt 272, ein zusammengesetztes Bild erzeugt. Es sei darauf hingewiesen, dass es sich bei den Teilbildern gemäß den graphischen Darstellungen 410, 430 beispielsweise um Draufsichten 266 auf Extremabilder handeln kann, so dass durch das Zusammensetzen eine zusammengesetzte Draufsicht 274 auf ein Extremabild entsteht. Allerdings kann es sich bei den Teilbildern gemäß den graphischen Darstellungen 410, 430 auch um andere Arten von Bildern handeln. Beispielsweise kann es sich bei den Teilbildern 410, 420 um Draufsichten auf den Streckenverlauf handeln, ohne dass die Linienverläufe in den Teilbildern Extrempunkte von Bögen und Mittelpunkte von Strecken bilden.

Ein Zusammensetzen der beiden Teilbilder 410, 430 erfolgt beispielsweise, indem Teilbilder zueinander verschoben und/oder zueinander gedreht und dann in einem Überlappungsbereich verglichen werden. Ist ein Unterschied zwischen zwei zueinander verschobenen bzw. gedrehten Teilbildern in einem Überlappungsbereich ausreichend klein, so kann beispielsweise davon ausgegangen werden, dass die Verschiebung und/oder Drehung der beiden Teilbilder gegeneinander richtig bzw. geeignet gewählt wurde.

Es sei darauf hingewiesen, dass bei einem bevorzugten Ausführungsbeispiel eine schrittweise Verschiebung und/oder Drehung der beiden Teilbilder 410, 430 zueinander erfolgt, bis die Abweichung der Teilbilder in einem Überlappungsbereich ausreichend klein ist. Als ein Startwert für die Verschiebung und/oder Drehung kann dabei beispielsweise ein zuvor ermittelter Mittelwert von Verschiebungen und/oder Drehungen verwendet werden. Wird beispielsweise eine Folge von Bildern aus einem Fahrzeug heraus aufgenommen, so ist eine Wahrscheinlichkeit dafür, dass das Fahrzeug sich mit näherungsweise konstanter Geschwindigkeit fortbewegt, vergleichsweise hoch. Somit ist eine Verschiebung, um die je zwei aufeinander folgende Teilbilder gegeneinander verschoben sind, typischerweise zeitlich näherungsweise konstant. Wird im Übrigen davon ausgegangen, dass ein Fahrzeug beispielsweise eine langgestreckte Kurve entlang fährt, so kann davon ausgegangen werden, dass ein Winkel, um den sich das Fahrzeug zwischen der Aufnahme zweier Teilbilder dreht, zeitlich näherungsweise konstant ist. Somit ist ein Mittelwert über eine örtliche Verschiebung und/oder Drehung zwischen vorangegangenen Teilbildern eine aussagefähige Größe, die als ein Schätzwert bzw. Anfangswert für die Verschiebung zwischen einem gegenwärtig betrachteten Teilbild und einem darauf folgenden Teilbild verwendet werden kann.

Eine graphische Darstellung 450 zeigt somit eine Überlappung bzw. Überlagerung der anhand der graphischen Darstellungen 410, 430 gezeigten Teilbilder. Es ist ersichtlich, dass sich eine gute Übereinstimmung zwischen dem ersten Teilbild gemäß der graphischen Darstellung 410 und dem zweiten Teilbild gemäß der zweiten graphischen Darstellung 430 ergibt, wenn die beiden Teilbilder wie gezeigt gegeneinander verschoben sind. Somit kann ein zusammengesetztes Bild gebildet werden, das aus einer graphischen Darstellung 470 ersichtlich ist. Das Gesamtbild 470 entsteht beispielsweise durch Zusammenfügen bzw. Überlagern der beiden Teilbilder gemäß den graphischen Darstellungen 410, 430. Es ist dabei ersichtlich, das das Gesamtbild 470 beispielsweise einen längeren Ausschnitt des Streckenverlaufs zeigt als die Teilbilder 410, 430, so dass die Information des zusammengesetzten Bildes 470 aussagekräftiger ist als die Information der Einzelbilder bzw. Teilbilder 410, 430.

Im Folgenden werden noch Beispiele für Bilder von Streckenverläufen beschrieben.

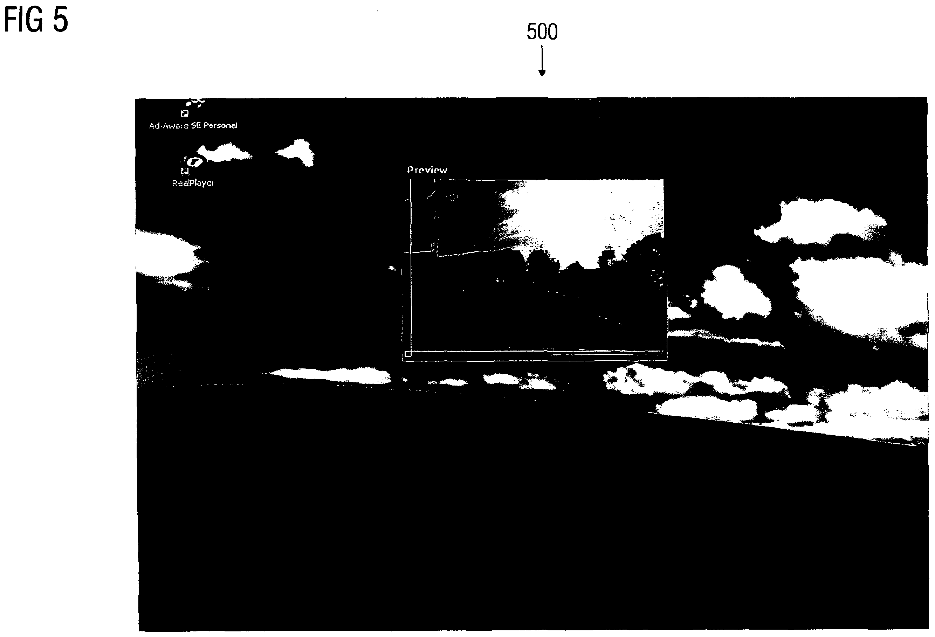

So zeigt die Fig. 5 eine Außenaufnahme im Hinblick auf eine Videonavigation. Die graphische Darstellung der Fig. 5 ist in ihrer Gesamtheit mit 500 bezeichnet. In dem Bild der graphischen Darstellung 500 gemäß Fig. 5 ist eine Silhouette einer Szene von einem Himmel getrennt. Jeder rote Punkt entspricht einem bestimmten Extremum mit einem (zugehörigen) Krümmungsradius. Als Krümmungsradius wurden beispielsweise zehn Bildpunkte bzw. Pixel gewählt. Ein Algorithmus erkennt daher Bögen bzw. Bogensegmente mit einem Krümmungsradius zwischen einem minimalen Krümmungsradius von beispielsweise zehn Bildpunkten und einem Krümmungsradius von unendlich. Das Bild gemäß der graphischen Darstellung 500 zeigt dabei drei Funktionsprinzipien des erfindungsgemäßen Konzepts:

- "bekomme die Speisung zurück auf den Grund" ("get the feed back on the ground")- Boden/Himmel-Separation;

- Bäume als Punktwolken, da sie viele Blätter haben;

- Fluchtpunktbestimmung durch die separierten Fahrbahnränder.

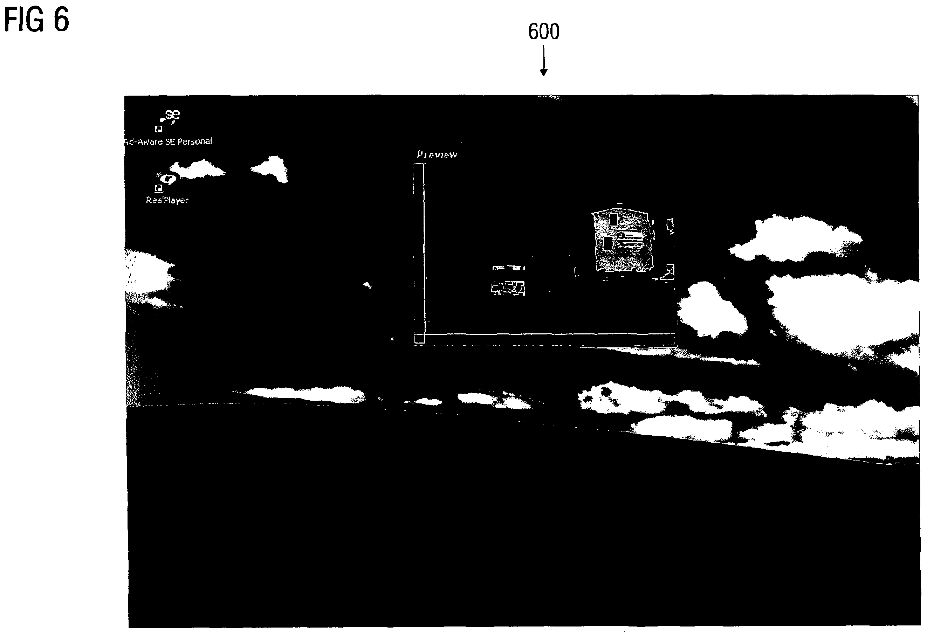

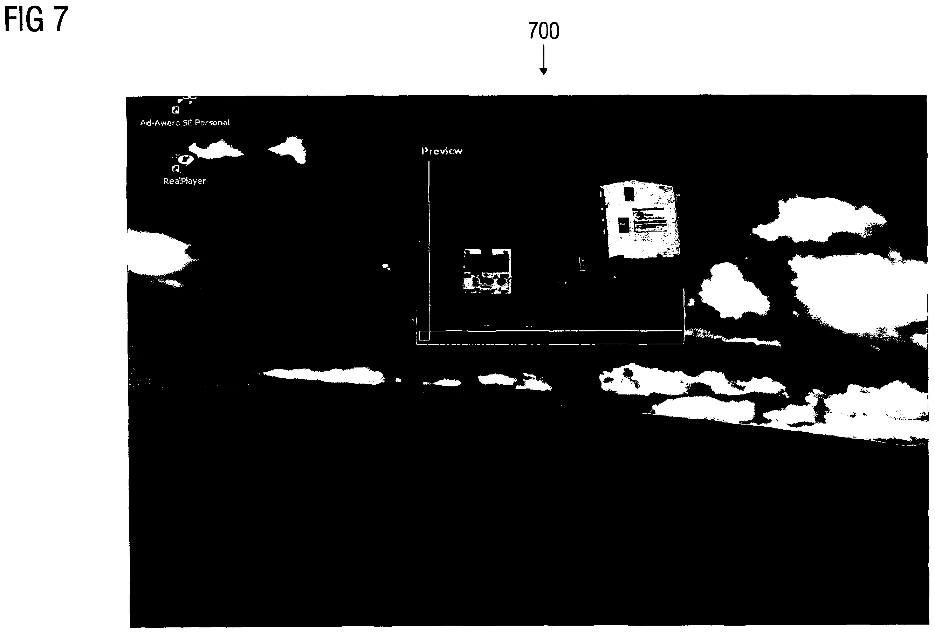

Fig. 6 und 7 zeigen zwei Bilder, die die Bewegung eines Busses beschreiben. Fig. 6 zeigt die Bewegung des Busses aufgenommen in einem erste Bild-Rahmen (Frame), z. B. in einem Bildrahmen 61. Fig. 7 zeigt die Bewegung des Busses aufgenommen in einem zweiten Bild-Rahmen, z. B. in einem Bild-Rahmen 70.

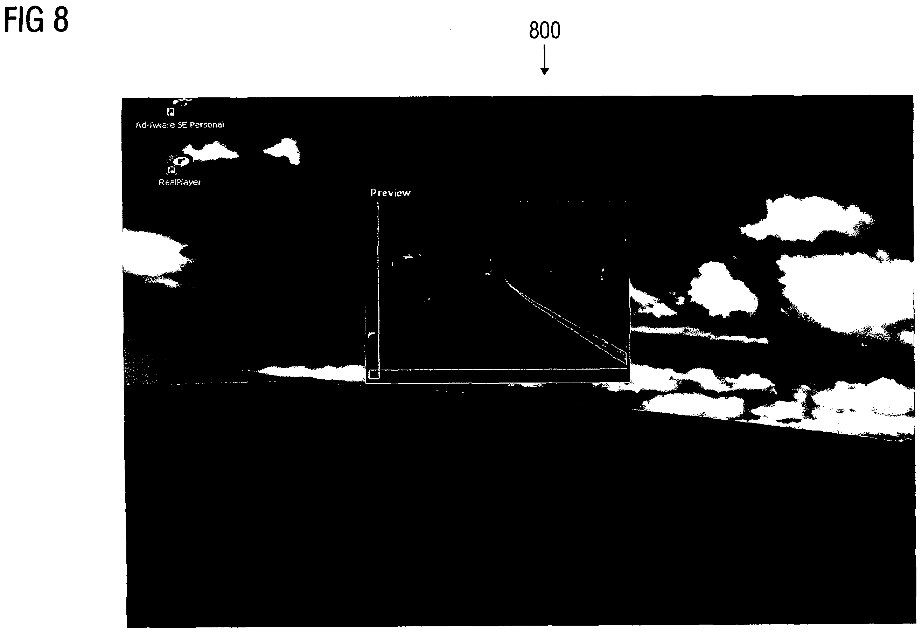

Fig. 8 zeigt eine graphische Darstellung einer Streckenverlaufsaufzeichnung. Das Bild gemäß der Fig. 8 ist in seiner Gesamtheit mit 800 bezeichnet. Eine Streckenverlaufsaufzeichnung ist hierbei anhand von rot markierten Punkten an der rechten Fahrbahnrandmarkierung ersichtlich.

Ferner sei darauf hingewiesen, dass ein weiteres Merkmal bzw. Zusatz-Feature einer videogestützten Navigation beispielsweise ein Video-ESP-System sein kann.

Ein Video-ESP, wie es gemäß einem Ausführungsbeispiel der vorliegenden Erfindung optimal in Verbindung mit einer videogestützten Navigation eingesetzt werden kann, dient dabei als ein Assistenzsystem bzw. Fahrer-Assistenzsystem. Das Video-ESP ist dabei beispielsweise vorteilhaft bei engen Autobahnauffahrten oder bei Fahrten über Landstraßen. Eine Kamera berechnet einen Krümmungsradius (beispielsweise von Kurven) und gibt eine Richtgeschwindigkeit an, mit der eine Kurve maximal befahren werden darf.

Zusammenfassend lässt sich festhalten, dass die vorliegende Erfindung im Hinblick auf eine videogestützte Navigation auch die folgenden Aspekte umfasst:

- Streckenverlauf: Aus Videobildern eines Fahrbandrands, einer Mittellinie und einer Leitplanke wird eine Straßenkarte bzw. Roadmap erzeugt und mit einem Kartenmaterial verglichen.

- Fluchtpunktbestimmung: Aus Schnittpunkten von Mittellinie, Leitplanke, linkem Rand und/oder rechtem Rand (bzw. Farbahnrand) wird ein Fluchtpunkt bestimmt.

- Horizont: Das Hough-Verfahren eignet sich besonders, um Boden und Himmel zu separieren.

- Video-ESP: Aus einer Fahrbahnkrümmung wird berechnet, mit welcher Maximalgeschwindigkeit eine Kurve genommen bzw. befahren werden kann.

- Schildererkennung: Das Hough-Verfahren ist besser als herkömmliche Verfahren und dient beispielsweise auch zur Verkehrszeichenerkennung.

- Schrifterkennung: Das Verfahren dient gemäß einem Ausführungsbeispiel der vorliegenden Erfindung zur Erkennung von Symbolen und/oder Zeichen in Verkehrsschildern (z. B. von Ortsnamen, Geschwindigkeitsbeschränkungen "120", "80", Pfeilen, usw.).

- OnMove: Rote Punkte (z. B. Extrempunkte bzw. Extrema) sind Andockpunkte zum Bestimmen eines optischen Verschiebevektors, und damit zur Bestimmung eines Verschiebevektorfeldes.

- OnEdge: Die roten Punkte (z. B. Extrempunkte bzw. Extrema) sind Konturlinien, die als weitläufige Ankerpunkte betrachtet werden können. Das Verfahren operiert bei einem Ausführungsbeispiel auf Kanten der Länge 64 und ist damit jedem lokalen OnMove, OnEdge der Größe 9x9 bis 32x32 überlegen.

Im Folgenden wird kurz erläutert, wie ein 3D-Modell entworfen werden kann. Rote Punktwolken (beispielsweise Extrempunkte bzw. Extrema) werden gegeneinander in Übereinstimmung gebrach (gematcht), um eine Disparität aus einer Verschiebung zweier passender roter Punkte ähnlichen Krümmungsradius zu bestimmen.

Eine Verkehrsschilderkennung wird verbessert, indem aus der Disparität bestimmt wird, ob ein Bildpunkt bzw. ein Pixel einem 3D-Objekt zugeschrieben wird. Daraufhin werden alle Bildpunkte bzw. Pixel, die aus einer Disparitätsmatrix nicht dazugehören, entfernt. Bei Verkehrsschildern ergeben sich bei Verwendung von zwei Kameras mit unterschiedlichen Blickwinkeln unterschiedliche Achsenwerte a, b, woraus auf eine Winkelstellung des Verkehrsschildes bezüglich einer Kameraachse geschlossen werden kann. Damit kann dann beispielsweise ein dreidimensionales Modell entworfen werden.

Im Übrigen sei darauf hingewiesen, dass die erfindungsgemäße videogestützte Navigation als eine Fortführung einer Identifikation von Ellipsen angesehen werden kann. Eine Software "WinDelayLine" zur Durchführung einer Hough-Transformation wird beispielsweise konsequent praktisch eingesetzt, um vielfältige Applikationen zu erreichen. Für Fahrerassistenzsysteme ist beispielsweise eine Augenverfolgung (Eye tracking), eine Fahrbahnerkennung (Line recognition) und eine Verkehrszeichenerkennung (traffic sign detection) ein und dasselbe, da alle diese Probleme mit der gleichen Software WinDelayLine gelöst werden können.

Es sei darauf hingewiesen, dass Bilderkennen Farbe und Form ist. Die Form ergibt sich aus einer Verschmelzung eines Hubel-Wiesel-Netzwerkes (eine praktische Umsetzung ist die Software "WinDelayLine", mit der alle Beispiele erzeugt wurden) mit einer retinalen Vorverarbeitung nach Professor Rosska. Die Form wird mit der Farbinformation nach Professor Zeki vereinheitlicht.

Die Software "WinDelayLine" funktioniert deshalb, weil sie eine konsequente digitale Lösung des Hauptsatzes der Kurventheorie ist.

Gemäß einem Aspekt der vorliegenden Erfindung umfasst eine erfindungsgemäße Vorrichtung zur videogestützten Positionsbestimmung eine Vorverarbeitungseinrichtung, um basierend auf einem Kamerabild ein vorverarbeitetes Kamerabild zu erzeugen, in dem zusammengehörige Bereiche des Kamerabilds durch zugehörige einfarbige ausgedehnte Flächen dargestellt sind.

Gemäß einem Aspekt der vorliegenden Erfindung umfasst die Vorrichtung ferner eine Bildvergleichseinrichtung, die ausgelegt ist, um durch den Vergleich des vorverarbeiteten Kamerabildes mit einem Modellbild, das auf einem Umgebungsmodell basiert, das eine Ansicht einer Umgebung in Form einer Mehrzahl von einfarbigen Flächen beschreibt, und das eine zugeordnete Ortsinformation aufweist, eine Position zu bestimmen, von der aus das Kamerabild aufgenommen wurde. Das erfindungsgemäße Konzept umfasst ferner eine Verwendung von Hough-Extremas, die eine Form konstituieren und strukturieren. Als Beispiel sei auf ein Verkehrsschild hingewiesen. Ist bekannt, dass die Form des Verkehrsschildes rund ist, und dass die Farbe des Verkehrsschildes Rot ist, so ist damit ein Verkehrsschild schon fast bestimmt bzw. eingekreist.

Gemäß einem Aspekt der vorliegenden Erfindung wird aus Videobildern eines Fahrbahnrandes, einer Mittellinie und einer Leitplanke eine Straßenkarte erzeugt. Die Straßenkarte wird mit Kartenmaterial verglichen. Zusätzlich kann die Bestimmung des Streckenverlaufs beispielsweise verwendet werden, um ein Abkommen eines Fahrzeugs von einer Strecke zu vermeiden. In anderen Worten, die vorliegende Erfindung schafft gemäß einem Aspekt der Erfindung ein Fahrerassistenzsystem zur Fahrspurerkennung bzw. Lane recognition.

Bei Verwendung der Software WinDelayLine" zischen Extrema eines Fahrbahnrandes an einem Beobachter vorbei, so dass ein Gefühl wie bei einem Formel-1-Rennen entsteht. Straßenkarten werden aus den Krümmungsverläufen erzeugt, indem in jedem Bild ein Puzzlestein weitergemalt wird und dann mit Straßenkarten verglichen wird.

Gemäß einem Aspekt der vorliegenden Erfindung stellt ein Farbensehen einen wichtigen Aspekt dar. Gemäß einem anderen Aspekt der vorliegenden Erfindung allerdings wird eine Strecke aus einer kontinuierlichen Fortsetzung von Extrema angetragen.

Ferner sei darauf hingewiesen, dass ein Algorithmus für eine Streckenverlaufsbestimmung gemäß einem Ausführungsbeispiel der vorliegenden Erfindung ähnlich wie eine Erkennung einer Ellipse mit Hilfe einer Hough-Transformation erfolgen kann. Eine Videokamera erzeugt Eingabebilder, dann werden Krümmungen bestimmt und wie in einer Satellitenbildergenerierung aus den Extrema wieder zu einer Straßenkarte zusammengesetzt.

Im Hinblick auf eine Fluchtpunktbestimmung sei darauf hingewiesen, dass sich Parallelen in einer euklidischen Metrik in einem Unendlichen schneiden, nicht aber bei einem Kameramodell. Bei einem Kameramodell schneiden sich Leitplanke, Fahrbahnrand und Mittelmarkierung in einem Punkt. Der Fluchtpunkt und der maximale innere Krümmungsradius an einem rechten Fahrbahnrand bei einer Rechtskurve dienen beispielsweise zu einer inneren Orientierung, wie ein Fahrer bzw. ein Fahrzeug in eine Kurve hinein fährt.

Ferner sei darauf hingewiesen, dass gemäß einem Aspekt der vorliegenden Erfindung mit einem Fluchtpunkt auch Farbflächen separiert werden, beispielsweise ein Horizont.

Diesbezüglich sei beispielsweise auf die Arbeit "Inertial sensor data integration in computer vision systems" von J. Lobo (M. Sc. Thesis, University of Coimbra, Februar 2002) verwiesen.

Ferner sei darauf hingewiesen, dass gemäß einem Aspekt der vorliegenden Erfindung eine Horizontbestimmung erfolgt. Beispielsweise grenzt eine horizontale Punktwolke einen Boden von einem Himmel ab. Damit können beispielsweise ganze Teile eines Bildes separiert werden, da dann Wolken x-beliebig sein können.

Gemäß einem Aspekt der vorliegenden Erfindung sind für eine Positionsbestimmung sowohl Farbe als auch Form wichtig.

Durch eine Horizontbestimmung wird allerdings beispielsweise ein Himmel weggenommen. Somit ist das erfindungsgemäße Konzept gemäß einem Aspekt der vorliegenden Erfindung kompatibel mit einer Datenbank von Yahoo.

Im Hinblick auf ein Video-ESP sei darauf hingewiesen, dass eine Krümmung (beispielsweise einer Kurve) als ein physikalischer Parameter ein Kriterium darstellt, ob eine Geschwindigkeit, mit der sich beispielsweise ein Fahrzeug auf die Kurve zu bewegt oder die Kurve durchquert, angemessen ist, die Kurve zu nehmen bzw. zu kratzen oder aus der Kurve hinausgetragen zu werden. So sei darauf hingewiesen, dass Straßen in vielen Fällen nach einer mathematischen Formel gebaut werden. Somit haben beispielsweise in vielen Fällen Kurven einen vorbestimmten Verlauf.

Im Hinblick auf das Video-ESP sei darauf hingewiesen, dass das entsprechende System, das mit der erfindungsgemäßen Videogestützten Positionsbestimmung kombiniert werden kann, ein Fahrerassistenzsystem ist, das nicht willkürlich eingreift. Vielmehr gibt das Video-ESP gemäß einem Ausführungsbeispiel der vorliegenden Erfindung ein akustisches Warnsignal aus. Das akustische Warnsignal weist einen Fahrer beispielsweise darauf hin, in eine Autobahnausfahrt mit einer langsameren Geschwindigkeit (beispielsweise mit 60 km/h statt mit 120 km/h) einzufahren. Eine Funktion, die eine maximale Geschwindigkeit in Abhängigkeit von einem Krümmungsradius angibt (auch als max Krümmungsradius (Geschwindigkeitsfunktion) bezeichnet) kann beispielsweise empirisch ermittelt und/oder aus Kennlinien eines ESP-Systems abgeleitet sein. Ferner ist eine Lösung auch physikalisch aus einer Masse, einer Geschwindigkeit oder Zentrifugalkraft berechenbar, da nur eine Zentripetalkraft einer Reifenhaftung entgegenwirkt.

Gemäß einem Aspekt der vorliegenden Erfindung kann das erfindungsgemäße Konzept im Übrigen mit einer Schildererkennung kombiniert werden. Dabei können beispielsweise alle Arten von Verkehrszeichen erkannt werden. Runde Verkehrszeichen, die aus einer Perspektive elliptisch erscheinen, werden zu 100 % erkannt bzw. gematcht. Dreieckige Verkehrszeichen, parallelogrammförmige Verkehrszeichen und rechteckige Verkehrszeichen werden ebenfalls erkannt bzw. gematcht, da wie bei einer Schriftzeichenerkennung kleine Rundungen ebenfalls mit der Software "WinDelayLine" fein justierbar sind. Diesbezüglich sei auf ein Vorfahrtsschild und ein rechteckiges Schild verwiesen.

Ferner sei darauf hingewiesen, dass gemäß einem Aspekt der vorliegenden Erfindung eine Video-Navigation bzw. eine videobasierte Positionsbestimmung auch aus einer Zeichenerkennung heraus möglich ist. So können beispielsweise Ortsschilder oder Hinweisschilder gelesen werden, um eine Position zu bestimmen.

Im Hinblick auf eine Schrifterkennung sei im Übrigen darauf hingewiesen, dass Schriftzüge beispielsweise Bögen, Rundungen, vertikale Linie, diagonale Linien und horizontale Linien umfassen. In anderen Worten, Schriftzüge sind wie bei Erstklässlern Bögen, Rundungen, sowie vertikale, diagonale und/oder horizontale Schriftzüge. Plausibel ist beispielsweise ein "o" mit vier Extrema. Ein "s" hat ebenfalls vier Extrema, aber in einer anderen Position zueinander. Somit wird bei einer Schrifterkennung beispielsweise ein MIN-Variationsalgorithmus mit vorgegebenen Stützstellen der Extremas angesetzt, um gefundene Eingaben zu Treffern zu verwandeln.

Im Folgenden werden Details im Hinblick auf einen OnMove-Operator beschrieben. Gemäß einem Aspekt der vorliegenden Erfindung greift das erfindungsgemäße Konzept in voller Güte, da ein erfindungsgemäßer OnMove-Operator über ein 3x3-Gepixel hinausgeht. Jedes Extrema ist durch bis zu 64 Pixelpunkte verankert, da das Extrema Repräsentant einer bestimmten Krümmung und Lageposition aus bis zu 64 Pixelpunkten ist. Daher ist das Extrema robust und wird beispielsweise auch in Folgebildern gefunden. Somit kann eine Verschiebungstrajektorie (ein optischer Fluss) an den Extrema als Ankerpunkte festgemacht werden. Mit einem optischen Fluss werden beispielsweise stationäre Objekte wie Verkehrsschilder von sich mitbewegenden Objekten wie Fahrzeugen separiert. Somit werden beispielsweise sich bewegende Objekte herausgerechnet.

Im Folgenden werden Details im Hinblick auf eine OnEdge-Operation beschrieben. Gemäß einem Aspekt der vorliegenden Erfindung ist ein Kantenerkennungsalgorithmus universell einsetzbar. Eine Kante ergibt sich aus (roten bzw. rot markierten) Extrema, die beispielsweise einer horizontalen Struktur folgen. Eine Histogrammierung längs einer Achse ergibt felsenfest, dass es sich um eine ausgedehnte Kante bestimmter Länge handelt.

In anderen Worten, die vorliegende Erfindung ist besonders gut kombinierbar mit einem Algorithmus, wie er durch die Software "WinDelayLine" ausgeführt wird. Im Übrigen eignet sich auch ein Algorithmus, wie er zur Ellipsenerkennung verwendet wird, zur Verwendung in Verbindung mit dem erfindungsgemäßen Konzept.

Gemäß einem Ausführungsbeispiel der vorliegenden Erfindung erfolgt eine videogestützte Navigation wie folgt:

Gemäß einem Aspekt der vorliegenden Erfindung umfasst ein Rahmen bzw. ein Rahmenwerk und ein Kern eine Objekt-Detektion in Kontur-Segmentierungs-Netzwerken (object detection in contour segmentation networks). Diesbezüglich wird beispielsweise auf die Veröffentlichung "Object detection by contour segment networks" von V. Ferrari u. a. verwiesen.

Das erfindungsgemäße Konzept einer videogestützten Navigation umfasst gemäß einem Ausführungsbeispiel der vorliegenden Erfindung eine Bestimmung von Farbflächen, eine Bestimmung von krümmungsbasierten Hough-Punktwolken, eine Verwendung eines OnMove-Operators und eines OnEdge-Operators sowie eine Bestimmung einer Streckenverlaufsführung.

Gemäß einem Aspekt der vorliegenden Erfindung basiert das erfindungsgemäße Konzept auf einer Neurobiologie. Die vorliegende Erfindung umfasst gemäß einem Ausführungsbeispiel eine Veränderung einer Farbkonstanz sowie einen krümmungsbasierten Hough-Teil. Damit sind beispielsweise die von Professor Rosska beschriebenen Operatoren "OnMove" und "OnEdge" abgedeckt bzw. erfasst, wobei ein Hough-Operator bzw. eine Durchführung einer parallelen Hough-Transformation die Operatoren OnMove und OnEdge bildet. Gemäß einem Aspekt der vorliegenden Erfindung werden Konturen von der Farbe ausgefüllt, was einem OnSluggish-Operator entspricht. Mit dem erfindungsgemäßen Konzept wird im Übrigen eine Konturfindung durch einen Hough-Operator bzw. durch die Durchführung einer Hough-Transformation ausgeführt. Ferner kann im Übrigen eine Verkehrszeichenerkennung und eine Schrifterkennung mit einem Hough-Operator erfolgen.

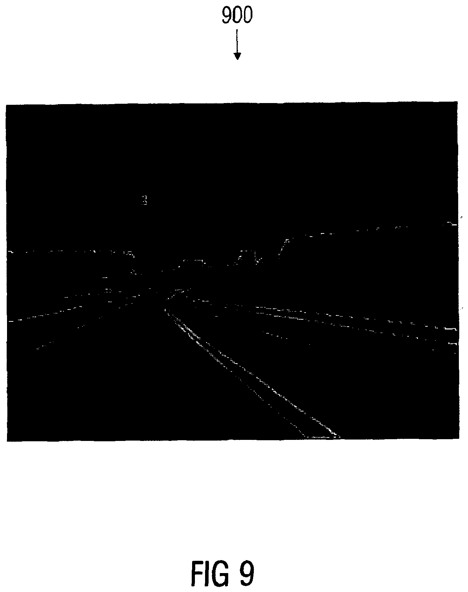

Im Folgenden wird das erfindungsgemäße Konzept noch einmal kurz zusammengefasst, um eine Essenz des Verfahrens bzw. Konzepts herauszudestillieren. Bei einem Ausführungsbeispiel der vorliegenden Erfindung wird ein Bild mit einer Kamera aufgenommen, die in oder an dem Fahrzeug angebracht ist. Fig. 9 zeigt ein typisches Bild, das beispielsweise auf der Autobahn A71 mit einer Panasonic-GF27-Videokamera bzw. Videocam von einem Beifahrer aus einem fahrenden Auto heraus aufgenommen wurde. Das in der Fig. 9 gezeigte Bild wurde mit der Software "WinDelayLine" gewonnen. Bei der entsprechenden Software sind ein Schwellenwert, ein gesuchter Krümmungsradiusbereich sowie weitere Parameter (beispielsweise Parameter einer parallelen Hough-Transformation) mit Schiebereglern einstellbar. Die Hough-Transformation kann ähnlich erfolgen wie dies beispielsweise bei einer Ellipsenerkennung erfolgt.

Die Software WinDelayLine erhält als ein Eingangsbild ein Kantenkonturbild. In dem Vergleichs-Falle einer Ellipsenerkennung ist das Kantenkonturbild eine Ellipsenumrandung. Sichtbare markierte Punkte bzw. rote Punkte sind die gefundenen Extrema. Sie beinhalten jeweils noch eine Information über den Krümmungsradius. Praktisch ist mit einer digitalen Lösung eines ersten Hauptsatzes der Kurventheorie jede Funktion aus Stützstelle und zweiter Ableitung (Krümmungsradius) darstellbar. Aus roten Punkten einer Mehrzahl von Einzelbildern (bzw. jedes Einzelbildes) wird eine Straßenkarte (Roadmap) generiert, indem in jedem darauf folgenden Bild immer einer Seitenlinie bzw. einer Mittellinie entlanggegangen wird. Um auch gerade Strecken zu finden, werden in einem Hough-Kern bzw. Hough-Core Hough-Geradengleichungen einprogrammiert, so dass dann Geraden unterschiedlicher Steigung gefunden werden.

Ferner sei darauf hingewiesen, dass bereits eine Video-Demonstration bzw. eine Video-Demo einer Autobahnfahrt existiert. In dem Video sind gemäß einem Ausführungsbeispiel der vorliegenden Erfindung nur rote bzw. markierte Extrema bzw. Extrempunkte gezeigt. Der Film erzeugt das Gefühl, in einem Auto zu sitzen und auf die Fahrbahn zu schauen.

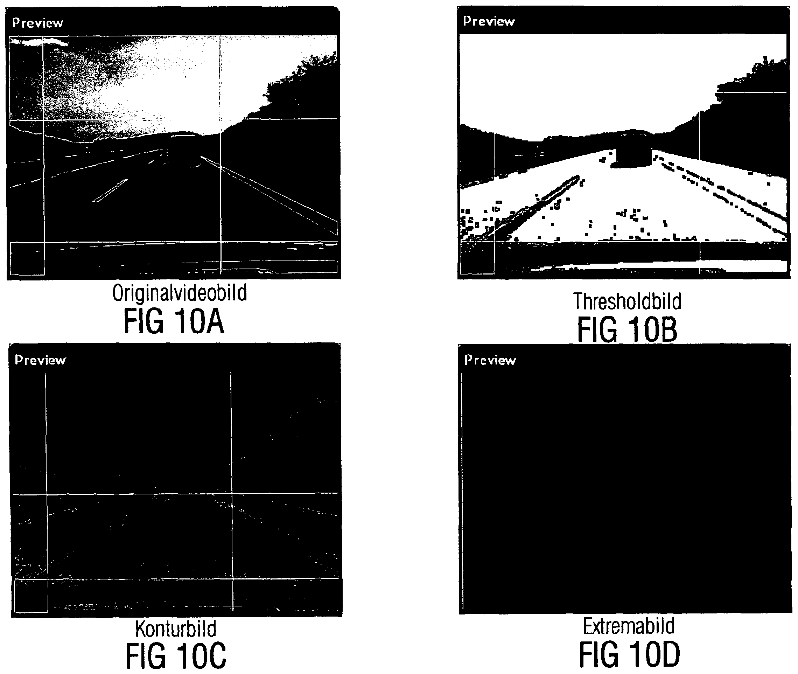

Im Folgenden wird anhand der Fig. 10a bis 10h ein weiteres Ausführungsbeispiel der vorliegenden Erfindung beschrieben. Die Fig. 10a bis 10d zeigen dabei ein Blockbild bzw. Blockschaltbild eines erfindungsgemäßen Konzepts zur videogestützten Navigation.

Fig. 10a zeigt eine graphische Darstellung eines Original-Videobilds, beispielsweise des Bildes bzw. Kamerabildes 208. Fig. 10b zeigt eine graphische Darstellung eines schwellwertverarbeiteten Bildes bzw. Schwellwertbildes (Threshold-Bild). Die graphische Darstellung der Fig. 10b kann dabei beispielsweise das vorverarbeitete Bild 212 darstellen.

Fig. 10c zeigt eine graphische Darstellung eines Konturbildes. Das Konturbild gemäß der Fig. 10c kann beispielsweise durch eine Kantendetektion aus dem Schwellwertbild gemäß der Fig. 10b im Rahmen einer Bildvorverarbeitung gewonnen werden. In anderen Worten, das Konturbild gemäß der Fig. 10c kann beispielsweise dem vorverarbeiteten Bild 212 entsprechen.

Fig. 10d zeigt eine graphische Darstellung eines Extremabildes. Das Extremabild gemäß der Fig. 10d kann beispielsweise durch eine Ausführung einer (beispielsweise parallelen) Hough-Transformation aus dem Konturbild gemäß der Fig. 10c erzeugt sein. In anderen Worten, das Extremabild gemäß der Fig. 10d kann beispielsweise der Information 222 über Extrempunkte von Kreisbögen oder Ellipsenbögen in dem vorverarbeiteten Bild oder, alternativ, dem Extremabild 232 entsprechen. Ferner kann das Extremabild gemäß der Fig. 10d zusätzlich eine Information über gerade Strecken in dem Konturbild gemäß der Fig. 10c umfassen.

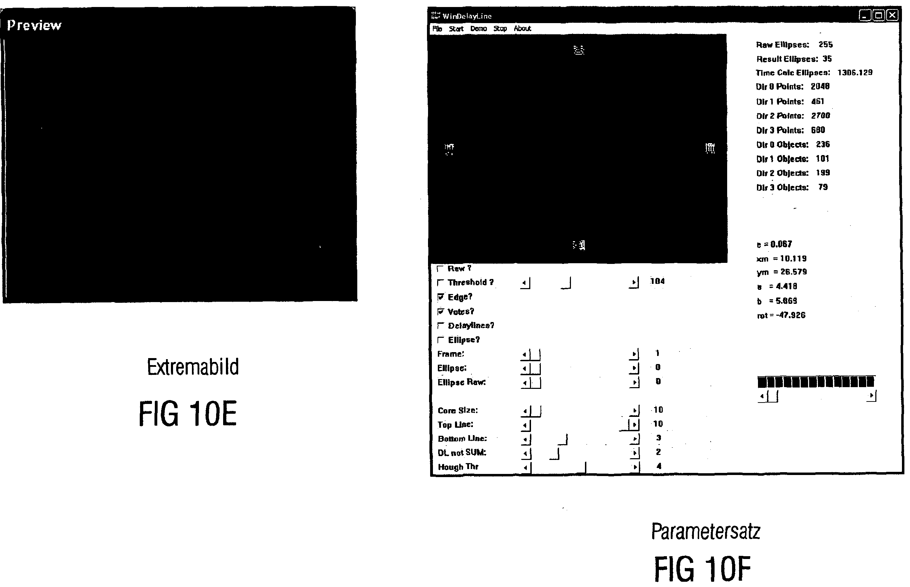

Fig. 10e zeigt ein Extremabild, wie es durch die Software "WinDelayLine" erzeugt ist. Fig. 10f zeigt eine graphische Oberfläche der Software "WinDelayLine" sowie gewählte Parameter zur Erzeugung des Extremabilds gemäß der Fig. 10e.

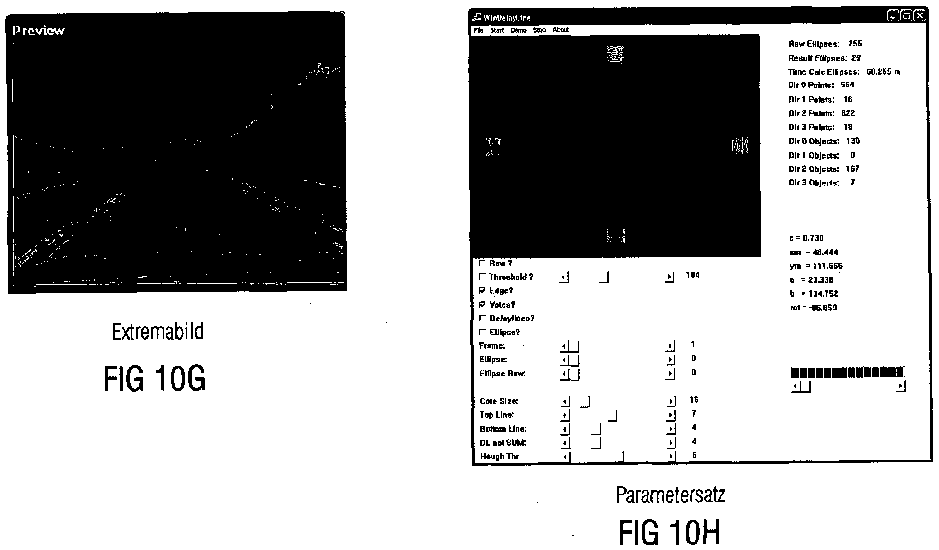

Fig. 10g zeigt eine weitere graphische Darstellung eines Extremabildes, wie es durch Verwendung der Software WinDelayLine, also unter Durchführung einer Hough-Transformation, erzeugt worden ist. Fig. 10h zeigt wiederum eine graphische Oberfläche der Software WinDelayLine sowie die für die Erzeugung des Extremabildes gemäß der Fig. 10g gewählten Parameter.

Diesbezüglich sei darauf hingewiesen, dass ein Parameter "Kerngröße" "Core size" einen Radius in Bildpunkten bzw. Pixeln bestimmt. Parameter "obere Linie" ("Top line") und "untere Linie" (Bottom line) bestimmen einen gesuchten Krümmungsradiusbereich. Ein Parameter "Verzögerung nicht Summe" (DL not SUM) bestimmt einen Bereich um ein Extremum (einer gekrümmten Linie), der ausgespart wird, damit nicht zu viele horizontale Linien gefunden werden. Aus zusammengesetzten Teilbildern wird eine Straßenkarte (Roadmap) konstruiert durch Übereinanderlegen von passenden Teilstücken, Entzerrung der Bilder durch projektive Zentralprojektion, maßstabsgetreue Wiedergabe und Vergleich mit einer Straßenkarte.

Im Folgenden werden noch einmal kurz die Parameter einer Hough-Transformation, wie sie durch die Software WinDelayLine durchgeführt wird, beschrieben. Dabei wird Bezug genommen auf eine Beschreibung der Software WinDelayLine. Ein Parameter "RAW" beschreibt, ob ein aktueller Bildrahmen angezeigt werden soll. Ein Parameter "Schwellwert" bzw. "Threshold" bestimmt, dass eine Bildregion, die dunkler ist als ein festgelegter Grau-Schwellwert, der beispielsweise mit Hilfe eines Schiebereglers einstellbar ist, angezeigt wird. Der Grau-Schwellwert kann aber beispielsweise für einen ersten Bildrahmen automatisch berechnet werden. Außerdem ist eine manuelle Einstellung möglich. Ein Parameter "Kanten" bzw. "Edges" ermöglicht es, eine Konturlinie einer Bildregion anzuzeigen, die dunkler als der Grau-Schwellwert ist. Ein Parameter "Entscheidungen" bzw. "Votes" legt fest, ob Scheitelpunkte einer Ellipse bzw. Extrempunkte von Kreisbogensegmenten oder Ellipsenbogensegmenten als markierte Punkte bzw. rote Punkte angezeigt werden. Ein Parameter "Verzögerungsleitungen" bzw. "Delay Lines" bestimmt, ob eine Anzeige eines Inhalts von Verzögerungsregistern erfolgt. Ein Parameter "Ellipse" bestimmt, ob eine ermittelte Ellipse in einem Vorschaufenster angezeigt ist. Ein Parameter "Rahmen" bzw. "Frame" ermöglicht es, einen gewünschten Bilderrahmen bzw. Rahmen innerhalb einer Videosequenz auszuwählen. Ein Parameter "Ellipse-Roh" bzw. "Ellipse RAW" ermöglicht es, festzulegen, ob die Ellipsen eines alternativen Verfahrens "Fitzgibbon" angezeigt werden.

Ein Parameter "Kerngröße" bzw. "Core size" verändert eine Größe eines Hough-Verzögerungsregisters bzw. mehrerer Hough-Verzögerungsregister.

Ein Parameter "obere Linie" bzw. "top line" variiert ein oberes Ende der Hough-Verzögerungsregister. Je niedriger das obere Ende, desto geringer ist ein Berechnungsaufwand. Jedoch wird ein Bereich von Ellipsenradien, nach denen gesucht wird, dadurch eingeschränkt.

Ein Parameter "untere Linie" bzw. "bottom line" beeinflusst ein unteres Ende von Verzögerungsregistern.

Ein Parameter "Verzögerungsleitungen nicht Summe" bzw. "DL not SUM" bewirkt eine Einschränkung eines Radius von elliptischen oder kreisförmigen Objekten, die lokalisiert werden sollen.

Ein Parameter "Hough-Schwellwert" bzw. "Hough-Thr" ermöglich eine Einstellung eines Hough-Histogramm-Schwellwerts. Je niedriger der Hough-Histogramm-Schwellwert ist, desto eher werden Störungen einer Ellipse wie Unterbrechungen oder Ausbuchtungen oder Einbuchtungen toleriert.

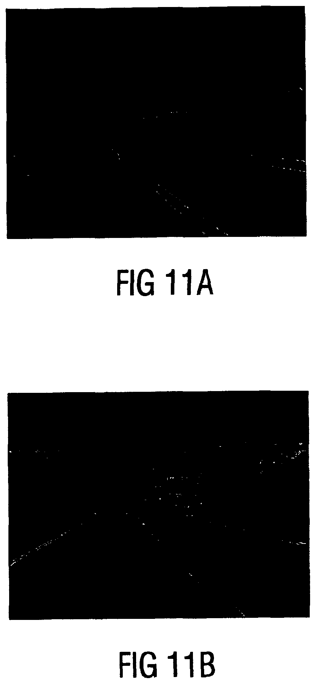

Im Folgenden wird anhand der Fig. 11a und 11b noch einmal kurz gezeigt, wie unter Verwendung einer Hough-Transformation eine Spurerkennung erfolgen kann.

Diesbezüglich sei darauf hingewiesen, dass unter Verwendung einer Hough-Transformation neben einer Verkehrszeichenerkennung durch ein optisches System in einem Kraftfahrzeug auch eine visuelle Spurerkennung erfolgen kann. In anderen Worten, es kann eine Warnung erfolgen, wenn ein Fahrzeug von einer Straße abkommt bzw. abzukommen droht. Das System kann somit als Unterstützung für einen unkonzentrierten oder abgelenkten Fahrer dienen. Die Fig. 11a und 11b zeigen Beispiele für eine Spurerkennung mit Hilfe einer Hough-Transformation. Die graphischen Darstellungen gemäß den Fig. 11a und 11b zeigen beispielsweise Verkehrssituationen auf einer Autobahn. Im Hinblick auf die graphischen Darstellungen der Fig. 11a und 11b sei ferner darauf hingewiesen, dass die roten Punkte gefundene Extrema darstellen, die zusätzlich eine nicht dargestellte Information über einen lokalen Krümmungsradius haben. Die Beispiele gemäß den Fig. 11a und 11b wurden mit der Software WinDelayLine erzeugt. Bei der genannten Software können beispielsweise ein maximaler Krümmungsradius, ein minimaler Krümmungsradius, eine Anzahl von nicht für die Hough-Transformation herangezogenen Bildzeilen bzw. Bildspalten ("Delay not Sum" bzw. "Verzögerung nicht Summe") einstellt werden. Ferner ist beispielsweise ein Krümmungsradius bzw. eine Hough-Kern-Größe (Hough-Core-Size) einstellbar. Es sei darauf hingewiesen, dass für die Software WinDelayLine (bzw. für den darin verwendeten Algorithmus zur Durchführung einer Hough-Transformation) bereits VHDL-Dateien zum Einsatz in einem Rahmen-Akquisitions-System (Frame grabber system) vorhanden sind.

In anderen Worten, die Hough-Transformation kann beispielsweise direkt in einem Rahmen-Akquisitions-System eingesetzt werden, indem beispielsweise die Hough-Transformation in einem feldprogrammierbaren Gatter-Feld (FPGA) durchgeführt wird.

Im Folgenden wird noch einmal kurz beschrieben, wie bei einem Ausführungsbeispiel der vorliegenden Erfindung eine Positionsbestimmung basierend auf einem Extremabild erfolgt. Nachdem eine Zwischenrepräsentation in From von Extremwerten bzw. Extremawerten (beispielsweise dargestellt durch rot markierte Punkte) erzeugt ist, ist der nächste Schritt beispielsweise ein Zentralprojektion, in der aus einer Brennweite der Kamera und einer Blickrichtung eine Zentralprojektion der Punkte durch Koordinatentransformation vorgenommen wird. Das heißt vereinfacht gesprochen, man schaut von oben auf die Straße. In anderen Worten, es erfolgt eine Abbildung der Extremawerte bzw. Extremapunkte in die Form einer Draufsicht.

Anschließend wird eine Karte aus Flickwerken (Patchworks) bzw. aus einzelnen Teilen zusammengesetzt und Bild für Bild (Bild nach Bild) an die passende Anschlussstelle überlagert. Da eine vorwärtsgerichtete Bewegung vorliegt, sind beispielsweise nur nächste Nachbarwerte eines jeden Punktes miteinander auf Passgleichheit zu überlagern. Dies erfolgt beispielsweise mittels einer Ausgleichsrechnung, indem durch Variation $\min(\text{Summe } (x\_i, y\_i - x\_i, y\_i))^2$ ein mittlerer Verschiebungsvektor eines Bildes zu seinem Vorgänger bestimmt wird.

Dann wird diese Information abstrahiert, so dass die Karteninformation in der Form eines Lageplans vorliegt bzw. in Form einer Karte vorliegt. x,y-Koordinaten werden zu Wegstrecken und Bogenabschnitten zusammengefasst in Liniengraphikform. Beispielsweise kann eine Beschreibung der Form "starte bei einem absoluten Nullpunkt x0, y0, gehe im 30°-Winkel 50 Meter lange Wegstrecke, danach Krümmungsbogenstück nach links, etc." erstellt werden. Für eine Computerberechnung zum Vergleich mit einer Straßenkarte sind die Werte in Tabellen abgelegt bzw. als Zahlenwerte abgelegt, um übereinstimmende Sequenzen zu finden.

Im Hinblick auf eine Vorgehensweise, wie anhand einer zweidimensionalen Darstellung des Extremabildes eine Darstellung erzeugt werden kann, als ob man von oberen darauf blickte, wird im Folgenden kurz auf die projektive Geometrie eingegangen. Diesbezüglich sei darauf hingewiesen, dass erfindungsgemäß ein herkömmliches Kameramodell eingesetzt wird (vergleiche die Arbeit "Inertial sensor data integration in computer vision systems" von J. Lobo, University of Coimbra, Seite 37 ff.). Ferner sei auf die Veröffentlichung "Improving calibration of 3D-Videooculography systems" von K. Schreiber und T. Haslwanter (IEEE transactions on biomedical engineering, Bd. 51, Nr. 4, April 2004) verwiesen. Außerdem können entsprechende Details auch dem Standardlehrbuch "Digitale Bildverarbeitung" von Professor Jähne, Springer-Verlag entnommen werden.

Für eine Straßenkarte ist eine Draufsicht von Vorteil. Für eine Häuseransicht ist hingegen eine Vertikalansicht von Vorteil. Am besten wäre beispielsweise ein 3D-Gittermodell. Ferner sei darauf hingewiesen, dass aus einer Kameraansicht einer Straße aus einer Perspektive schräg von oben zur Seite eine Draufsicht rekonstruierbar ist.

Bei einem alternativen Ausführungsbeispiel werden ferner in einem Bildausschnitt Krümmungen und gerade Verläufe bzw. gerade Strecken bestimmt. Ferner wird bei dem entsprechenden Ausführungsbeispiel die Straßenkarte in diesem Raum zurück transformiert.

Im Übrigen sei drauf verwiesen, dass das Verfahren einer projektiven Abbildung bei einem Ausführungsbeispiel der vorliegenden Erfindung ähnlich erfolgt wie eine Gewinnung von Kartenmaterial aus Satellitenbildern.

Wird ferner bei einem Ausführungsbeispiel der vorliegenden Erfindung ein Fluchtpunkt einer Straße bestimmt, so können beispielsweise alle Punkte oberhalb des Fluchtpunktes als Horizont eliminiert werden. Der Horizont ist nämlich ein unstrukturierter Verlauf und kann bei einem Ausführungsbeispiel der vorliegenden Erfindung aus einem Krümmungsradiushistogramm eliminiert werden.

Gemäß einem Ausführungsbeispiel der vorliegenden Erfindung wird eine große Karte aus mehreren (beispielsweise durch ein Projektion abgebildeten) Einzelbildern zusammengesetzt.

So werden beispielsweise zwei aufeinander folgende Einzelbilder so lange gegeneinander verschoben und gedreht, bis ein Unterschied zwischen den zwei Bildern bzw. Einzelbildern in einem Überlappungsbereich miniert ist. Dadurch entsteht bei einem Ausführungsbeispiel der vorliegenden Erfindung aus einer Mehrzahl von einzelnen Originalvideobildern eine große Karte, die im Wesentlichen eine Draufsicht einer Landschaft repräsentiert, vorausgesetzt, unerwünschte Bildanteile (wie beispielsweise ein Horizont) werden entfernt.

Eine entsprechende Darstellung umfasst beispielsweise eine große Anzahl an markierten Extremapunkten bzw. "roten Punkten", da ja im Wesentlichen eine Mehrzahl von Extremabildern (die jeweils sehr viele rote Punkte umfassen) koordinatentransformiert und zusammengesetzt wurden.

Ausgehend von der großen Karte wird dann eine Information abstrahiert, so dass eine Karten-Information in Form eines Lageplans vorliegt. x,y-Koordinaten werden bei einem Ausführungsbeispiel der vorliegenden Erfindung zu Wegstrecken und Bogenabschnitten zusammengefasst, um eine Liniengraphikform (bzw. eine Liniengraphik, die eine Form darstellt) zu erhalten. Im Hinblick auf eine Erzeugung einer abstrahierten Information aus einer Vielzahl von Extremawerten bzw. roten Punkten sei darauf hingewiesen, dass dies eine kartographische Frage darstellt. Diesbezüglich kommt es beispielsweise auf einen Maßstab an.

Bei einem Ausführungsbeispiel der vorliegenden Erfindung werden 25 Bilder pro Sekunde als eine viel zu hohe Informationsdichte angesehen, so das nur jeweils räumliche Angaben zu machen sind: Eine Straße verläuft beispielsweise einen halben Kilometer geradeaus, dann 20 % (oder 20°) nach rechts, usw. Diesbezüglich ist eine Vorgehensweise aber bei einem Ausführungsbeispiel der vorliegenden Erfindung ähnlich wie bei einer Erstellung einer Karte aus einer Satellitenaufnahme.

Im Folgenden wird noch kurz erläutert, wie durch eine Abstraktion einer Ansicht von oben, die eine große Anzahl von Extremwerten bzw. Extrempunkten bzw. von markierten "roten" Punkten umfasst, eine Darstellung erzeugt werden kann, die lediglich einen Straßenverlauf als Folge von Wegstrecken oder Bogenabschnitten beschreibt. Ferner wird im Folgenden erläutert, wie die durch die Hough-Transformation gelieferte Krümmungsinformation ausgewertet wird.

Aus einer Stetigkeit von Krümmungsradien von Nachbarpunkten ist schließbar, ob ein Straßenverlauf vorhanden ist, oder ein unstrukturierter Horizontverlauf. Um Extremapunkte bzw. rot markierte Extrema zusammenzufassen, wird bei einem Ausführungsbeispiel der vorliegenden Erfindung eine zweite Hough-Transformation auf die Extremapunkte bzw. auf die rot markierten Extrema angewendet, um eine Krümmung einer Fahrbahn global zu bestimmen. Diesbezüglich sei drauf hingewiesen, dass die Straßen im Allgemeinen nach vorgegebenen Normen (z. B. DIN-Normen) angelegt sind.

Im Folgenden wird beschrieben, wie gemäß einem Ausführungsbeispiel der vorliegenden Erfindung ein Straßenverlauf identifiziert wird, wobei davon ausgegangen wird, dass in einem koordinatentransformierten Bild, also beispielsweise in einer Draufsicht, eine Mehrzahl von Linien, die nicht alle zu einer Straße gehören, existiert. So existieren in einer Draufsicht beispielsweise Linien, die zu Häusern, Schildern, Passanten, Bäumen und anderen Objekten gehören. Diese Linien werden gemäß einem Ausführungsbeispiel der vorliegenden Erfindung von Begrenzungen der Straßen unterschieden. Eine entsprechende Identifizierung eines Straßenverlaufs erfolgt beispielsweise aus einem Kriterium einer Stetigkeit und einer Vielzahl an Überlagerungen von Bildern, so das ein optischer Fluss einer Fahrbahn entsteht, wenn man sich ein Video anschaut. Ein Horizont hüpft stärker. In anderen Worten, ein Straßenverlauf unterscheidet sich von anderen Objekten in einem Bild beispielsweise dadurch, dass ein Straßenverlauf sich in mehreren Bildern stetig fortsetzt, während andere Objekte sich stärker bewegen.

Ferner sei darauf hingewiesen, dass eine Bestimmung einer Karteninformation (beispielsweise in Form einer Information, die aufeinander folgende Wegstrecken und Bogenabschnitte beschreibt) in einem Zusammenhang mit einer Positionsbestimmung unter Verwendung von "Google-Earth" (also unter Verwendung eines dreidimensionalen Modells beispielsweise von Gebäuden) steht. So hängen die beiden Konzepte gemäß einem Ausführungsbeispiel der vorliegenden Erfindung durch ein einheitliches 3D-Modell zusammen, wobei vorzugsweise eine Horizontalansicht bzw. eine Vertikalansicht genutzt wird.

Es sei darauf hingewiesen, dass auch ein Gebäude, ein Fahrzeug oder ein anderes Objekt rote Punkte bzw. identifizierte Extremapunkte hinterlässt. Somit kann beispielsweise ein durch die Aufnahme eines Gebäude entstehendes Extremabild in der erfindungsgemäßen Weise verarbeitet bzw. für eine Identifizierung einer Position verwendet werden. Die Identifikation erfolgt dabei unter Verwendung einer Kontur-Etikettierung (Contour-Labeling). Für Details sei unter Anderem auf die obige Beschreibung sowie auf die Veröffentlichung "Object detection by contour segment networks" von V. Ferrari u. a. verwiesen.

Im Folgenden wird das Konzept der videogestützten Navigation gemäß einem Ausführungsbeispiel der vorliegenden Erfindung noch einmal Schritt für Schritt zusammengefasst. Diesbezüglich sei darauf hingewiesen, dass das Verfahren der videogestützten Navigation beispielsweise in ersten Schritten ähnlich wie eine Ellipsenidentifizierung abläuft. Parameter, wie beispielsweise ein Schwellwert, sind in dem schon oben erwähnten Programm WinDelayLine einstellbar. Die videogestützte Navigation erfolgt Schritt für Schritt wie folgt:

1. Nehme bild mit Kamera auf.

2. Setzte Schwellwert;
Binarisierung (sollte adaptiv sein nach einer Histogrammverteilung von Grauwerten);
bei einem Video öfter bzw. wiederholt Nachjustieren nach x Bildrahmen (Frames); alternativ Einstellung einer optimalen Schwelle für jedes Bild;
Standardbildverarbeitung, wie beispielsweise in einem Lehrbuch von Jähne beschrieben.

3. Finde Kontur;
Konturfinderalgorithmus ist ein Algorithmus, der aus morphologischen Operatoren zusammengesetzt ist, aber im Prinzip ein Kantendetektionsalgorithmus.

4. Durchführung einer Hough-Transformation; mit Software WinDelayLine werde Extrema in dem Bild gefunden und (beispielsweise rot) markiert. Jedes Extrema wird mit einer x,y-Position angegeben und hat zusätzlich einen Krümmungswert. Die erzeugten Wolken von Extrema ("rote Wolke") können mehr oder weniger dicht sein, je nach Variation der Parameter "Kerngröße" ("Core size"), "maximaler Krümmungsradius", "minimaler Krümmungsradius", "Verzögerung nicht Summe" (Delay not Sum).
Für Details diesbezüglich sei auf die Beschreibung der Software WinDelayLine verwiesen.

5. Bilde eine Menge bzw. einen Satz voll Schablonen (Templates) in einer Konturenbeschreibungssprache (beispielsweise in der Konturenbeschreibungssprache, wie sie von V. Ferrari in dem Artikel "Object detection by contour segment networks" beschrieben ist).

Zum Beispiel: Strecke geradeaus, dann Kurve scharf links, Kurve rechts (wie bei Rally-Fahrern). Erstelle für jede Strecke einen Komponentenvektor, der immer wieder erneuert wird, und der dem aktuellen Verlauf angepasst wird.

Allgemeines Verfahren (in Anlehnung an die Veröffentlichung von V. Ferrari): falls ein Objekt zusammengesetzt ist aus Linien und Kreisbögen, beschreibe, wie das Objekt zusammengesetzt ist. Beispiel: Ecke, Linie hoch, y Zentimeter, Linie runter x Zentimeter, Krümmungsbogen mit Krümmungsradius.

6. Streckenverläufe bestehen aus Strichen und Bögen. Jeweils ein Suchstring aus n aufeinander folgenden bzw. konsekutiven Abschnitten, also beispielsweise ein Vektor der Länge n mit Komponenten des Streckenverlaufs der Form (Krümmung Abschnitt 1, Abschnitt 2, Gerade, Krümmung, ...,) wird mit Streckenverläufen in einer abgelegten Suchbibliothek verglichen. Hierbei wird ein Min-Algorithmus-Klassifikationsschema eingesetzt.

Ferner wird hierbei bevorzugt ein Hauptsatz der Kurvendiskussion beherzigt: Jede Funktion ist durch eine Stützstelle und eine zweite Ableitung approximierbar. Das stimmt in einem digitalen Fall nur mit Einschränkungen. Vertikale und horizontale Linien werden gefunden, auch Kreise sind kein Problem, aber bei geraden Linien unterschiedlicher Steigung funktioniert das Verfahren bei einem Ausführungsbeispiel nicht gut. So wird bevorzugt in WinDelayLine ein Geraden-Hough-Finder eingesetzt, wie er in der Veröffentlichung "A neural net vor 2D slope and sinusoidal shape detection" von A. Brückmann, F. Klefenz und A. Wünsche beschrieben ist (veröffentlicht in: International Scientific Journal of Computing, Bd. 3, issue 1, Ukraine, 2004, Seiten 21 - 26). In anderen Worten, es wird beispielsweise eine vollständige rechnerische Neuro-Wissenschafts-Hubel-Wiesel-Lösung einer Orientierungsselektivität eingesetzt.

Ferner sei darauf hingewiesen, dass bei dem oben beschriebenen Verfahren gemäß einem Ausführungsbeispiel der vorliegenden Erfindung bevorzugt ein der videogestützten Navigation gedankter Zwischenschritt eingeschaltet wird. Ein Streckenverlauf wird bevorzugt nicht willkürlich in einer Karte bzw. Map auf Deckungsgleichheit hin und her verschoben, sondern gezielt um einen mittleren Verschiebungsvektor verrückt. Ein von identifizierten Extrempunkten (roten Extrema) aufgespanntes Messpunktgitter wird mittels Ausgleichungsrechnung von Rahmen zu Rahmen (von Frame zu Frame) möglichst passgenau bestimmt, indem ein Freiheitsgrad einer mittleren Verschiebung des Gitters in x-Richtung und y-Richtung berechnet wird. Ebenso wird beispielsweise eine Rotation des Gitters berechnet, so dass die Bildrahmen Stück für Stück aneinander gestückelt werden, um einen Gesamtstreckenverlauf abzutragen.

Für Details im Hinblick auf die Software WinDelayLine sei im Übrigen auf eine Diplomarbeit von J. Katzmann verwiesen.

Gemäß einem Aspekt der vorliegenden Erfindung kann das erfindungsgemäße Konzept zur gestützten Navigation auch mit einem Video-ESP kombiniert werden. Ein ESP ist zwar teilweise messgenauer, aber ein Video-ESP ahnt eine Gefahr voraus, da somit eine Kurvenkrümmung schon lange vorher bestimmt wird, bevor ein Fahrzeug mit eventuell erhöhter bzw. überhöhter Geschwindigkeit in eine Kurve hinein fährt.

Im Folgenden wird beschrieben, wie gemäß einem Aspekt der vorliegenden Erfindung eine Informationsreduktion erfolgen kann. Gemäß einem Aspekt der vorliegenden Erfindung ist eine Informationsreduktion einer Straßenkarte ein nicht unerheblicher Schritt bei einer Implementierung des erfindungsgemäßen Konzepts. Eine Kamera nimmt beispielsweise 25 Bilder pro Sekunde auf, und die Bildausschnitte überlappen sich. Diesem Sachverhalt kann man gemäß einem Ausführungsbeispiel der vorliegenden Erfindung beispielsweise gerecht werden, indem für jedes Bild eine Ausgleichsrechnung gemacht wird, und indem aufeinander folgende Bilder passgenau aufeinander gestapelt werden. Die Ausgleichsrechnung findet einen mittleren Verschiebungsvektor und versucht die gemeinsamen Punkte von zwei Bildern in Deckung zu bringen. Alle Ausreißer, die nicht in ein Schema passen, werden entfernt bzw. fliegen raus. Eine zweite Hough-Transformation dient einer weiteren Informationsreduktion, indem überbleibende Extrempunkte ("rote Punkte") Houghtransformiert werden, um Parameter einer höhere Stufe (high level parameter) zu erhalten. So kann durch die zweite Hough-Transformation beispielsweise ein absoluter Wert extrahiert bzw. destilliert werden. Beispielsweise kann durch die zweite Hough-Transformation eine Information gewonnen werden, dass beispielsweise eine Kurve mit einem bestimmten Krümmungsradius (z. B. in einem Krümmungsradius von 100 Metern) vorliegt.

Im Hinblick auf die projektive Abbildung sei das Folgende angemerkt: durch eine projektive Geometrie ergibt sich durch eine Brennweite einer Kamera, einen Sichtwinkel und andere geometrische Parameter ein verzerrtes Kamerabild. Um Realweltkooridnaten in einem 3D-Modell zu errechnen, kann man beispielsweise die oben beschriebenen Modelle nach Jähne oder Haselwanter verwenden. Bei einem anderen Ausführungsbeispiel genügt es, mit unentzerrten Kamerabildern (also ohne Anwendung einer projektiven Abbildung) zu arbeiten. Allerdings wird es bevorzugt eine Verarbeitung in Realweltkoordinaten vorzunehmen, bzw. sich in Realweltkoordinaten zu bewegen.

Im Hinblick auf eine Positionsbestimmung, bei der nicht ein Straßenverlauf bzw. Streckenverlauf verwendet wird, sondern bei der eine dreidimensionale Ansicht beispielsweise von Gebäuden verwendet wird (z. B. eine Google-3D-Ansicht) sei darauf hingewiesen, dass die Software WinDelayLine einen Horizont, Ampeln, Häuserfassaden, Fensters sowie horizontale und/oder vertikale Strukturen erkennt. Daher ist es eine Frage der Interpretation, was die identifizierten Extrema bzw. die roten Punkt aussagen. Dabei ist die Schablonen-Vorgabe bzw. Template-Vorgabe nach der oben zitierten Veröffentlichung von V. Ferrari ein mögliches aussagekräftiges Verfahren, um Muster bekannt vorzugeben (z. B. Schriftzeichen oder Häuserformen). Da hinein in diesen Kelch fließen dann neurobiologisch die Farben mit einem OnSluggish-Operator.

Ferner sei darauf hingewiesen, dass diese Welt aus Ecken, Kanten und Krümmungen besteht, aus denen sich die Welt zusammensetzt. Die genannten Ecken, Kanten und Krümmungen können beispielsweise für eine Positionsbestimmung unter Verwendung einer Hough-Transformation herangezogen werden. Zusammenfassend lässt sich somit festhalten, dass eine Positionsbestimmung beispielsweise unter Verwendung des Fahrbahnrands erfolgen kann, oder auch unter Verwendung zusätzlich von Häusern, Formen und Farben. Diesbezüglich sei darauf hingewiesen, dass der Fahrbahnrand beispielsweise die unmittelbar erlebte Umwelt in dem Kegel von Scheinwerfern (eines Fahrzeugs) bei Nebel ist. Der Fahrbahnrand ist also auf das Nötigste reduziert. Eine weitergehende Struktur kommt erst durch Häuser, Formen und Farben zustande.

Ferner sei darauf hingewiesen, dass die Durchführung einer Hough-Transformation ein wesentlicher Kerngedanke der vorliegenden Erfindung ist. Die Software WinDelayLine erkennt bzw. sieht Extrema. Die erkannten Extrema bilden ein Gerüst der Welt bzw. der Umgebung. Bei einem Ausführungsbeispiel der vorliegenden Erfindung ist dieser Grundgedanke mit den neuesten Erkenntnissen der Neurobiologie angereichert.

Gemäß einem Aspekt der vorliegenden Erfindung besteht eine Zentralaussage darin, dass ein Objekt Farbe und Form ist.

Gemäß einem Aspekt der vorliegenden Erfindung besteht eine Kern-Leistungsfähigkeit (Core performance) der vorliegenden Erfindung beispielsweise in den folgenden Aspekten:

- Hough-Transformation, beispielsweise mit der Software WinDelayLine;

- Kontur-Etikettierung in Anlehnung an Ferrari;

- Farbsehen (Colour vision) in Anlehnung an Karl R. Gegenfurtner (vergleiche z. B. den Artikel "Colour in the cortex revisited" von K. Gegenfurtner; veröffentlicht in: Nature Neuroscience, vol. 4, Nr. 4, April 2001).

Ferner sei darauf hingewiesen, dass in Verbindung mit dem erfindungsgemäßen Konzept ein Smith-Waterman-Algorithmus zur lokalen Ausrichtung verwendet werden kann.

So beschreibt Kapitel 8 der Doktorarbeit "Parallel hardware architectures for the life sciences" von Avi Epstein (Technische Universität Delft) eine komplette schaltungstechnische Realisierung des Smith-Waterman-Algorithmus zur lokalen Ausrichtung. Im Hinblick auf eine Anwendung des genannten Algorithmus sei beispielsweise auf die DE 101 178 70 verwiesen.

Bei einer videogestützten Navigation ist es vorteilhaft, eine volle Rechenleistung eines Chips verfügbar zu haben. In diesem Fall ist mit einem Hough-Chip, wie er in Kapitel 7 der genannten Doktorarbeit beschrieben ist, und einem DNA-Sequenzierer-Chip (DNA sequencer chip) ein Realzeitsystem möglich, das Straßenszenen symbolisch mit voller Leistung referenziert.

Es sei darauf hingewiesen, dass der Hough-Chip, wie er in Kapitel 7 der genannten Doktorarbeit beschrieben ist, eine komplette schaltungstechnische Implementierung des Konzepts gemäß der EP 1032891 (Titel: "Verfahren und Einrichtung zur Detektion und Koinzidenzbringung abschnittsweise in monotone und stetige Trajektorien wandelbarer Signalformen"; Erfinder: F. Klefenz) beschreibt.

Es sei darauf hingewiesen, dass die Kombination des Extremaverfahrens mit einer Verkehrszeichenerkennung und/oder einer Schrifterkennung besonders vorteilhaft ist. Das Extremaverfahren öffnet nämlich eine Tür in der Bildverarbeitung so weit, dass es vorteilhaft ist, die videogestützte Navigation mit einer Verkehrszeichenerkennung und/oder einer Schrifterkennung zu kombinieren. Mit Hilfe des Extremaverfahrens ist dies besonders einfach realisierbar.

Es sei im Übrigen darauf hingewiesen, dass die vorliegende Erfindung eine Vielzahl von Aspekten umfasst, die im Folgenden noch beschrieben werden. Das erfindungsgemäße Konzept umfasst gemäß einem Ausführungsbeispiel die Aspekte Modellbildung (Märklin-Eisenbahn-Weltmodell), Umrechnung auf Sonnenstand, Feinauflösung und Aufhebung beider Welten durch maximale Annäherung und Ähnlichwerdung.

Ferner umfasst die vorliegende Erfindung gemäß einem Aspekt eine Anwendung von Retina-Operatoren, Farb-Opertoren, Bewegungs-Operatoren, Kanten-Operatoren und Füll-Operatoren. Bei einem bevorzugten Ausführungsbeispiel ist ein Suchraum immer augenblicklich. In anderen Worten, es wird bei einem bevorzugten Ausführungsbeispiel stets ein Eins-zu-Eins-Bildvergleich durchgeführt. Wenn eine Suche abreisst, ist der Suchraum begrenzt, indem nur in den Bildstapeln gesucht wird, in denen sich das Fahrzeug fortbewegt haben kann. Bei einem bevorzugten Ausführungsbeispiel werden Standard-Video-Identifikations-Techniken zur Merkmalssuche eingesetzt.

Das Extrema-Verfahren öffnet neue Türen in der Bildverarbeitung, indem Extrema beispielsweise nach ihren Krümmungsradien histogrammiert werden. Dies kann beispielsweise viel feiner erfolgen, als nur horizontale und/oder vertikale Strukturen zu zählen.

Gemäß einem weiteren Aspekt der vorliegenden Erfindung wird in das erfindungsgemäße Konzept ein Schilderlesen (beispielsweise von Ortsschildern, Ortsnamen und/oder Geschwindigkeitsbegrenzungen) aufgenommen. Im Hinblick auf die Schrift sei als Beispiels das "o" angegebene, aber alle Buchstaben und Zahlen sind aus vertikalen, horizontalen, konkaven und/oder konvexen Linien zusammengesetzt. Ein "S" hat vier Extrema, ebenso wie ein "O", unterscheidet sich aber in der Krümmung und dem relativen Abstand der Extrema zueinander. Somit umfasst das erfindungsgemäße Konzept auch die Durchführung einer Schriftzeichenerkennung basierend auf identifizierten Extrempunkten.

Gemäß einem weiteren Aspekt der vorliegenden Erfindung kann aus einer Mittellinie und einer Fahrbahnranderkennung mit lokalen Krümmungen eine Straßenkarte konstruiert werden. Diese erkannte Straßenkarte kann beispielsweise mit einer Straßenkarte "viaMichelin" überlagert werden. Ferner können gemäß einem Ausführungsbeispiel beispielsweise ein Retina-Chip, ein Hough-Chip und/oder ein Smith-Waterman-Cip eingesetzt werden. Somit ergibt sich ein System, das im Hinblick auf eine Realzeitanwendung und im Hinblick auf ein Extrema-Verfahren besser als herkömmliche System ist.

Im Hinblick auf eine 3D-Modellierung sei im Übrigen darauf hingewiesen, dass diese ähnlich wie bei einem Wüstenrennen-Verfahren mit Stereo-Vision-Kameras erfolgen kann. Damit können 3D-Modelle rekonstruiert werden. Für Details diesbezüglich sei auf die Veröffentlichung "Orientierung fürs Auto, Neuer Stereo-Vision-Sensor bringt autonome Fahrzeuge sicher ans Ziel" (veröffentlicht: in inno Visions eins/2006, Fraunhofer Informations- und Kommunikationstechnik, Seite 22) verwiesen.

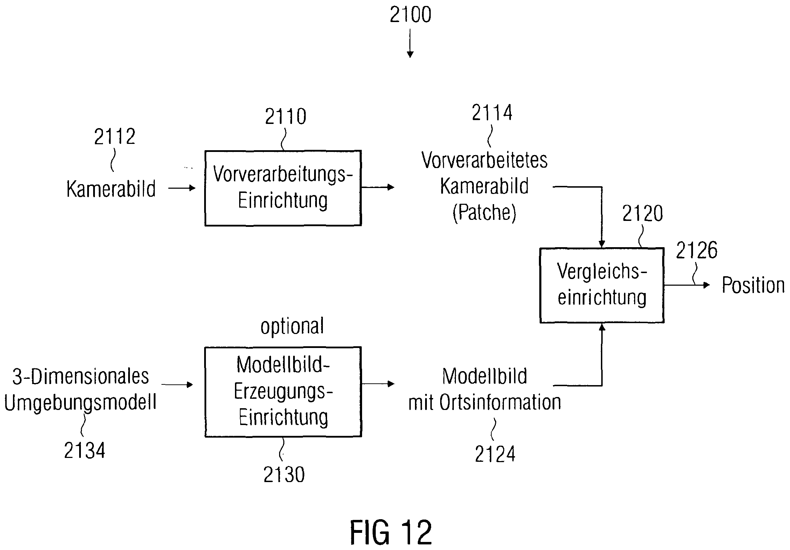

Im Folgenden wird ein weiteres Ausführungsbeispiel der vorliegenden Erfindung näher erläutert, das eigenständig oder in Kombination mit den oben beschriebenen Aspekten eingesetzt werden kann. Das entsprechende Ausführungsbeispiel wird anhand der Fig. 12 bis 16 näher erläutert.

Fig. 12 zeigt ein Blockschaltbild einer erfindungsgemäßen Vorrichtung zum Bestimmen einer Position basierend auf einem Kamerabild von einer Kamera. Die Vorrichtung gemäß Fig. 12 ist in ihrer Gesamtheit mit 2100 bezeichnet.

Die Vorrichtung 2100 umfasst eine Vorverarbeitungseinrichtung 2110, die ein Kamerabild 2112 empfängt. Die Vorverarbeitungseinrichtung 2110 ist ausgelegt, um aus dem Kamerabild 2112 ein vorverarbeitetes Kamerabild 2114 zu erzeugen. Die Vorrichtung 2100 umfasst ferner eine Vergleichseinrichtung 2120. Die Vergleichseinrichtung 2120 ist ausgelegt, um das vorverarbeitete Kamerabild 2114 sowie ein Modellbild 2124 zu empfangen. Die Vergleichseinrichtung 2120 ist ausgelegt, um basierend auf dem vorverarbeiteten Kamerabild 2114 und dem Modellbild 2124 eine Position 2126 zu bestimmen, von der aus das Kamerabild 2112 aufgenommen ist.

Im Hinblick auf das Modellbild 2124 ist festzuhalten, dass das Modellbild 2124 bevorzugt eine Darstellung einer Umgebung in Form einer Mehrzahl von einfarbigen Flächen umfasst. Das Modellbild 2124 umfasst ferner eine zugeordnete Ortsinformation.

Das Modellbild 2124 basiert im Übrigen typischerweise auf einem dreidimensionalen Umgebungsmodell, das eine Umgebung beispielsweise in Form einer Beschreibung einer Mehrzahl von geometrischen Objekten, in Form eines Netzes oder in Form einer anderen zur Beschreibung von dreidimensionalen Objekten geeigneten, computerlesbaren Darstellung beschreibt.

Die Vorrichtung 2100 umfasst optional eine Modellbild-Erzeugungseinrichtung 2130, die ausgelegt ist, um das Modellbild 2124 basierend auf einem dreidimensionalen Umgebungsmodell 2134 zu erzeugen.

Basierend auf der obigen strukturellen Beschreibung wird im Folgenden die Funktionsweise der erfindungsgemäßen Vorrichtung näher erläutert. Die Vorverarbeitungseinrichtung 2110 ist ausgelegt, um basierend auf dem Kamerabild 2112 das vorverarbeitete Kamerabild 2114 zu erzeugen, so dass in dem vorverarbeiteten Kamerabild 2114 zusammengehörige Bereiche des Kamerabildes 2112 durch zugehörige einfarbige ausgedehnte Flächen dargestellt sind. Unter zusammengehörigen Bereichen werden dabei Bereiche verstanden, die sich durch eine Berandung, beispielsweise in Form einer Kontur, in Form eines signifikanten Farbwechsels oder in Form eines signifikanten Helligkeitswechsels von einem umgebenden Bereich oder von einer Mehrzahl von umgebenden Bereichen abgrenzen. Mit anderen Worten, ein zusammenhängender Bereich ist eine Fläche, die durch eine Begrenzungslinie oder eine Berandung von den umgebenden Bereichen getrennt ist.

In anderen Worten, zusammengehörige Bereiche werden beispielsweise dadurch identifiziert, dass Konturen bzw. Berandungen von Flächen in dem Kamerabild erkannt werden, und dass durch die erkannten Konturen bzw. Berandungen begrenzte Flächen als zusammengehörige Bereiche gekennzeichnet werden. Entsprechend werden die identifizierten bzw. erkannten zusammengehörigen Bereiche in dem vorverarbeiteten Kamerabild durch einfarbige Flächen dargestellt.

Bei der Darstellung besteht eine Zuordnung zwischen Farben der Bereiche des Kamerabildes und Farben der zugehörigen einfarbigen Flächen in dem vorverarbeiteten Kamerabild. In anderen Worten, eine Entscheidung darüber, welche Farbe aus einer Mehrzahl von zumindest drei verwendeten Farben einer einfarbigen ausgedehnten Fläche in dem vorverarbeiteten Kamerabild zugewiesen wird, erfolgt unter Berücksichtigung der Farben, die in dem entsprechenden zusammengehörigen Bereich des Kamerabildes auftreten. In anderen Worten, eine Farbe der einfarbigen, ausgedehnten Flächen wird beispielsweise abhängig davon gewählt, welche Farbe der zugehörige Bereich des Kamerabilds im Mittel aufweist. Somit ist sichergestellt, dass Bereiche, die sich in dem Kamerabild 2112 farblich unterscheiden (bzw. farblich signifikant unterscheiden), in dem vorverarbeiteten Kamerabild 2114 durch verschiedenfarbige Flächen dargestellt sind.

Es sei hierbei darauf hingewiesen, dass typischerweise das vorverarbeitete Kamerabild 2114 weniger Farben als das Kamerabild 2112 umfasst. So wird typischerweise ein Bereich in einem Farbraum des Kamerabildes 2112 auf eine einzige Farbe in dem vorverarbeiteten Kamerabild 2114 abgebildet. In anderen Worten, berandete Flächen bzw. zusammengehörige Bereiche, die in dem Kamerabild 2112 eine leicht variierende Farbe aufweisen, werden in dem vorverarbeiteten Kamerabild 2114 als eine einfarbige ausgedehnte Fläche dargestellt. In dem vorverarbeiteten Kamerabild 2114 sind somit typischerweise nur solche Bereiche des Kamerabilds unterscheidbar, die in dem Kamerabild im Hinblick auf ihre Farbe einen Unterschied aufweisen, der signifikant (d.h. größer als ein vorgegebener Mindestunterschied) ist. Der Unterschied hinsichtlich der Farben kann beispielsweise als eine Entfernung in einem Farbenraum (beispielsweise in einem Rot-Grün-Blau-Farbenraum oder in einem anderen Farbenraum) definiert sein.

Unter einem signifikanten Farbunterschied wird im Übrigen ein Farbunterschied verstanden, der größer als ein vorgegebener minimaler Farbunterschied (betrachtet in einem beliebigen Farbenraum) ist. Unter einem signifikanten Helligkeitsunterschied wird im Übrigen ein Helligkeitsunterschied verstanden, der größer als ein vorgegebener minimaler Helligkeitsunterschied ist.

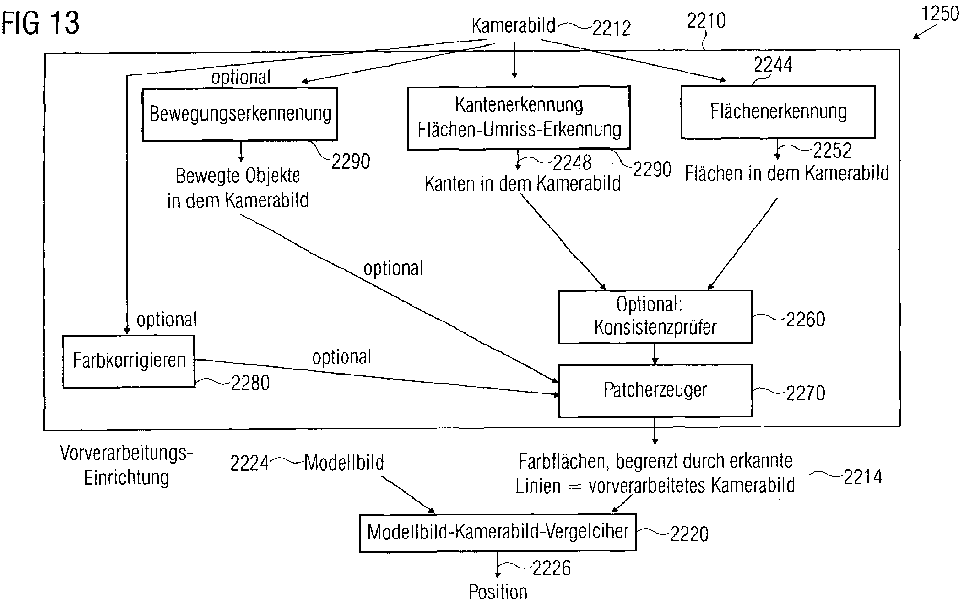

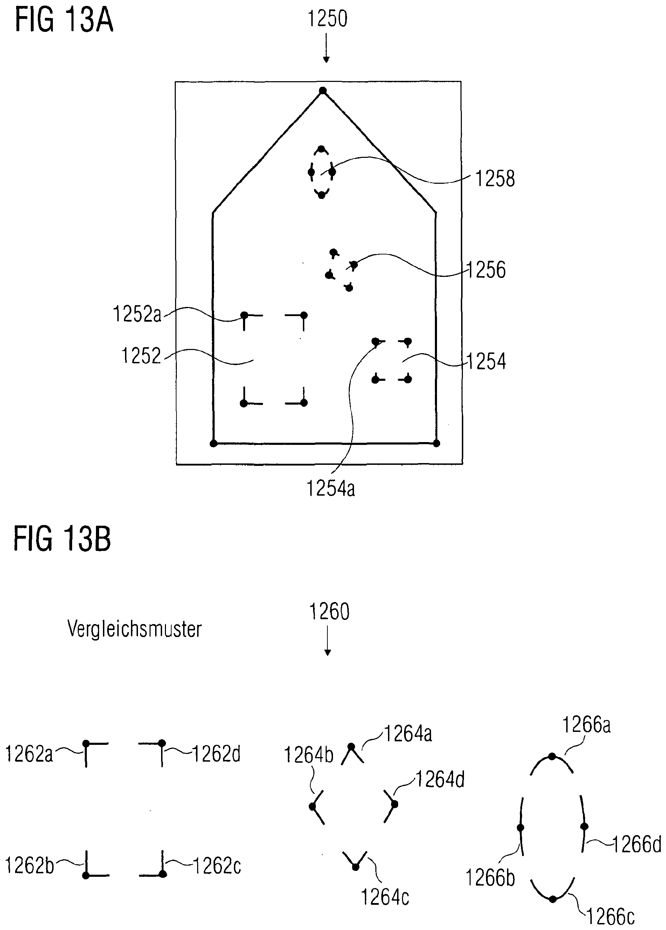

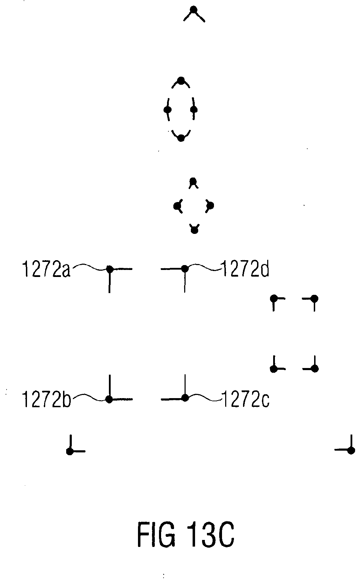

Fig. 13 zeigt ein Blockschaltbild einer erfindungsgemäßen Vorrichtung zur Bestimmung einer Position basierend auf einem Kamerabild. Die Vorrichtung gemäß der Fig. 13 ist in ihrer Gesamtheit mit 2200 bezeichnet. Die Vorrichtung 2200 umfasst eine Vorverarbeitungseinrichtung 2210, die ein Kamerabild 2212 empfängt. Die Vorverarbeitungseinrichtung 2210 liefert ein vorverarbeitetes Kamerabild 2214, wobei das vorverarbeitete Kamerabild 2214 eine Mehrzahl von Farbflächen umfasst, die durch erkannte Linien begrenzt werden. Die Vorrichtung 2200 umfasst ferner einen Modellbild-Kamerabild-Vergleicher 2220, der im Wesentlichen der Vergleichseinrichtung 2120 entspricht. Der Modellbild-Kamerabild-Vergleicher 2220 ist ausgelegt, um das vorverarbeitete Kamerabild 2214 sowie ein Modellbild 2224 zu empfangen, wobei das Modellbild 2224 im Wesentlichen dem Modellbild 2124 gemäß Fig. 12 entspricht, und wobei das vorverarbeitete Kamerabild 2214 im Wesentlichen dem vorverarbeiteten Kamerabild 2114 entspricht. Der Modellbild-Kamerabild-Vergleicher 2220 ist im Übrigen ausgelegt, um Informationen 2226 über eine Position, von der aus das Kamerabild 2212 aufgenommen wurde, zu liefern.

Im Folgenden wird auf Details im Hinblick auf die Vorverarbeitungseinrichtung 2210 eingegangen. Es sei hierbei darauf hingewiesen, dass die Vorverarbeitungseinrichtung 2210 ein Ausführungsbeispiel der vorliegenden Erfindung beschreibt, dass die Vorverarbeitungseinrichtung 2210 jedoch auch anders ausgebildet sein kann, so lange die anhand der Fig. 12 beschriebene Funktionalität erfüllt wird.

Die Vorverarbeitungseinrichtung 2210 dient im Wesentlichen dazu, um basierend auf dem Kamerabild 2212 das vorverarbeitete Kamerabild 2214 zu erzeugen, so dass in dem vorverarbeiteten Kamerabild 2214 zusammengehörige Bereiche in dem Kamerabild 2212 durch einfarbige Flächen dargestellt sind.

Ferner kann die Vorverarbeitungseinrichtung 2210 optional zusätzlich ausgelegt sein, um weitere Störeinflüsse, z. B. Bewegungen oder Farbverfälschungen, aus dem Kamerabild 2212 zu entfernen, um ein vorverarbeitetes Kamerabild 2214 zu erzeugen, in dem die genannten Störungen (z. B. Bewegungen und Farbverfälschungen) entfernt sind.

Die Vorverarbeitungseinrichtung 2200 umfasst beispielsweise eine Kantenerkennungseinrichtung 2240 sowie eine Flächenerkennungseinrichtung 2244. Die Kantenerkennungseinrichtung 2240 empfängt das Kamerabild 2212 und liefert eine Information 2248 über erkannte Kanten in dem Kamerabild 2212. Die Flächenerkennungseinrichtung 2244 ist bevorzugt ausgelegt, um das Kamerabild 2212 zu empfangen und eine Information 2252 über erkannte Flächen in dem Kamerabild 2212 zu liefern.

Die Vorverarbeitungseinrichtung 2210 umfasst ferner einen optionalen Konsistenzüberprüfer 2260, der, sofern er vorhanden ist, bevorzugt ausgelegt ist, um eine Konsistenz zwischen Informationen 2248 über erkannte Flanken und den Informationen 2252 über erkannte Flächen zu überprüfen. Beispielsweise kann der Konsistenzprüfer 2260 ausgelegt sein, um zu prüfen, ob die durch die Information 2248 beschriebenen erkannten Kanten die durch die Information 2252 beschriebenen erkannten Flächen begrenzen. Liegt Konsistenz vor, begrenzen also die erkannten Kanten die erkannten Flächen, leitet der Konsistenzprüfer bevorzugt die entsprechenden Informationen über die erkannten Kanten und/oder Flächen an einen Patcherzeuger 2270 weiter. Liegt hingegen keine Konsistenz vor, liegen also die erkannte Kanten (beschrieben durch die Information 2248) unzulässig weit (also weiter als ein vorgegebener Maximalabstand) von Kanten der erkannten Flächen (beschrieben durch die Information 2252) entfernt, so kann der Konsistenzüberprüfer 2260 beispielsweise Parameter des Kantenerkenners 2240 und/oder des Flächenerkenners 2244 verändern, um wieder eine Konsistenz zu erreichen.

Entfällt im Übrigen der Konsistenzprüfer 2260, so wird die Information 2248 über die erkannten Kanten in dem Kamerabild 2212 und/oder die Information 2252 über die erkannten Flächen in dem Kamerabild direkt dem Patcherzeuger 2270 zugeleitet.

Der Patcherzeuger 2270 erzeugt somit basierend auf den erkannten Kanten und/oder den erkannten Flächen eine Mehrzahl von zugehörigen einfarbigen, ausgedehnten Flächen, die in ihrer Gesamtheit das vorverarbeitete Kamerabild 2214 bilden.

Es sei hier darauf hingewiesen, dass der Kantenerkenner 2240 typischerweise ausgelegt ist, um eine Position von Kanten mit besonders hoher Präzision zu erkennen. In anderen Worten, der Kantenerkenner 2240 ist ausgelegt, um linienartige Konturen oder Farbübergänge zu erkennen, und um deren Lage zu beschreiben. Bei der Kantenerkennungseinrichtung 2240 kann es sich beispielsweise um die Verarbeitungseinrichtung handeln, die das Kamerabild einer Verarbeitung durch einen Kantenoperator unterzieht, so dass Kanten bzw. Farbübergänge oder Helligkeitsübergänge hervorgehoben oder betont werden.

Der Flächenerkenner 2244 hingegen ist bevorzugt ausgelegt, um Flächen zu erkennen, deren Farbwert und/oder Helligkeit nur langsam (beispielsweise um weniger als eine vorgegebene maximal zulässige Variation pro Längeneinheit) variiert. So kann der Flächenerkenner 2244 beispielsweise ausgelegt sein, um einen Bereich in dem Kamerabild zu erkennen bzw. zu markieren, in dem eine näherungsweise gleiche Farbe und/oder eine näherungsweise gleiche Helligkeit vorliegt. Dabei kann der Flächenerkenner 2244 beispielsweise lokale Störungen in dem zusammengehörigen Bereich (z. B. einzelne, andersfarbige Pixel, oder kleinere Gruppen von andersfarbigen Pixeln, die beispielsweise höchstens eine vorgegebene Maximalanzahl an andersfarbigen Pixeln aufweisen) in dem zusammengehörigen Bereich unterdrücken. Allerdings ist typischerweise der Flächenerkenner 2244 nicht in der Lage, Konturen bzw. äußere Begrenzungen von Flächen zu markieren.

Aus diesem Grund ist der Patcherzeuger 2270 bei einem bevorzugten Ausführungsbeispiel ausgelegt, um die Information 2248 von dem Kantenerkenner 2240 mit der Information 2252 von dem Flächenerkenner 2244 zu kombinieren. Der Patcherzeuger 2270 ist somit beispielsweise ausgelegt, um basierend auf den genannten Informationen 2248, 2252 zu entscheiden, welche durch den Kantenerkenner 2240 erkannten Kanten in der Nähe einer Berandung einer durch den Flächenerkenner 2244 erkannten Fläche liegen. In anderen Worten, der Patcherzeuger 2270 ist beispielsweise ausgelegt, um zu prüfen, wie weit die verschiedenen durch den Kantenerkenner 2240 erkannten Kanten von einer durch den Flächenerkenner 2244 erkannten Fläche entfernt sind, und um basierend darauf (bzw. in Abhängigkeit davon) die erkannten Kanten als Berandung der erkannten Flächen zu erkennen.

Ist beispielsweise ein Abstand einer erkannten Kante von einer durch den Flächenerkenner 2244 erkannten Fläche kleiner als ein vorgegebener maximaler Abstand, so kann der Patcherzeuger 2270 beispielsweise die erkannte Kante als eine Kante klassifizieren, die die durch den Flächenerkenner 2244 erkannte Fläche berandet.

Hat der Patcherzeuger 2270 alle Kanten erkannt, die eine betrachtete, durch den Flächenerkenner 2244 erkannte Fläche beranden, so kann der Patcherzeuger die durch die erkannten Kanten eingeschlossene Fläche als eine einfarbige, ausgedehnte Fläche darstellen, die der betrachteten, durch den Flächenerkenner 2244 erkannten Fläche zugeordnet ist. Der Patcherzeuger 2270 kann somit die erkannte zusammengehörige ausgedehnte Fläche mit einer Farbe füllen, so dass eine Zuordnung zwischen der Farbe des zusammengehörigen Bereichs in dem Kamerabild und der zugeordneten einfarbigen, ausgedehnten Farbfläche in dem vorverarbeiteten Kamerabild 2214 besteht.

Im Folgenden werden Details im Hinblick auf eine Kantenerkennung beschrieben. Für eine Kantenerkennung kann beispielsweise eine Retina-Vorverarbeitung bzw. eine retinotope Bildvorverarbeitung eingesetzt werden. So kann beispielsweise ein "OnEdge"-Bildraum bestimmt werden, in dem im Wesentlichen Kanten hervorgehoben sind. Eine derartige Retinotope-Vorverarbeitung ist beispielsweise anhand der Veröffentlichung "Receptive Field Atlas of the Retinotopic visual pathway and some other sensory organs using dynamic cellular neural network models" von J. Hámori und T. Roska (veröffentlicht von: "Analogical and neural computing laboratory, computer and automation institute, Hungarian Academy of Sciences") leicht verständlich. Weitere Details im Hinblick auf eine retinotope Verarbeitung und insbesondere im Hinblick auf eine retinotope Kantenerkennung ("a local edge detector") sind in dem Artikel "Functional representations of retina channels via the RefineC retina simulator" von A. K. Läzär, R. Wagner, D. Bálya und T. Roska beschrieben. Weitere Details im Hinblick auf die retinotope Verarbeitung finden sich im Übrigen auch in den Literaturverweisen der zitierten Veröffentlichungen.

Im Übrigen sei darauf hingewiesen, dass eine Kantenerkennung beispielsweise durch Bildung einer Differenz (oder eines Gradienten) von Farbwerten und/oder Helligkeitswerten zweier benachbarter Bildpunkte erhalten werden kann. In anderen Worten, es wird beispielsweise ein lokaler Gradient von Farbwerten und/oder Helligkeitswerten zweier oder mehrerer benachbarter Bildpunkte gebildet, um eine Kante zu erkennen. Weist der Gradient einen Wert auf, der (beispielsweise betragsmäßig) größer als eine vorbestimmte Schwelle ist, so kann dies beispielsweise als ein lokales Anzeichen für das Vorliegen einer Kante gewertet werden.

Bei dem bevorzugten Ausführungsbeispiel wird durch die Kantenerkennungseinrichtung 2240 eine Kante nur dann erkannt, wenn eine Mehrzahl von (bzw. zumindest eine vorgegebene Mindestanzahl von) Orten, an denen ein entsprechender, großer Gradient der Farbwerte und/oder der Helligkeitswerte erkannt wurde, auf einer (geraden oder gekrümmten) Linie liegen. Eine derartige Erkennung ist beispielsweise mit Mitteln der Mustererkennung möglich.

Im Folgenden wird eine besonders vorteilhafte, beispielhafte Vorgehensweise bei einer Kantenerkennung beschrieben.

Bei der entsprechenden Vorgehensweise werden beispielsweise zunächst Extrempunkte konvex oder konkav gekrümmter Flächen oder Bereiche in dem Kamerabild bestimmt. Zu diesem Zweck wird beispielsweise zunächst ein Kantenbild basierend auf dem Kamerabild erzeugt, wobei das Kantenbild Kanten bzw. Umrandungen von Flächen in dem Kamerabild beschreibt. Das Kantenbild liegt beispielsweise in Form von Rasterzeilen und Rasterspalten, also als ein Bitmap, vor. Auf das Kantenbild wird daraufhin beispielsweise ein Ellipsenerkennungsalgorithmus angewendet.

Ein Verfahren zur Ellipsenerkennung ist beispielsweise in dem Artikel "A high-speed-algorithm for elliptical object detection"von C.-T. Ho und L.-H. Chen (veröffentlicht in: IEEE transactions on image processing, volume 5, number 3, March 1996, Seiten 547 - 550) beschrieben. Ein weiteres besonders vorteilhaftes Verfahren zur Erkennung von Ellipsen in einem Bild unter Verwendung einer Hough-Transformation ist ferner in der nicht-vorveröffentlichten deutschen Patentanmeldung mit dem amtlichen Aktenzeichen 102005047160 beschrieben.

In anderen Worten, mit einem der bekannten Verfahren zur Ellipsenerkennung, bevorzugt aber unter Verwendung einer Hough-Transformation bzw. unter Verwendung eines Hubel-Wiesel-Netzwerks, werden aus dem Kantenbild Extremwerte oder Extrempunkte von gekrümmten Linien extrahiert. In anderen Worten, es werden Punkte eines Linienzugs erkannt, die in dem Linienzug am weitesten in einer vorgegebenen Richtung gelegen sind. Die erkannten Punkte bilden somit Extrempunkte einer gekrümmten Linie. Ferner können in dem Kantenbild durch geeignete Mustererkennungsalgorithmen (bevorzugt unter Verwendung einer Hough-Transformation bzw. eines Hubel-Wiesel-Netzwerks) Knickpunkte von Linienverläufen erkannt werden. Zu diesem Zweck werden beispielsweise in dem Kantenbild Linienverläufe gesucht bzw. identifiziert, die eine maximale Übereinstimmung mit einem vorgegebenen, geknickten Kurvenverlauf aufweisen.

Fig. 13A zeigt zur Verdeutlichung ein Beispiel für ein Kantenbild mit markierten Extrempunkten und Knickpunkten, und Fig. 13B zeigt eine beispielhafte Auswahl von Vergleichsmustern zur Erkennung von Knickpunkten und Extrempunkten im Rahmen einer Bildverarbeitung.

Die graphische Darstellung der Fig. 13A ist im Übrigen in ihrer Gesamtheit mit 1250 bezeichnet, während hingegen die graphische Darstellung der Fig. 13B in ihrer Gesamtheit mit 1260 bezeichnet ist. Die graphische Darstellung 1250 zeigt ein beispielhaftes Kantenbild. Erkannte Extrempunkte oder Knickpunkte sind dabei durch einen geschwärzten Kreis dargestellt. Aus der graphischen Darstellung der Fig. 13A ist ersichtlich, dass insbesondere Eckpunkte von gerade oder schräg in dem Kantenbild liegenden Quadraten oder Rechtecken als Knickpunkte markiert sind. Diesbezüglich wird beispielsweise auf die Quadrate bzw. Rechtecke 1252, 1254, 1256 verwiesen. Ebenso sind Extrempunkte von Ellipsen, also Ellipsenpunkte, die am weitesten in einer ersten Richtung oder am weitesten in einer ersten Richtung entgegengesetzten Richtung der Ellipse gelegen sind, als Extrempunkte markiert. Ferner sind auch Ellipsenpunkte, die am weitesten in einer zweiten Richtung der Ellipse gelegen sind, sowie am weitesten in einer der zweiten Richtung entgegengesetzten Richtung gelegene Punkte der Ellipse als Extrempunkte markiert. Die erste Richtung ist dabei bevorzugt unterschiedlich von der zweiten Richtung (und bevorzugt ist die erste Richtung senkrecht zu der zweiten Richtung). Zur Veranschaulichung sei auf die Ellipse 1258 verwiesen.

Die Erkennung der genannten Extrempunkte bzw. Knickpunkte kann beispielsweise erfolgen, indem in dem Kantenbild gemäß der Fig. 13A nach bestimmten, vorgegebenen Mustern bzw. Vergleichsmustern gesucht wird, wobei bevorzugt jedem Vergleichsmuster ein Knickpunkt oder Extrempunkt zugeordnet ist.

Die Zuordnung zwischen Vergleichsmustern und Extrempunkten ist beispielsweise in der graphischen Darstellung 1260 der Fig. 13B gezeigt, wobei die Vergleichsmuster 1262a bis 1262d, 1264a bis 1264d, 1266a bis 1266d jeweils einen zugeordneten (durch einen schwarzen Kreis gekennzeichneten) Extrempunkt aufweisen. In anderen Worten, wird beispielsweise das Muster 1262a, das für sich genommen lediglich aus einem geknickten Liniensegment besteht, in dem Kantenbild 1250 erkannt, so kann aus dem Vorhandensein des Musters 1262a in dem Kantenbild der zugehörige Knickpunkt mit hoher Genauigkeit bestimmt werden. Beispielsweise wurden in dem Kantenbild 1250 Knickpunkte 1252a und 1254a durch die Erkennung des Vergleichsmusters 1262a bestimmt.

Somit liegt nach der Erkennung der Extrempunkte bzw. Knickpunkte eine Information über eine Menge von Extrempunkten bzw. Knickpunkten vor. Ferner liegt bei dem bevorzugten Ausführungsbeispiel eine Information darüber vor, um welche Arten von Extrempunkten bzw. Knickpunkten es sich handelt.

Ein entsprechendes Bild von Extrempunkten bzw. Knickpunkten ist beispielsweise in der Fig. 13C gezeigt. In der graphischen Darstellung der Fig. 13C sind beispielsweise Extrempunkte und Knickpunkte durch schwarze Punkte gekennzeichnet, wobei ein Typ der Extrempunkte bzw. Knickpunkte in der graphischen Darstellung der Fig. 13C gekennzeichnet ist.

Bei einem bevorzugten Ausführungsbeispiel der vorliegenden Erfindung werden basierend auf den erkannten Extrempunkten bzw. Knickpunkten die geometrischen Formen rekonstruiert, zu denen die Extrempunkte bzw. Knickpunkte gehören. So können beispielsweise durch die Extrempunkte bzw. Knickpunkte mit Hilfe eines Anpassungsverfahrens oder eines Fitting-Verfahrens zugehörige geometrische Formen identifiziert werden. Beispielsweise kann erkannt werden, dass vier Knickpunkte 1272a, 1272b, 1272c, 1272d ein Rechteck definieren. Entsprechend können aus der Lage der Knickpunkte 1272a, 1272b, 1272c, 1272d Lagekoordinaten des entsprechenden Rechtecks bestimmt werden, so dass beispielsweise ein quadratischer Fehler minimiert wird. In anderen Worten, es kann ein Rechteck identifiziert werden, das am besten an die vier Knickpunkte 1272a, 1272b, 1272c, 1272d angepasst ist. In ähnlicher Weise können auch Lageparameter und/oder Formparameter und/oder Größen-Parameter von Ellipsen bestimmt werden, zu denen die oben beschriebenen Extrempunkte gehören.

Insgesamt lässt sich somit festhalten, dass gemäß einem Ausführungsbeispiel der vorliegenden Erfindung in dem Kamerabild geometrische Objekte (z. B. Kreise, Ellipsen, Quadrate, Rechtecke, Dreiecke, Trapeze oder Parallelogramme) identifiziert werden, die zusammengehörige Bereiche in dem Kamerabild begrenzen.

Die identifizierten geometrischen Objekte werden im Übrigen anschließend als Berandungen der einfarbigen Flächen in dem vorverarbeiteten Kamerabild verwendet.

In anderen Worten, durch die erkannten Extrempunkte oder Knickpunkte werden beispielsweise linienförmige Abschnitte wie z. B. vertikale Linien, horizontale Linien, konvexe Kreisbogenabschnitte oder konkave Kreisbogenabschnitte ermittelt, die als Teil der Berandungen der einfarbigen Flächen in dem vorverarbeiteten Kamerabild herangezogen werden können.

Es sei im Übrigen darauf hingewiesen, dass die unter Verwendung von Knickpunkten und/oder Extrempunkten bestimmten geometrischen Objekte (z. B. Kreise, Ellipsen, Quadrate, Rechtecke, Dreiecke, Trapeze oder Parallelogramme) als ausgefüllte Flächen angesehen werden können, so dass die erkannten Objekte als einfarbig ausgefüllte Flächen dem vorverarbeiteten Kamerabild hinzugefügt werden. Die Verarbeitung kann dabei sowohl eigenständig (also durch eine direkte Erzeugung der genannten Flächen aufgrund der erkannten geometrischen Objekte) als auch in Verbindung mit einer Flächenerkennung (z. B. durch den Flächenerkenner 2244 gemäß der Fig. 13) erfolgen.

Eine direkte Bestimmung von einfarbig ausgefüllten Flächen kann durch Identifikation von Knickpunkten oder Extrempunkten und durch Anpassung der geometrischen Objekte (bzw. von Lageparametern, Formparametern und/oder Größenparametern derselben) an die identifizierten Knickpunkte oder Extrempunkte erfolgen, wie dies bereits oben beschrieben wurde. Alternativ dazu kann die Erkennung der geometrischen Objekte lediglich für eine Kantenerkennung (beispielsweise die Kantenerkennung durch den Kantenerkenner 2240) verwendet werden. In anderen Worten, in dem genannten Fall können die erkannten geometrischen Objekte lediglich als Umrisse bzw. Kanten interpretiert werden. Eine Bestimmung der tatsächlichen Farbflächen durch den Patcherzeuger 2270 kann dann durch Kombination der Information 2248 des Kantenerkenners 2240 (also der Kanten der identifizierten geometrischen Objekte) mit der Information 2252 des Flächenerkenners 2244 (also der Information über erkannte Flächen) erfolgen. Dabei kann der optionale Konsistenzprüfer 2260 zum Einsatz kommen, wie dies bereits oben beschrieben wurde.

Weiterhin wird es bevorzugt, für die Erzeugung der Farbflächen in dem vorverarbeiteten Kamerabild 2214 eine durch einen Farbkorrigierer gelieferte Information heranzuziehen. Der optionale Farbkorrigierer ist in der graphischen Darstellung 2200 gemäß der Fig. 13 mit 2280 bezeichnet.

Der Farbkorrigierer 2280 ist bevorzugt ausgelegt, um Farben in dem Kamerabild zu korrigieren, so dass beispielsweise die Farben in dem vorverarbeiteten Kamerabild von einer Beleuchtungssituation, wie sie bei der Aufnahme des Kamerabilds vorhanden ist, im Wesentlichen unabhängig sind. Beispielsweise wird es bevorzugt, dass die Farbwerte in dem Kamerabild (durch den Farbkorrigierer) so verarbeitet werden, dass die Farbwerte in dem vorverarbeiteten Kamerabild Farbwerten entsprechen, wie sie von einem Menschen wahrgenommen würden.

Details im Hinblick auf eine menschliche Farbwahrnehmung kann beispielsweise aus dem Artikel "How does the Cortex construct color?" von Vincent Walsh (veröffentlicht in: Proceedings of the National Academy of Sciences of the United States of America, vol. 96, no. 24, Seiten 13594 - 13596, November 23, 1999) beschrieben.

In anderen Worten, Farbwerte in dem Kamerabild werden auf Farbwerte in dem vorverarbeiteten Kamerabild gemäß einer Abbildungsvorschrift abgebildet. Dabei werden beispielsweise verschiedene Farben in dem Kamerabild, die von einem Menschen als gleich wahrgenommen würden, auf die gleiche Farbe in dem vorverarbeiteten Kamerabild abgebildet.

Alternativ oder zusätzlich findet in dem Farbkorrigierer 2280 eine Farbkorrektur unter Verwendung des Plank schen Strahlungsgesetzes statt. Zu diesem Zweck wird beispielsweise bestimmt, welche Farbtemperatur eine Beleuchtung aufweist. In anderen Worten, es kann aus dem Kamerabild extrahiert werden, bei welcher Farbtemperatur der Beleuchtung dieses aufgenommen wurde. Ist beispielsweise bekannt, dass eine bestimmte in dem Kamerabild dargestellte Fläche eine bestimmte Farbe (z. B. Weiß) aufweist, und so kann ermittelt werden, welche Farbtemperatur die vorliegende Beleuchtung aufweist. Basierend auf der Farbtemperatur der Beleuchtung kann sodann das Kamerabild umgerechnet bzw. auf die vorgegebene Farbtemperatur kalibriert bzw. umgerechnet werden. Ist nämlich eine Farbtemperatur der Beleuchtung bekannt, so ist eine spektrale Verteilung des einfallenden Lichts bekannt. Ferner ist eine spektrale Verteilung bei der vorgegebenen Ziel-Farbtemperatur bekannt. Durch eine Quotientenbildung kann bestimmt werden, wie stark die verschiedenen Farbanteile in dem Kamerabild verändert werden müssen, so dass das Kamerabild so erscheint, als ob es bei der vorbestimmten Ziel-Farbtemperatur bzw. Einheits-Farbtemperatur aufgenommen worden wäre.

In anderen Worten, das Kamerabild wird bei Kenntnis einer tatsächlichen Farbtemperatur, bei der das Kamerabild aufgenommen worden ist, und der Ziel-Farbtemperatur so umgerechnet, als ob es bei der Ziel-Farbtemperatur aufgenommen worden wäre.

Somit steht eine korrigierte Farbinformation über das Kamerabild 2212 zur Verfügung, die an den Patcherzeuger 2270 weitergegeben wird. Der Patcherzeuger 2270 ist daher ausgelegt, um die korrigierte Farbinformation von dem Farbkorrigierer 2280 zu empfangen, und um die Farbflächen in dem vorverarbeiteten Kamerabild basierend auf der korrigierten Farbinformation zu färben, wobei freilich jeder einzelnen Farbfläche nur eine einzige Farbe zugewiesen wird.

Im Folgenden wird beschrieben, wie in der Vorverarbeitungseinrichtung 2210 optional bewegte Elemente unterdrückt werden können. Zu diesem Zweck umfasst die Vorverarbeitungseinrichtung 2210 einen optionalen Bewegungserkenner 2290. Der Bewegungserkenner 2290 ist ausgelegt, um das Kamerabild 2212 zu empfangen, und um bewegte Objekte in dem Kamerabild zu erkennen. Der Bewegungserkenner 2290 ist daher ausgelegt, um an den Patcherzeuger 2270 eine optionale Information 2292 über bewegte Objekte in dem Kamerabild zu liefern.

Bei einem alternativen Ausführungsbeispiel kann der Bewegungserkenner 2290 auch dem Kantenerkenner 2240 und/oder dem Flächenerkenner 2244 vorgeschaltet sein. Das heißt, der Bewegungserkenner 2290 empfängt in dem genannten alternativen Fall das Kamerabild 2212 und erstellt basierend darauf ein bewegungs-bereinigtes Kamerabild, das er beispielsweise dem Kantenerkenner 2240 und dem Flächenerkenner 2244 zur Verfügung stellt. In diesem Fall empfangen der Kantenerkenner 2240 und der Flächenerkenner 2244 also nicht mehr das ursprüngliche Kamerabild, sondern ein bewegungskompensiertes bzw. bewegungs-bereinigtes Kamerabild.

Im Folgenden wird die Funktionsweise des optionalen Bewegungserkenners beschrieben. Es sei darauf hingewiesen, dass der Bewegungserkenner alternativ oder zusammen im Wesentlichen zwei Typen von Bewegungen in dem Kamerabild 2212 erkennen kann.

Zum besseren Verständnis werden hier kurz verschiedene Szenarien erläutert, unter denen das Kamerabild 2212 aufgenommen werden kann. In einem ersten Szenario wird davon ausgegangen, dass die Kamera, die das Kamerabild 2212 aufnimmt, (zumindest näherungsweise) stationär ist. Es werde hier zur Veranschaulichung davon ausgegangen, dass das Kamerabild beispielsweise eine städtische oder ländliche Landschaft darstellt, die beispielsweise Straßen, Häuser, Bäume sowie Autos und Fußgänger zeigt. Hierbei kann davon ausgegangen werden, dass die Straßen und die Häuser zu einem stationären, unveränderlichen Bild führen, da diese sich in dem ersten Szenario bezüglich der Kamera nicht bewegen. Auf der anderen Seite bewegen sich beispielsweise Fußgänger und Autos durch das Kamerabild 2212. Ferner kann beispielsweise das Laub der Bäume durch einen Wind bewegt werden, so dass auch hier ein bewegter Bildeindruck entsteht.

Im Übrigen kann ein zweites Szenario angenommen werden, indem das Kamerabild beispielsweise durch eine Kamera aus einem Fahrzeug heraus aufgenommen wird. In diesem Fall bewegen sich alle Objekte relativ zu der Kamera, die sich nicht mit der gleichen Geschwindigkeit (nach Betrag und Richtung) wie das Fahrzeug bewegen. Je weiter ein Objekt von der Kamera entfernt ist, desto geringer ist die wahrnehmbare Bewegung in dem Kamerabild. In anderen Worten, auch bei einer Aufnahme aus einem bewegten Fahrzeug heraus erscheinen relativ weit entfernte Objekte als /(zumindest näherungsweise) stationär, während hingegen sich näher bei dem Fahrzeug befindliche Objekte schneller durch das Kamerabild bewegen. Auf der anderen Seite bewegen sich Objekte, die sich mit gleicher Geschwindigkeit wie das Fahrzeug bewegen (z.B. vorausfahrende Fahrzeuge), in dem Kamerabild nicht bzw. nur wenig.

Diesbezüglich sei darauf hingewiesen, dass für eine Positionsbestimmung im Wesentlichen die räumlich unbeweglichen Merkmale (also beispielsweise Gebäude und Straßen, sowie natürliche feste Objekte, wie z. B. Bäume oder Berge) von Bedeutung sind. Bewegliche Objekte hingegen (z. B. andere Fahrzeuge oder Personen) sind dagegen für die Positionsbestimmung von untergeordneter Bedeutung oder sogar störend.

Somit ist die Aufgabe des Bewegungserkenners 2290, aus dem Kamerabild solche Objekte zu entfernen, die gegenüber einem festen Bezugspunkt in dem Kamerabild eine Relativbewegung aufweisen.

Zu diesem Zweck ist der Bewegungserkenner gemäß einem Ausführungsbeispiel der vorliegenden Erfindung ausgelegt, um einen räumlich festen Bezugspunkt in dem Kamerabild zu identifizieren, und um ferner in dem Kamerabild 2212 bewegte Objekte zu identifizieren, die sich relativ zu dem festen Bezugspunkt bewegen. Ferner ist der Bewegungserkenner 2290 ausgelegt, um die bewegten Objekte zu markieren, und um an den Patcherzeuger 2270 eine Information zu liefern, die anzeigt, dass die bewegten Objekte aus dem vorverarbeiteten Kamerabild 2214 entfernt werden sollen, oder um basierend auf dem Kamerabild 2212 direkt ein Bewegungs-bereinigtes Kamerabild zu erzeugen, in dem die (relativ zu dem festen Bezugspunkt) bewegten Objekte entfernt sind.

Zu diesem Zweck kann der Bewegungserkenner 2290 beispielsweise ausgelegt sein, um basierend auf einer Größe eines bewegten Objekts und/oder basierend auf einer Geschwindigkeit des Abbilds des bewegten Objekts in dem Kamerabild zu bestimmen, ob das bewegte Objekt in dem Kamerabild sich relativ zu einem festen Bezugspunkt in dem Kamerabild bewegt. Wird eine Relativbewegung des bewegten Objekts im Hinblick auf den festen Bezugspunkt festgestellt, so wird das bewegte Objekt für eine Entfernung aus dem vorverarbeiteten Kamerabild markiert oder direkt entfernt.

Es sei im Übrigen darauf hingewiesen, dass eine Bewegung eines bewegten Objekts nicht nur durch eine Bewegung eines Mittelpunkts des bewegten Objekts erkannt werden kann, sondern beispielsweise auch durch eine zeitliche Veränderung der Größe des bewegten Objekts. Kommt beispielsweise einem Fahrzeug frontal ein anderes Fahrzeug entgegen, so wird das Abbild des entgegenkommenden Fahrzeugs in dem Kamerabild 2212 im Laufe der Zeit immer größer, während hingegen eine Position des Abbilds des entgegenkommenden Fahrzeugs (beispielsweise definiert durch einen Mittelpunkt des Abbilds) sich nur geringfügig verändert. Eine Bewegung ist dennoch beispielsweise durch eine Bewegung der Kanten, die das bewegte Objekt begrenzen, ersichtlich.

Im Übrigen sei darauf hingewiesen, dass beispielsweise die Tatsache, dass sich ein Objekt (z. B. ein vorausfahrendes Fahrzeug) mit der gleichen Geschwindigkeit bewegt wie die Kamera, darin wiederspiegeln kann, dass das Objekt in dem Kamerabild (z. B. näherungsweise) unverändert bzw. zeitlich konstant dargestellt wird. Empfängt beispielsweise der Bewegungserkenner 2290 eine Information darüber, wie schnell sich die Kamera, die das Kamerabild aufnimmt, bewegt, so kann der Bewegungserkenner 2290 beispielsweise feststellen, dass ein Objekt, dessen Darstellung sich in dem Kamerabild nicht oder nur geringfügig (weniger als eine vorgegebene obere Schranke) mit der Zeit verändert, sich mit der Kamera bewegt. In diesem Fall kann der Bewegungserkenner 2290 ausgelegt sein, um Objekte aus dem Kamerabild zu entfernen oder für eine Entfernung aus dem vorverarbeiteten Kamerabild zu markieren, deren Abbild (bzw. deren Kanten) in dem Kamerabild 2212 zeitlich unverändert ist (bzw. zeitlich unverändert sind).

Es sei darauf hingewiesen, dass der Bewegungserkenner 2290 auf vielerlei Art und Weise eine Information darüber erhalten kann, wie schnell sich die Kamera, die das Kamerabild 2212 aufnimmt, bewegt. Beispielsweise kann der Bewegungserkenner 2290 eine Information über eine Relativbewegung eines Fahrzeugs (relativ zu einer Straße) erhalten, wenn beispielsweise die Kamera in oder an einem Fahrzeug montiert ist.

Allgemein gesprochen ist festzuhalten, dass der Bewegungserkenner 2290 von einem beliebigen Positionsbestimmungssystem (beispielsweise von einem GPS-Positionsbestimmungssystem) eine Information darüber erhalten kann, wie schnell sich die Kamera, die das Kamerabild 2212 aufnimmt, relativ zu einem Erd-festen Koordinatensystem (also einem Koordinatensystem, das fest mit der Erde gekoppelt ist) bewegt.

Alternativ dazu kann der Bewegungserkenner 2290 auch in dem Kamerabild 2212 ein Referenzobjekt identifizieren, von dem bekannt ist, dass dieses ein festes Referenzobjekt darstellt. Aus einer Bewegung des Abbilds des Referenzobjekts in dem Kamerabild 2212 kann der Bewegungserkenner 2290 dann eine Bewegung der Kamera, die das Kamerabild 2212 aufnimmt, ermitteln.

Alternativ oder zusätzlich kann der Bewegungserkenner 2290 im Übrigen beispielsweise aus einem Abbild einer Straße ermitteln, wie schnell bzw. in welche Richtung sich die Kamera, die das Kamerabild 2212 aufnimmt, bewegt.

Zusammenfassend lässt sich ganz allgemein festhalten, dass der Bewegungserkenner 2290 gemäß einem Ausführungsbeispiel der vorliegenden Erfindung ausgelegt ist, um solche Objekte aus dem vorverarbeiteten Kamerabild 2214 zu entfernen (bzw. entsprechende, eine Entfernung bewirkende Signale an den Patcherzeuger 2270 zu liefern) die sich im Hinblick auf einen festen (typischerweise erd-festen) Bezugspunkt bewegen.

Bei einem weiteren Ausführungsbeispiel der vorliegenden Erfindung ist der Bewegungserkenner 2290 zusätzlich oder alternativ ausgelegt, um Objekte aus dem vorverarbeiteten Kamerabild 2214 zu entfernen, die sich in dem Kamerabild 2212 besonders schnell (also schneller als mit einer vorgegebenen Maximalgeschwindigkeit) bewegen. Bei solchen Objekten kann es sich beispielsweise um Objekte handeln, die besonders nahe bei der Kamera gelegen sind. Die entsprechenden Objekte, die (beispielsweise bezogen auf das Kamerabild) eine besonders schnelle Bewegung (schneller als eine vorgegebenen Maximalgeschwindigkeit) aufweisen, können typischerweise für eine zuverlässige Positionsbestimmung nicht eingesetzt werden, da diese beispielsweise in vielen Fällen nicht scharf aufgenommen werden können. Als Beispiel sei hier ein Objekt (z.B. ein Gebäude oder ein Baum) angegeben, das sich in direkter Nähe zu einer Straße befindet. Je näher ein Objekt einer sich bewegenden Kamera kommt, desto schneller bewegt sich ein Abbild des Objekts durch das Kamerabild. Das Objekt ist nicht mehr scharf erkennbar, sobald es sich der Kamera zu sehr genähert hat.

Somit ist gemäß einem Ausführungsbeispiel der vorliegenden Erfindung der Bewegungserkenner 2290 ausgelegt, um in dem Kamerabild 2212 Objekte zu erkennen, die sich schneller als mit einer vorgegebenen maximalen Geschwindigkeit (durch das Kamerabild) bewegen. Der Bewegungserkenner 2290 ist ferner ausgelegt, um diese Objekte zur Entfernung aus dem Kamerabild zu markieren, so dass insgesamt ein vorverarbeitetes Kamerabild 2214 entsteht, aus dem Objekte, die sich in dem Kamerabild 2212 schneller als mit einer vorgegebenen maximalen Geschwindigkeit bewegen, entfernt sind.

Es sei hierbei darauf hingewiesen, dass unter der Geschwindigkeit der Bewegung in dem Kamerabild beispielsweise eine Geschwindigkeit in Bildpunkten pro Kamerabild verstanden wird, mit der sich ein Objekte in dem Kamerabild bewegt. Es kann beispielsweise festgelegt werden, dass Objekte, die sich schneller als einen Bildpunkt pro Kamerabild bewegen, aus dem vorverarbeiteten Kamerabild 2214 entfernt werden, da deren Positionsinformation ungenau ist. Es kann aber auch ein anderer Schwellenwert bzw. Grenzwert für eine Bewegungsgeschwindigkeit gewählt werden.

Ferner sei darauf hingewiesen, dass ein Entfernen eines Objekts aus dem vorverarbeiteten Kamerabild 2214 ein Ersetzen des entfernten Objekts durch einen einfarbigen Bereich umfassen kann. Die Farbe des einfarbigen Bereichs kann beispielsweise entweder vorgegeben sein (so dass alle Objekte, die sich schneller als mit der vorgegebenen maximalen Geschwindigkeit in dem Kamerabild 2212 bewegen, durch eine Fläche bzw. durch mehrere Flächen mit einer vorgegebenen Farbe ersetzt werden), oder die Farbe der Fläche, durch die das schnell bewegte Objekt ersetzt wird, kann dynamisch gewählt werden. Wird beispielsweise in einem Kamerabild 2212 ein Bereich erkannt, in dem sich Objekte schnell (schneller als die vorgegebene maximale Geschwindigkeit) bewegen, so kann beispielsweise eine mittlere Farbe des genannten Bereichs bestimmt werden, und der genannte Bereich kann durch eine einfarbige Fläche der mittleren Farbe ersetzt werden.

Im Folgenden wird noch beschrieben, wie das Modellbild erzeugt wird. Diesbezüglich sei vorausgeschickt, dass das Modellbild entweder innerhalb der erfindungsgemäßen Vorrichtung oder auch extern von der erfindungsgemäßen Vorrichtung erzeugt werden kann. Es sei hierbei darauf hingewiesen, dass somit die erfindungsgemäße Vorrichtung optional eine Modellbild-Erzeugungsvorrichtung 2130 umfassen kann, die ausgelegt ist, um das Modellbild 2124, 2224 zu erzeugen.

Es sei hierbei darauf hingewiesen, dass die vorliegende Erfindung aber auch eine separate Modellbild-Erzeugungsvorrichtung umfasst, die ausgelegt ist, um in einem Positionsbestimmungssystem eingesetzt zu werden.

Unabhängig davon, ob der Modellbild-Erzeuger Teil einer erfindungsgemäße Vorrichtung ist oder nicht, ist der Modellbild-Erzeuger bevorzugt ausgelegt, um ein dreidimensionales Modell einer Umgebung zu umfassen. Mit anderen Worten, der Modellbild-Erzeuger umfasst beispielsweise eine Datenbank oder eine anderweitige Beschreibung der Umgebung. Die Beschreibung kann beispielsweise in Form einer Beschreibungssprache für dreidimensionale Objekte vorliegen, die beispielsweise eine Lage von verschiedenen geometrischen Objekten beschreibt. Das dreidimensionale Modell kann aber auch die Umgebung in Form eines Gitters beschreiben, wobei das Gitter eine Oberfläche kennzeichnet. Das dreidimensionale Modell kann beispielsweise eine Umgebung bzw. Landschaft beschreiben, die Straßen, Gebäude und gegebenenfalls (optional) auch eine Vegetation beschreibt. Ferner kann die dreidimensionale Beschreibung auch natürliche Oberflächenformen wie beispielsweise Hügel oder Berge beschreiben. Zusätzlich kann die dreidimensionale Beschreibung des dreidimensionalen Modells optional jegliche vom Menschen geschaffene Veränderung der Umgebung beschreiben, beispielsweise n Wegzeichen, bzw. Wegtafeln, Hausnummern, Laternenmasten, Telefonzellen und ähnliches.

Es wird bevorzugt, dass das dreidimensionale Modell so gewählt ist, dass es dazu geeignet ist, eine zweidimensionale Ansicht der Umgebung von einem wählbaren Betrachtungspunkt aus gesehen zu erzeugen. In anderen Worten, das dreidimensionale Modell ist ausgelegt, um die Umgebung in elektronischer Form so zu beschreiben, dass verschiedene Ansichten der dreidimensionalen Umgebung von verschiedenen Beobachtungspunkten aus erzeugbar sind.

Das dreidimensionale Modell ist bevorzugt so ausgewählt, dass Oberflächen von geometrischen Objekten (beispielsweise von Flächen, Würfeln, Quadern, Kreisen, Ellipsen, Zylindern) durch einfarbige Flächen beschrieben werden. In anderen Worten, das Modell ist ausgelegt, um die Umgebung durch eine Mehrzahl von einfarbigen Oberflächen zu beschreiben. Dadurch ist die Komplexität des Modells sowie der Aufwand bei der Berechnung einer Ansicht (auch als Modellbild bezeichnet) basierend auf dem Modell vergleichsweise gering.

Somit ist festzuhalten, dass das dreidimensionale Modell die Umgebung mit einer (mittleren) Auflösung beschreibt, die für den menschlichen Betrachter ausreichend wäre, um eine bestimmte Umgebung zu identifizieren. Allerdings stimmen aufgrund der Wahl des dreidimensionalen Modells Farben von Oberflächen oder Texturen von Oberflächen, wie sie durch das Modell beschrieben werden, nicht notwendiger Weise mit realen Farben oder Texturen überein. Allerdings ist das Modell kompakt und eignet sich daher hervorragend für eine automatisierte Verarbeitung.

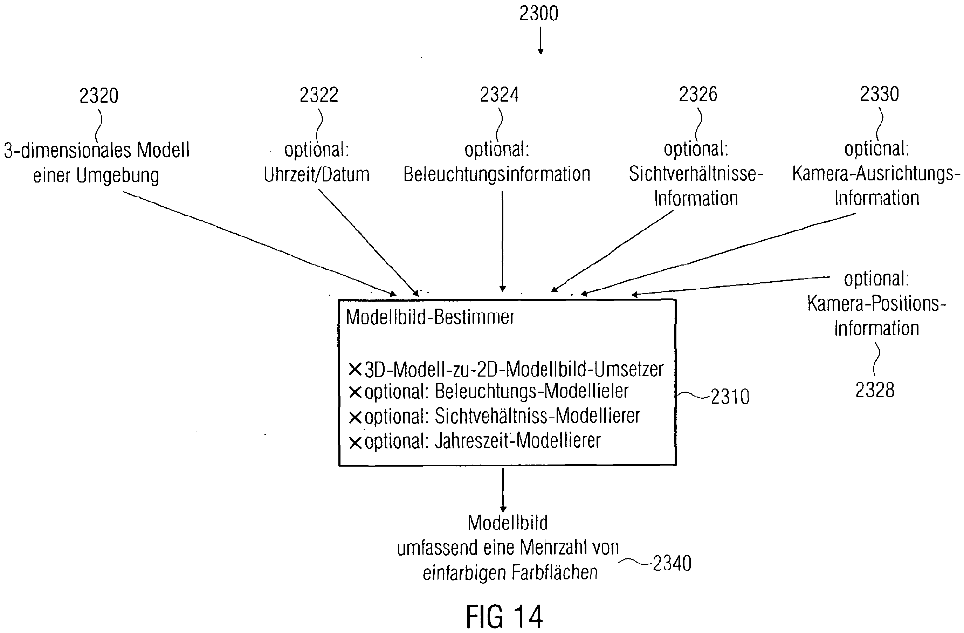

Fig. 14 zeigt eine schematische Darstellung von Eingangsgrößen und Ausgangsgrößen eines erfindungsgemäßen Modellbildbestimmers. Die graphische Darstellung der Fig. 14 ist in ihrer Gesamtheit mit 2300 bezeichnet. Der Modellbildbestimmer ist mit 2310 bezeichnet. Der Modellbildbestimmer 2310 ist typischerweise ausgelegt, um ein dreidimensionales Modell 2320, wie dies vorher beschrieben wurde, zu empfangen. Ferner ist der Modellbildbestimmer 2310 ausgelegt, um optional eine Information 2322 über eine Datum und/oder eine Uhrzeit zu empfangen. Ferner ist der Modellbildbestimmer 2310 ausgelegt, um optional eine Information 2324 über eine Beleuchtungssituation zu empfangen. Der Modellbildbestimmer 2310 ist ferner ausgelegt, um optional eine Information 2326 über aktuelle Sichtverhältnisse zu empfangen. Ferner ist der Modellbildbestimmer 2310 ausgelegt, um optional eine Kamera-Positions-Information 2328 zu empfangen, die eine Position der Kamera, die das Kamerabild aufnimmt, (zumindest grob bzw. näherungsweise) beschreibt. Ferner ist der Modellbildbestimmer 2310 ausgelegt, um optional eine Kamera-Ausrichtungs-Information 2330 zu empfangen.

Der Modellbildbestimmer 2310 ist im Übrigen ausgelegt, um ein Modellbild 2340 zu erzeugen, das die durch das dreidimensionale Modell 2320 beschriebene Umgebung in Form einer Mehrzahl von einfarbigen Farbflächen beschreibt.

Das Modellbild ist dabei typischerweise eine zweidimensionale, flächige Darstellung der Umgebung, die auf dem dreidimensionalen Modell 2320 basiert.

Der Modellbildbestimmer 2310 umfasst typischerweise einen Dreidimensionales-Modell-zu-Zweidimensionales-Modellbild-Umsetzer, der ausgelegt ist, um das dreidimensionale Modell 2320 zu empfangen, und um basierend darauf das zweidimensionale Modellbild 2340 zu erzeugen. Der Dreidimensionales-Modell-zu-Zweidimensionales-Modellbild-Umsetzer ist dabei gemäß einem bevorzugten Ausführungsbeispiel ausgelegt, um die optionalen Informationen 2322, 2324, 2326, 2328, 2330 bei der Erzeugung des Modellbilds 2340 zu berücksichtigen. Zu diesem Zweck umfasst der Modellbildbestimmer 2310 optional einen Beleuchtungs-Modellierer, der die Beleuchtung bei der Erzeugung des Modellbilds 2340 aus dem dreidimensionalen Modell 2320 so einstellt, wie dies durch die Information 2324 über die aktuelle Beleuchtungssituation beschrieben wird. Der Beleuchtungs-Modellierer kann ferner die optional zur Verfügung stehende Information 2322 über Datum und/oder Uhrzeit berücksichtigen, um beispielsweise einen Sonnenstand zu ermitteln, und um die Information über den Sonnenstand bei einer Berechnung des Modellbilds 2340 zu berücksichtigen. In anderen Worten, der Beleuchtungs-Modellierer in dem Modellbildbestimmer 2310 kann ausgelegt sein, um sowohl einen Sonnenstand als auch eine aktuelle Beleuchtungssituation (die beispielsweise eine Information über eine Helligkeit der Beleuchtung, eine Information darüber, ob eine diffuse Beleuchtung oder eine Beleuchtung durch eine Punktquelle vorliegt bzw. dominiert, sowie weitere beleuchtungsspezifische Informationen enthalten). Somit ist zusammenfassend festzuhalten, dass der Beleuchtungs-Modellierer beispielsweise ausgelegt sein kann, um zwischen einem Zustand direkter Sonneneinstrahlung (beispielsweise bei klarem Himmel) und einem Zustand diffuser Beleuchtung (beispielsweise bei bedecktem Himmel) zu unterscheiden. Die Unterscheidung kann dabei beispielsweise basierend auf der Information eines Beleuchtungssensors, der eine Lichtstärke ermittelt, oder basierend auf dem Kamerabild von der Kamera getroffen werden. Ferner kann der Beleuchtungs-Modellierer den tageszeitlichen und/oder jahreszeitlichen Stand der Sonne bei der Berechnung der Beleuchtung des Modellbilds 2340 ermitteln und berücksichtigen. Somit kann der Beleuchtungs-Modellierer beispielsweise einen Schattenwurf nachbilden. Dies ist besonders wichtig bzw. vorteilhaft, wenn sich beispielsweise Teile der Umgebung im Schatten eines großen Gebäudes (beispielsweise in einer großstädtischen Umgebung) befinden. In diesem Fall erscheint eine Oberfläche eines Gebäudes, das teilweise beschattet ist, nicht mehr als eine einheitliche Fläche, sondern ist in eine erste Fläche, die innerhalb des Schattens liegt, und die vergleichsweise dunkel erscheint, und in eine zweite Fläche, die außerhalb des Schattens liegt, und die vergleichsweise hell erscheint, aufgeteilt. In diesem Fall beschreibt der Modellbilderzeuger beispielsweise die in dem Schatten liegende Fläche durch eine einfarbige, vergleichsweise dunkle Farbfläche, und die außerhalb des Schattens liegende Fläche durch eine vergleichsweise helle einfarbige Fläche. Somit ist insgesamt gewährleistet, dass das Modellbild an die tatsächliche Wahrnehmung der Umgebung angepasst ist. In anderen Worten, das Modellbild 2340 wird so erzeugt, dass es im Hinblick auf eine Licht- und Schattenumgebung im Wesentlichen mit dem durch die Kamera aufgenommenen Kamerabild übereinstimmt. Dadurch ist sichergestellt, dass ein Bildvergleich für eine Positionsbestimmung unter Verwendung sowohl des Kamerabilds als auch des Modellbilds 2340 in besonders zuverlässiger Weise erfolgt.

Bei einem bevorzugten Ausführungsbeispiel umfasst der Modellbildbestimmer 2310 ferner einen Sichtverhältnis-Modellierer. Der Sichtverhältnis-Modellierer ist typischerweise ausgelegt, um die optionale Sichtverhältnis-Information 2326 zu empfangen, die beispielsweise anzeigt, ob die aktuellen Sichtverhältnisse beispielsweise durch Nebel oder durch Regen beeinträchtigt sind. Ist dies der Fall, so passt der Sichtverhältnis-Modellierer das Modellbild 2340 entsprechend an, indem er beispielsweise in dem Modellbild solche Merkmale unterdrückt, die aufgrund der Sichtverhältnisse nicht mehr sichtbar sind. Zeigt die Sichtverhältnis-Information 2326 beispielsweise an, dass Nebel mit einer Sichtweite von etwa 100 Metern herrscht, so erzeugt der Modellbildbestimmer ein Modellbild, das nur noch solche Merkmale der Umgebung umfasst, die innerhalb des Sichtbereichs (also beispielsweise innerhalb von etwa 100 Metern) liegen. Andere Merkmale, also Merkmale, die weiter als die Sichtweite entfernt sind, werden hingegen unterdrückt. Somit ist das Modellbild 2340 wiederum an das durch die Kamera aufgenommene Kamerabild angepasst.

Eine Erkennung, welche Sichtverhältnisse gerade herrschen, kann beispielsweise durch einen entsprechenden Sensor erfolgen, der beispielsweise auf der Basis einer Lichtausbreitungsstrecke die tatsächlichen Sichtverhältnisse bestimmt. Alternativ dazu kann auch das von der Kamera gelieferte Kamerabild herangezogen werden, um zu erkennen, welche Objekte sichtbar sind. Ist beispielsweise die grobe Position bekannt, so kann ein vorläufiges Modellbild erzeugt werden, das die Umgebung bei idealen Sichtverhältnissen beschreibt. Sodann kann erkannt werden, welche der in dem Modellbild enthaltenen Objekte in dem Kamerabild nicht mehr sichtbar sind. Da aus dem dreidimensionalen Modell 2320 die Lage der nicht mehr sichtbaren Objekte bekannt ist, kann aus der Information, welche der in dem dreidimensionalen Modell enthaltenen Objekte in dem tatsächlichen Kamerabild nicht mehr sichtbar sind, eine Information über die tatsächlichen Sichtverhältnisse gewonnen werden.

Alternativ dazu kann im Übrigen die Information über die Sichtverhältnisse auch extern empfangen werden. So können in der Umgebung Sichtverhältnis-Sensoren angeordnet sein, wie dies beispielsweise entlang

von Autobahnen mit Wechselverkehrzeichen der Fall ist. Die Information dieser Sichtverhältnissensoren kann dann beispielsweise drahtlos zu der erfindungsgemäßen Vorrichtung 2100 bzw. zu dem Modellbildbestimmer 2310 übertragen werden. Im Übrigen können auch Informationen von über das Land verteilten Wetterstationen durch die erfindungsgemäße Vorrichtung 2300 bzw. den Modellbildbestimmer 2310 empfangen werden, um dem Modellbildbestimmer 2310 die Sichtverhältnis-Information 2326 zu liefern.

Bei einem weiteren bevorzugten Ausführungsbeispiel umfasst der Modellbildbestimmer 2310 ferner optional einen Jahreszeit-Modellierer. Der Jahreszeit-Modellierer ist ausgelegt, um beispielsweise basierend auf der Information 2322 über die Uhrzeit und/oder das Datum (bevorzugt aber allein aufgrund der Information über das Datum) zu bestimmen, welche Jahreszeit gerade herrscht. Dem Modellbildbestimmer 2310 kann basierend auf der Jahreszeit-Information beispielsweise die Darstellung der Vegetation in dem Modellbild 2340 einstellen. Dies ist beispielsweise besonders wichtig, wenn sich ein Benutzer der Vorrichtung 2100 in einem städtischen Park befindet und dennoch seine genaue Position bestimmen möchte. Befindet sich der Benutzer in dem Park während des Sommers, so ist davon auszugehen, dass in dem Park befindliche Laubbäume stark belaubt sind, und dass somit das Sichtfeld durch das Laub der Bäume begrenzt wird. In diesem Falle stellen die Bäume ein wesentliches Navigationsmerkmal dar. Ein genaues Aussehen des Laubs kann zwar typischerweise nicht vorhergesagt werden, die Belaubung der Bäume kann aber beispielsweise durch eine einfarbige Farbfläche angenähert werden. In anderen Worten, eine Fläche in dem Modellbild, die während des Sommers voraussichtlich durch Laub bedeckt ist, erhält in dem Modellbild einen einfarbigen grünlichen Farbton zugewiesen, wobei der genaue Farbton beispielsweise von der Art des vorhandenen Baumes abhängig sein kann. Somit stimmt das Modellbild 2340 im Wesentlichen mit dem durch die Kamera aufgenommenen Kamerabild überein und ermöglicht damit eine zuverlässige Navigation.

Befindet sich der Benutzer der Vorrichtung 2100 hingegen während des Winters in dem gleichen städtischen Park bzw. in der gleichen städtischen Grünanlage, so haben die darin vorhandenen Laubbäume ihr Laub verloren. Somit eröffnet sich für den Benutzer beispielsweise der Blick auf die den Park umgebenden Gebäude, und die dem Park umgebenden Gebäude stellen ein wesentliches Merkmal für die Positionsbestimmung dar. In anderen Worten, der Modellbildbestimmer 2310 wird in diesem Fall, wenn er also feststellt, dass gerade Winter herrscht, die Bäume lediglich durch ihren Stamm (und gegebenenfalls einige Äste) darstellen, wird jedoch zusätzlich in dem Modellbild 2340 auch die hinter den Bäumen vorhandenen Gebäude oder weiteren Merkmale darstellen. Somit ist auch während des Winters eine bestmögliche Übereinstimmung zwischen dem Modellbild 2340 und dem durch die Kamera aufgenommenen Kamerabild gewährleistet, was wiederum zu einer optimalen Positionsbestimmung führt.

Es sei im Übrigen darauf hingewiesen, dass bei Verwendung des gleichen Modellbilds unabhängig von der Jahreszeit typischerweise entweder im Sommer oder im Winter eine wesentliche Beeinträchtigung der Zuverlässigkeit der Positionsbestimmung auftreten würde. Somit ermöglicht die erfindungsgemäße Jahreszeit-abhängige Anpassung des für die Positionsbestimmung herangezogenen Modellbilds 2340 eine deutliche Verbesserung der Zuverlässigkeit der Positionsbestimmung.

Es sei im Übrigen darauf hingewiesen, dass der Modellbildbestimmer 2310 zusätzlich optional eine Beschneiungs-Information empfangen kann. In diesem Fall kann der Jahreszeit-Modellierer bei der Erzeugung des Modellbilds beispielsweise ein Vorhandensein von Schnee mit berücksichtigen. So ist leicht einsehbar, dass sich eine Landschaft bzw. eine Umgebung in ihrem Aussehen stark verändert, wenn diese beschneit ist. Die Information über die Beschneiung kann beispielsweise aus dem Kamerabild abgeleitet werden. Wird festgestellt, dass ein großer Teil des Kamerabilds weiß oder näherungsweise weiß erscheint, so kann beispielsweise daraus geschlossen werden, dass eine Beschneiung vorliegt. So kann beispielsweise erkannt werden, dass weiße oder näherungsweise weiße Flächen in dem Kamerabild einen Anteil ausmachen, der größer als ein vorgegebener Schwellwert ist. In diesem Fall kann daraus geschlossen werden, dass eine Beschneiung vorliegt, und eine entsprechende Information kann an den Modellbildbestimmer 2310 weitergeleitet werden. Der Modellbildbestimmer 2310 kann somit ein Modellbild 2340 erzeugen, in dem die Beschneiung berücksichtigt ist. Zu diesem Zweck kann der Modellbildbestimmer 2310 beispielsweise ermitteln, welche Flächen in dem dreidimensionalen Modell 2320 beispielsweise waagrechte oder näherungsweise waagrechte Flächen sind. Der Modellbildbestimmer kann in diesem Fall den entsprechenden waagrechten Flächen eine Farbe zuweisen, die in etwa dem Weißton von Schnee entspricht. Alternativ dazu kann das dreidimensionale Modell 2320 eine Information darüber umfassen, die angibt, welche Flächen in dem dreidimensionalen Modell 2320 im Falle einer Beschneiung als beschneit darzustellen sind. Beispielsweise kann durch die entsprechende Information sichergestellt werden, dass in dem Modellbild 2340 geräumte Straßen auch bei Vorliegen einer Beschneiung nicht als beschneit dargestellt werden, während nicht-geräumte Flächen (z. B. Wiesen) als beschneit und damit als näherungsweise weiße Flächen dargestellt werden.

Zusammenfassend lässt sich somit festhalten, dass der Modellbildbestimmer 2310 bevorzugt ausgelegt ist, um das Modellbild 2340 angepasst an Beleuchtungsverhältnisse, Sichtverhältnisse, jahreszeitliche Verhältnisse und/oder Witterungsverhältnisse darzustellen. Zu diesem Zweck empfängt der Modellbildbestimmer 2310 eine Information über die entsprechenden Beleuchtungsverhältnisse, Sichtverhältnisse, jahreszeitlichen Verhältnisse oder Witterungsverhältnisse und erzeugt das Modellbild 2340 entsprechend basierend auf dem dreidimensionalen Modell 2320. Das dreidimensionale Modell 2320 kann dabei optional zur Darstellung von jahreszeitlichen Veränderungen (beispielsweise der Vegetation) oder witterungsbedingten Veränderungen (beispielsweise Beschneiung) zusätzliche Informationen enthalten, die eine Veränderung des Modellbilds 2340 in Abhängigkeit von den jahreszeitlichen Verhältnissen oder Witterungsbedingungen beschreiben. In anderen Worten, das dreidimensionale Modell 2320 umfasst beispielsweise mehrere Parameter, die eine Anpassung an jahreszeitliche Veränderungen oder witterungsbedingte Veränderung ermöglichen.

Ferner wird darauf hingewiesen, dass der Modellbildbestimmer 2310 bei einem bevorzugten Ausführungsbeispiel ausgelegt ist, um die Kamera-Positions-Information 2328 und/oder die Kamera-Ausrichtungs-Information 2330 zu erhalten und bei der Erzeugung des Modellbilds zu berücksichtigen. Die Kamera-Positions-Information 2328 kann beispielsweise eine Grob-Information darstellen, die eine Information über die Position der Kamera, die das Kamerabild aufnimmt, umfasst. Die Kamera-Positions-Information kann beispielsweise durch ein anderes als das erfindungsgemäße Navigationssystem erhalten worden sein. Beispielsweise kann die Kamera-Positions-Information aufgrund eines Satelliten gestützten Positionsbestimmungssystems (z. B. GPS) bestimmt worden sein. Alternativ kann die Kamera-Positions-Information 2328 auch basierend auf einem einmal bekannten Anfangspunkt durch eine Berücksichtigung einer Bewegung der Kamera erhalten worden sein. In anderen Worten, war eine Position, an der die sich die Kamera befunden hat, einmal bekannt, so kann durch eine Erkennung der Bewegung der Kamera zumindest näherungsweise eine aktuelle Position der Kamera bestimmt worden sein, und diese näherungsweise Information bzw. grobe Information über die Position der Kamera kann als die Kamera-Positions-Information 2328 dienen.

Die Kamera-Ausrichtungs-Information 2330 kann beispielsweise eine Blickrichtung der Kamera beschreiben, und kann ferner alternativ oder zusätzlich eine Information darüber tragen, welchen Bildausschnitt die Kamera (beispielsweise aufgrund einer Einstellung eines Kamera-Objektivs) aufnehmen kann. In anderen Worten, die Kamera-Ausrichtungs-Information 2330 kann beispielsweise die Richtung einer optischen Achse der Kamera beschreiben, und kann ferner eine Information darüber tragen, ob die Kamera beispielsweise unter Verwendung eines Weitwinkel-Objektivs einen winkelmäßig (z. B. im Hinblick auf einen Raumwinkel) großen Ausschnitt der Umgebung aufnimmt, oder ob sie beispielsweise unter Verwendung eines Teleobjektivs einen winkelmäßigen (bzw. raumwinkelmäßig) kleinen Ausschnitt der Umgebung aufnimmt.

Der Modellbildbestimmer 2310 ist in diesem Fall bevorzugt ausgelegt, um basierend auf dem dreidimensionalen Modell 2320 das Modellbild 2340 so zu erzeugen, wie es von dem Ort, an dem sich die Kamera befindet (beschrieben durch die Kamera-Positions-Information 2328), aus gesehen sichtbar wäre. Der Modellbildbestimmer 2310 ist dabei bevorzugt (aber nicht notwendiger Weise) ausgelegt, um die Blickrichtung der Kamera (durch die Kamera-Ausrichtungs-Information 2330) sowie die Information über den durch die Kamera aufgenommenen Raumwinkel (ebenfalls beschrieben durch die Kamera-Ausrichtungs-Information 2330) zu berücksichtigen, und somit das Modellbild 2340 so zu erzeugen, dass dieses den von der Kamera tatsächlich aufgenommenen Bereich beschreibt. Somit besteht wiederum eine optimale Anpassung des Modellbilds 2340 an das durch die Kamera aufgenommene Kamerabild.

Im Folgenden wird beschrieben, wie basierend auf dem durch die Kamera aufgenommenen Kamerabild sowie ferner basierend auf dem Modellbild die Position über die Kamera, die das Kamerabild aufnimmt, bestimmt werden kann. Diesbezüglich wird zunächst ein Verfahren für eine grobe Positionsbestimmung sowie für eine Extraktion von Merkmalen beschrieben. So wird beispielsweise aus einem erzeugten Modellbild (beispielsweise auf dem Modellbild 2340) ein einzelnes Merkmal, bevorzugt auf ein Merkmalsvektor extrahiert. Der Merkmalsvektor beschreibt eine Mehrzahl von Merkmalen des Modellbilds. Beispielsweise kann der Merkmalsvektor ein Horizontal-Histogramm oder ein Vertikal-Histogramm umfassen, wie dies im Folgenden noch beschrieben wird. Alternativ oder zusätzlich kann der Merkmalsvektor eine Information über charakteristische Flächen in dem Modellbild enthalten. Der Merkmalsvektor kann beispielsweise angeben, wie viele Flächen einer bestimmten Farbe in dem Modellbild enthalten sind. Alternativ dazu kann der Merkmalsvektor beispielsweise angeben, wie groß ein flächenmäßiger Anteil der bestimmten Farbe in dem Modellbild ist. Der Merkmalsvektor kann ferner charakteristische Flächen beispielsweise im Hinblick auf deren Form, Größe oder Lage beschreiben. Beispielsweise kann der Merkmalsvektor die Größe der in dem Modellbild enthaltene Fläche im Hinblick auf deren flächenmäßige Ausdehnung und/oder im Hinblick auf deren Position beschreiben. Der Merkmalsvektor kann ferner beispielsweise Farbmerkmale des Modellbilds beschreiben, und beispielsweise angeben, welche Farbe in dem Modellbild dominant ist. In anderen Worten, der Merkmalsvektor kann eine Information über Anteile von verschiedenen Farben enthalten, die beispielsweise nach einem flächenmäßigen Anteil sortiert sind. Der Merkmalsvektor kann ferner beispielsweise eine Information über Fluchtpunkte in dem Modellbild umfassen. Fluchtpunkte können dabei beispielsweise als Schnittpunkte von zwei oder mehr Linien definiert sein, die eine Verlängerung von Kanten eines quaderförmigen oder würfelförmigen Objekts in dem Modellbild darstellen. Es wird diesbezüglich darauf hingewiesen, dass sich bei einer perspektivischen Betrachtung die Verlängerung von parallelen Kanten an einem Punkt schneiden, der auch als Fluchtpunkt bezeichnet wird. Ist beispielsweise die Lage von zwei Fluchtpunkten bekannt, so kann daraus beispielsweise als eine Lage eines quaderförmigen Körpers in Relation zu einem Betrachter geschlossen werden. Der Merkmalsvektor in dem Modellbild kann ferner beispielsweise Entfernungsmerkmale umfassen, die angeben, wie weit bestimmte Objekte voneinander oder von der Position des Betrachters entfernt sind. Ferner kann der Merkmalsvektor optional eine Information darüber enthalten, die eine winkelmäßige Lage von einem oder mehreren Objekten (beispielsweise zueinander oder im Hinblick auf eine Position eines Betrachters) beschreibt.

Ferner wird erfindungsgemäß ein Merkmal oder Merkmalsvektor aus dem vorverarbeiteten Kamerabild extrahiert. Somit entsteht zumindest ein Merkmal des vorverarbeiteten Kamerabildes, bevorzugt aber ein Merkmalsvektor. Bei einem Ausführungsbeispiel der vorliegenden Erfindung wird es bevorzugt, dass der für das vorverarbeitete Kamerabild erstellte Merkmalsvektor die gleichen Merkmale beschreibt wie der für das Modellbild erstellte Merkmalsvektor. Es ist allerdings genau so gut möglich, dass der Merkmalsvektor des Modellbilds eine (beispielsweise echte) Teilmenge der Merkmale des Merkmalsvektors für das vorverarbeitete Kamerabild umfasst oder umgekehrt. Ganz allgemein gesprochen ist es ausreichend, wenn der Merkmalsvektor für das Modellbild zumindest ein Merkmal, bevorzugt aber eine Mehrzahl von Merkmalen, mit dem Merkmalsvektor für das vorverarbeitete Kamerabild gemeinsam hat.

Die in dem Merkmalsvektor für das Modellbild und dem Merkmalsvektor für das vorverarbeitete Kamerabild gemeinsam enthaltenen Merkmale werden dann in einem Merkmalsvergleicher verglichen. Der Merkmalsvergleicher kann beispielsweise ausgelegt sein, um eine qualitative oder quantitative Übereinstimmung von Merkmalen zu bestimmen. Beispielsweise kann der Merkmalsvergleicher ausgelegt sein, um zu erkennen, wenn in dem Modellbild und dem vorverarbeiteten Kamerabild gleiche charakteristische Flächen auftreten. Eine charakteristische Fläche kann dabei beispielsweise durch ihre Eigenschaft, ein bestimmtes Umgebungsobjekt (z. B. Himmel, Wald, Wiese, Feld, Straße, Leitplanke oder Schild) darzustellen, gekennzeichnet sein. So kann beispielsweise der Merkmalsvergleicher feststellen, dass sowohl in dem Modellbild als auch in dem vorverarbeiteten Kamerabild jeweils ein Abschnitt einer Straße sowie jeweils ein Schild gezeigt sind. Der Merkmalsvergleicher kann alternativ oder zusätzlich quantitative Merkmale vergleichen. Hat der Merkmalsvergleicher beispielsweise qualitativ übereinstimmende Merkmale in dem Modellbild und in dem vorverarbeiteten Kamerabild erkannt, so kann der Merkmalsvergleicher einen quantitativen Vergleich von Eigenschaften der Merkmale durchführen. Hat der Merkmalsvergleicher beispielsweise erkannt, dass sowohl in dem Modellbild als auch in dem vorverarbeiteten Kamerabild ein Schild abgebildet sind, so kann der Merkmalsvergleicher beispielsweise Positionen der beiden Schilder in dem Modellbild und dem vorverarbeiteten Kamerabild vergleichen. Bei einem weiteren Ausführungsbeispiel der vorliegenden Erfindung kann der Merkmalsvergleicher aber auch den auf den Schildern enthaltenen Text miteinander vergleichen, sofern der Merkmalsvektor ein entsprechendes Textmerkmal umfasst.

Im Übrigen kann der Merkmalsvergleicher beispielsweise auch weitere Merkmale in dem Merkmalsvektor des Modellbilds und in dem Merkmalsvektor des vorverarbeiteten Kamerabilds miteinander vergleichen (beispielsweise einen Anteil einer bestimmten Farbe).

Erkennt der Merkmalsvergleicher (beispielsweise unter Berücksichtigung eines vorgegebenen Toleranzbereichs) eine Übereinstimmung des zu dem Modellbild gehörigen Merkmalsvektors und des zu dem vorverarbeiteten Kamerabild gehörigen Merkmalsvektors, die größer als eine vorgegebene Mindest-Übereinstimmung ist, so kann der Merkmalsvergleicher feststellen, dass die Position, von der aus das Kamerabild aufgenommen wurde, mit der durch das Modellbild beschriebenen Position übereinstimmt. In anderen Worten, der Merkmalsvergleicher kann als die Positions-Information die Position ausgeben, von der aus das Modellbild aufgenommen wurde.

Mit einem weiteren bevorzugten Ausführungsbeispiel existiert eine Datenbasis bestehend aus einer Mehrzahl von Merkmalsvektoren, die zu verschiedenen Modellbildern gehören. Die verschiedenen Modellbilder beschreiben dabei die betrachtete Umgebung aus einer Mehrzahl von verschiedenen Positionen. In anderen Worten, jedem der Modellbilder aus der Mehrzahl von Modellbildern ist eine Position eines Betrachters zugeordnet, wobei sich die Positionen voneinander unterscheiden. Somit ist der Merkmalsvergleicher ausgelegt, um basierend auf einem Merkmalsvektor eines vorverarbeiteten Kamerabildes festzustellen, zu dem Merkmalsvektor welches Modellbildes der Merkmalsvektor des vorverarbeiteten Kamerabilds eine maximale Ähnlichkeit aufweist. Hierzu kann beispielsweise ein Abstandsmaß zwischen zwei Merkmalsvektoren (beispielsweise im Sinne einer mathematischen Norm) definiert sein. Wird festgestellt, dass der Merkmalsvektor des vorverarbeiteten Kamerabilds zu einem bestimmten Merkmalsvektor aus der Mehrzahl von Merkmalsvektoren eine maximale Ähnlichkeit (oder, im Hinblick auf das mathematische Abstandsmaß, einen minimalen Abstand) aufweist, so wird die zu dem bestimmten Merkmalsvektor gehörige Positions-Information durch den Merkmalsvergleicher als Ergebnis ausgegeben.

Somit ist insgesamt festzuhalten, dass basierend auf dem Vergleich zwischen einem Merkmalsvektor eines vorverarbeiteten Kamerabildes und einem oder mehreren Merkmalsvektoren von einem oder mehreren Modellbildern eine Position bestimmt werden kann.

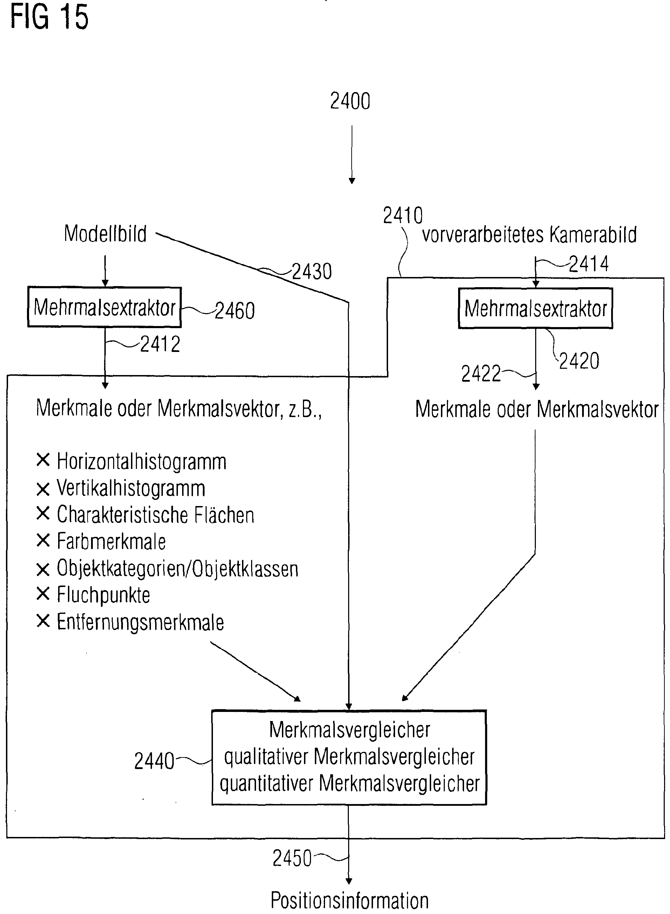

Die Fig. 15 zeigt ein Blockschaltbild einer erfindungsgemäßen Positionsbestimmungseinrichtung gemäß einem Ausführungsbeispiel der vorliegenden Erfindung. Das Blockschaltbild der Fig. 15 ist in seiner Gesamtheit mit 2400 bezeichnet. Das Blockschaltbild 2400 zeigt eine Positionsbestimmungseinrichtung 2410. Die Positionsbestimmungseinrichtung 2410 empfängt einen oder mehrere Merkmalsvektoren 2412 eines oder mehrerer Modellbilder. Die Positionsbestimmungseinrichtung 2410 empfängt ferner ein vorverarbeitetes Kamerabild 2414, das beispielsweise dem vorverarbeiteten Kamerabild 2114 gemäß Fig. 12 oder dem vorverarbeiteten Kamerabild 2214 gemäß Fig. 13 entspricht.

Die Positionsbestimmungseinrichtung 2410 umfasst einen Merkmalsextraktor 2420, der ausgelegt ist, um aus dem vorverarbeiteten Kamerabild 2414 ein Merkmal, mehrere Merkmale oder einen Merkmalsvektor zu erzeugen. Die Merkmale oder der Merkmalsvektor können beispielsweise eines oder mehrere der folgenden Merkmale umfassen: Horizontal-Histogramm, Vertikal-Histogramm, Information über charakteristische Flächen, Information über Farbmerkmale, Information über Objektkategorien oder Objektklassen, Information über Fluchtpunkte, Information über Entfernungsmerkmale. Die Merkmale oder Merkmalsvektoren 2412 umfassen bevorzugt die gleichen Merkmale wie die durch den Merkmalsextraktor 2420 gelieferten Merkmale oder Merkmalsvektoren 2422. Der Positionsbestimmer 2410 ist ferner ausgelegt, um eine Positionsinformation 2430 zu empfangen, die dem Modellbild oder den Modellbildern zugeordnet ist, auf denen die Merkmale oder Merkmalsvektoren 2412 basieren. Der Positionsbestimmer 2410 umfasst ferner einen Merkmalsvergleicher 2440, der die Merkmale oder Merkmalsvektoren 2412, die zu den Modellbildern gehören, sowie die Merkmale oder den Merkmalsvektor 2422, der zu dem vorverarbeiteten Kamerabild 2414 gehört, empfängt.

Der Merkmalsvergleicher 2440 ist somit ausgelegt, um das Merkmal oder den Merkmalsvektor 2422 mit den Merkmalen oder Merkmalsvektoren 2412 zu vergleichen, und um einen bestimmten Merkmalsvektor aus den Merkmalsvektoren 2412 zu bestimmen, der eine maximale Übereinstimmung mit dem Merkmalsvektor 2422 aufweist. Der Merkmalsvergleicher 2440 ist ferner ausgelegt, um die zu dem bestimmten Merkmalsvektor 2412 gehörige Positionsinformation 2430 als ein Positionsbestimmungsergebnis 2450 zu liefern.

Somit ist festzuhalten, dass der Merkmalsvergleicher 2440 insgesamt ein bestimmtes Modellbild identifiziert, das gemäß dem ihm zugeordneten Merkmalsvektor eine maximale Übereinstimmung zu dem vorverarbeiteten Kamerabild 2414 aufweist. Da bevorzugt jedem Modellbild eine Positionsinformation zugeordnet ist, gibt der Merkmalsvergleich 2440 daraufhin die dem bestimmten Modellbild zugeordnete Positionsinformation als Ergebnis 2450 aus. Somit beschreibt das Ergebnis 2450 die Position, von der das Kamerabild, auf dem das vorverarbeitete Kamerabild 2414 basiert, aufgenommen wurde.

Es sei darauf hingewiesen, dass bei einem alternativen Ausführungsbeispiel der Positionsbestimmter 2410 einen Merkmalsextraktor 2460 umfasst, der ausgelegt ist, um ein Modellbild 2462 zu empfangen, und um passierend auf dem Modellbild 2462 einen zugehörigen Merkmalsvektor 2412 zu erzeugen, wie dieser bereits oben definiert wurde.

Es sei im Übrigen darauf hingewiesen, dass auch andere Verfahren zur Positionsbestimmung verwendet werden können. So können beispielsweise sowohl zu dem vorverarbeiteten Kamerabild 2414 als auch zu dem Modellbild 2462 ein Horizontalhistogramm und/oder ein Vertikalhistogramm erstellt werden. Ein Histogramm (gleichgültig ob Horizontal-histogramm oder Vertikalhistogramm) kann beispielsweise eine Farbverteilung oder Helligkeitsverteilung in einzelnen Bildzeilen oder Bildspalten des vorverarbeiteten Kamerabildes beschreiben. Tritt beispielsweise in dem vorverarbeiteten Kamerabild eine charakteristische horizontale oder vertikale (beispielsweise) helle Linie auf, die sich auf einem (beispielsweise) dunklen Hintergrund befindet, so ergibt in dem Helligkeits-Histogramm ein Maximum an der entsprechenden horizontalen oder vertikalen Position der Linie. Treten hingegen mehrere horizontale Linien auf, so gibt es mehrere charakteristische Maxima in dem entsprechenden Histogramm.

Für eine genaue Positionsbestimmung kann beispielsweise ein Histogramm, das zu dem vorverarbeiteten Kamerabild 2414 gehört, mit einem Histogramm, das zu dem Modellbild 2462 gehört, verglichen werden. Dabei kann beispielsweise geprüft werden, ob die beschriebenen zwei Histogramme übereinstimmen, oder ob die zwei beschriebenen Histogramme durch eine Verschiebung zur Übereinstimmung gebracht werden können. Dies kann beispielsweise durch eine Kreuzkorrelation zwischen des Histogrammen festgestellt werden. Wir beispielsweise festgestellt, dass zwei Histogramme, die zu dem vorverarbeiteten Kamerabild 2414 und zu dem Modellbild 2462 gehören, im Wesentlichen übereinstimmen, zueinander aber um einen gewissen Betrag verschoben sind, so kann beispielsweise festgestellt werden, dass die Position, von der aus das Kamerabild aufgenommen wurde, von der Position, von der aus das Modellbild erzeugt wurde, um einen bestimmten Betrag abweicht. Somit kann die Positionsbestimmungseinrichtung 2430 beispielsweise eine korrigierte Position als Ergebnis 2450 ausgeben, indem die zu dem Modellbild gehörige Positionsinformation 2430 (basierend auf der erkannten Verschiebung zwischen den Histogrammen) korrigiert wird.

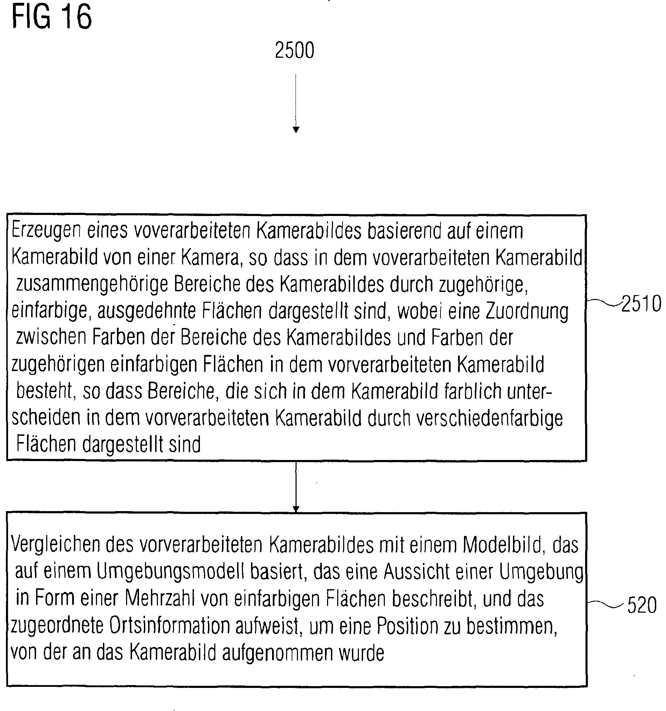

Im Folgenden wird noch ein erfindungsgemäßes Verfahren zur Bestimmung einer Position beschrieben. Zu diesem Zweck zeigt die Fig. 16 ein Flussdiagramm eines erfindungsgemäßen Verfahrens zur Positionsbestimmung. Das Verfahren gemäß der Fig. 16 ist in seiner Gesamtheit mit 2500 bezeichnet. Das Verfahren 2500 umfasst in einem ersten Schritt 2510 ein Erzeugen eines vorverarbeiteten Kamerabilds basierend auf einem Kamerabild von einer Kamera, so dass in dem vorverarbeiteten Kamerabild zusammengehörige Bereiche des Kamerabilds durch zugehörige einfarbige, ausgedehnte Flächen dargestellt sind. Dabei besteht eine Zuordnung zwischen Farben der Bereiche des Kamerabildes und Farben der zugehörigen einfarbigen Flächen in dem vorverarbeiteten Kamerabild, so dass Bereiche, die sich in dem Kamerabild farblich unterschieden, in dem vorverarbeiteten Kamerabild durch verschiedenfarbige Flächen dargestellt sind.

Das Verfahren 2500 umfasst ferner in einem zweiten Schritt 2520 ein Vergleichen des vorverarbeiteten Kamerabilds mit einem Modellbild, das auf einem Umgebungsmodell basiert. Das Umgebungsmodell beschreibt eine Ansicht einer Umgebung in Form einer Mehrzahl von Flächen und weist zugeordnete Ortsinformationen auf. Basierend auf dem Vergleichen wird eine Position bestimmt, von der aus das Kamerabild aufgenommen wurde.

Es sei darauf hingewiesen, dass das Verfahren 2500 gemäß der Fig. 16 um all diejenigen Schritte ergänzt werden kann, die im Hinblick auf die erfindungsgemäßen Vorrichtungen beschrieben wurden.

Es sei ferner darauf hingewiesen, dass einzelne Aspekte, wie sie oben beschrieben wurden, in einer beliebigen Weise kombiniert werden können. Beispielsweise ist es nicht zwingend erforderlich, basierend auf einem Kamerabild ein vorverarbeitetes Kamerabild zu erzeugen. So ist es nämlich auch möglich, die Kamerabilder ohne eine weitere Vorverarbeitung (bzw. nur mit einer herkömmlichen Vorverarbeitung) zur Positionsbestimmung einzusetzen, wenn vorausgesetzt wird, dass das Modellbild an das durch die Kamera aufgenommene Kamerabild (beispielsweise unter Berücksichtigung von Umgebungsbedingungen wie Beleuchtung, Sichtverhältnissen, Jahreszeit oder Witterungsverhältnissen) angepasst ist. In diesem Fall kann das (entsprechend verarbeitete bzw. angepasste) Modellbild direkt mit dem Kamerabild von der Kamera (beispielsweise unter Verwendung von Merkmalen, Merkmalsvektoren oder anderen Bilderkennungsverfahren) verglichen werden, ohne dass zwingend eine Vorverarbeitung des Kamerabildes erfolgt.

Im Folgenden wird die vorliegende Erfindung noch einmal kurz zusammengefasst.

Es sei darauf hingewiesen, dass die vorliegende Erfindung gemäß einem Ausführungsbeispiel ein Verfahren und eine Einrichtung zur videogestützten Navigation umfasst. Bei der vorliegenden Erfindung handelt es sich bevorzugt, aber nicht notwendigerweise, um eine Video-Straßennavigation. Gemäß einem bevorzugten Ausführungsbeispiel der vorliegenden Erfindung ist ein Fahrzeug mit einer Videokamera ausgerüstet. Die Videoaufnahmen werden per Videoanalyse mit gespeicherten Aufnahmen verglichen, und es wird daraus der momentane Aufenthaltsort bestimmt. Beispielsweise dienen Straßenkreuzungen, Schilder, Häuser, Straßenverläufe oder Landschaftsbilder bei verzweigten Punkten als ausgezeichnete Referenzbilder. Der Datenspeicher kann z. B. Google-3D-Ansichten umfassen. Bei einem alternativen Ausführungsbeispiel speist beispielsweise der Fahrer neue Szenen automatisch selbst ein. In anderen Worten, der Datenspeicher wird automatisch ergänzt, wenn durch die Videokamera neue Bilder aufgenommen werden. Identifikationsalgorithmen (die die Bestimmung der Position anhand der Videoaufnahmen ermöglichen) sind beispielsweise solche Identifikationsalgorithmen, wie sie in der Videosequenzidentifikation bei Spielfilmszenen oder in der Bildähnlichkeitsanalyse eingesetzt werden. Ein Vorteil des beschriebenen Verfahrens besteht darin, dass kein GPS-Signal (bzw. keine zusätzliche Positionsinformation) benötigt wird.

Gemäß einem Ausführungsbeispiel der vorliegenden Erfindung ist es bei Verwendung von geeigneten Vergleichsverfahren denkbar, dass die Videoreferenz-Schlüssel bzw. Videoreferenz-Keys komprimiert vorliegen. Damit können ganze Regionen (z. B. Baden-Württemberg) als eine Photobibliothek in einem Speicher vorgehalten werden.

Im Folgenden werden Details im Hinblick auf die videogestützte Navigation gemäß einem Ausführungsbeispiel der vorliegenden Erfindung näher erläutert. Diesbezüglich sei darauf hingewiesen, dass die verschiedenen Merkmale des Systems auch für sich allein genommen einsetzbar sind. In anderen Worten, die vorliegende Erfindung ist nicht auf die Realisierung eines vollständigen Systems, wie es im Folgenden beschrieben wird, beschränkt, sondern umfasst auch die einzelnen Aspekte für sich genommen.

Gemäß einem Ausführungsbeispiel der vorliegenden Erfindung wird mit einer Videokamera aus dem fahrenden Fahrzeug heraus die Umgebung aufgenommen. Aus dem Bildstapel (der durch die Videokamera erzeugt wird) werden raumzeitliche Merkmale bzw. Features extrahiert, die als Merkmalsvektoren abgelegt werden. Die Merkmalsvektoren werden mit Inhalt-Widergewinnungs-Verfahren (auch als Content-Retrieval-Verfahren) mit gespeicherten Merkmalsvektorfolgen verglichen. Ein Maximum einer Übereinstimmung gibt eine momentane Position eines Fahrzeugs an, bzw. erlaubt einen Rückschluss auf eine Position des Fahrzeugs.

Um konstante, invariante Merkmalsvektoren bzw. Featurevektoren zu erzeugen, wird eine retinotope Bildvorverarbeitung eingesetzt bzw. vorgeschaltet. Ein Eingangsbild (das beispielsweise von der Videokamera geliefert wird) wird durch eine Retinavorverarbeitung in drei Bildräume "OnMove", "OnSluggish" und "OnEdge" zerlegt. OnMove ist ein Retinaoperator, mit dem Bewegungen festgestellt werden. OnSluggish ist ein Retinaoperator, der Segmente innerhalb von Kanten ausfüllt. OnEdge ist ein Retinaoperator, der Kanten detektiert.

Die drei Räume (bzw. Bildräume) werden (optional) auf Konsistenz geprüft bzw. gegengecheckt (gemeinsame Umrandung, zusammenhängende Flächen), und es werden daraus Flecken bzw. Flächen (Patche) erzeugt. Ein entstehendes Bild (z. B. ein vorverarbeitetes Kamerabild) setzt sich somit aus segmentierten Flecken bzw. Flächen oder Patches zusammen.

Daran schließt sich eine neuro-physiologisch fundierte Weiterverarbeitung an, um strukturierende Elemente herauszuarbeiten:

In einer (optionalen) Farbkonstanzabbildung (Color Constancy Map) werden die Farbwerte nach einem Verfahren von Zeki und Roska so verarbeitet, wie der Mensch sie wahrnimmt, so dass unter natürlichen Beleuchtungsbedingungen ein Himmel blau, Gras grün und ein Rapsfeld gelb sind. Farblich zusammenhängende Felder werden markiert (z. B. Himmel, Wald, Wiese, Feld, Straße, Leitplanken, Hausfarbe, Schilder).

Im Hinblick auf die genannte Vorgehensweise sei beispielsweise auf den Artikel "How does the Cortex Construct Color?" von Vincent Walsh sowie auf die Veröffentlichung "Receptive Field Atlas of the Retinotopic Visual Pathway and some other Sensory Organs using Dynamic cellular Neural Network Models" von J. Hámori und T. Roska verwiesen. Weitere Informationen diesbezüglich finden Sie beispielsweise in der Dissertation "Farbkonstanz und Farbkontrast - Eine Untersuchung mit Hilfe der farbigen Schatten" von A. J. Kallmann (eingereicht am Fachbereich Biologie der Johannes-Gutenberg-Universität Mainz).

Ferner sind einige Details im Hinblick auf eine Farbverarbeitung auch in der Veröffentlichung "Praktische Probleme beim Robot-Fußball - die visuelle Wahrnehmung" von S. Tegtmeyer (veröffentlicht im Rahmen des Seminars "Agenten und Robot-Fußball" des Instituts für Informatik der Universität Münster) beschrieben.

In einer Hubel-Wiesel-Berechnungsabbildung (Hubel-Wiesel Computational Map) werden aus Kantenbildern Extrempunkte von konvex oder konkav gekrümmten Flächen bestimmt. Damit werden linienförmige Abschnitte beschrieben (beispielsweise vertikale Linien, horizontale Linien, konvexe oder konkave Kreisbogenabschnitte).

Die Extremwerte (bzw. Extrempunkte) werden miteinander in Beziehung gebracht, indem beispielsweise versucht wird, mit diesen Stützstellen (also beispielsweise mit den durch die Extrempunkte definierten Stützstellen) Quadrate, Rechtecke, Kreise und/oder Ellipsen zu fitten bzw. anzupassen.

In den Patchbildern wird eine zweidimensionale schnelle Fourier-Transformation (FFT) durchgeführt, um Ortsfrequenzen beispielsweise der vertikalen Liniensegmente zu bestimmen.

Den Farbflächen wird ein Digitalwert zugewiesen. Die Farbtemperatur wird nach dem Plank'schen Strahlungsgesetz bestimmt, um auf eine Einheitsfarbtemperatur zu kalibrieren.

Die Flecken bzw. Flächen bzw. Patches bestehen aus farbkonstanten, abschnittsweise monochromen Flächen mit fester linienförmiger Umrandung.

Durch den OnSluggish-Operator werden die Flächen gefüllt, und durch die Farbkonstanzabbildung (Color Constancy Map) werden die Flächen (zumindest näherungsweise) monochrom.

Durch den OnEdge-Operator und den Hubel-Wiesel-Lininensegmentierer erhalten die Flächen ein feste Umrandung.

Geometrische Objekte wie Kreise, Ellipsen, Quadrate oder Rechtecke werden als besondere Objektklasse behandelt und beispielsweise als Verkehrszeichen, Reifen, Hausfronten oder Fenster interpretiert.

Die Flecken bzw. Flächen bzw. Patches werden in horizontale Flecken (Patches) und vertikale Flächen (Patches) klassifiziert. Die horizontalen Flächen (Patches) werden durch Fluchtpunktbestimmung klassifiziert. Kategorien außerorts sind beispielsweise Straße, Wald, Feld, Wiese, Himmel, Wasser und sonstiges. Zur Trennung von Himmel, Land und Wasser wird beispielsweise der Horizont bestimmt.

Im Folgenden wird beschrieben, wie eine zweidimensionalen (2D) bzw. dreidimensionalen (3D) Modellierung bzw. eine 2D-3D-Modellierung erfolgt. Als Referenzdaten dienen bei einem Ausführungsbeispiel der vorliegenden Erfindung Google-Earth-3D-Modelle, wie z. B. ein bereits existierendes Modell von New York. Durch Photogrammetrie, projektive Abbildungen, Kollinearitätsgleichung und/oder Entzerrung wird das 3D-Modell beispielsweise in eine Blickrichtung der Kamera als Bezugspunkt gedreht. Grauflächen des Google-3D-Häusermodells werden beispielsweise farblich mit einem Originalanstrich versehen. Mit Hilfe beispielsweise eines Gyroskops und/oder einer Schwenkvorrichtung der Kamera wird beispielsweise eine augenblickliche Position bestimmt und dieser Bildausschnitt dargeboten. Dabei werden affine Verzerrungen zurückgerechnet indem nach Fluchtpunkten gesucht wird, und indem auf ein 3D-Würfelmodell zurückgerechnet wird.

Im Folgenden wird beschrieben, wie eine Schattierung (auch als "Shading" bezeichnet) erfolgen kann. Schatten fallen gerade in Häuserschluchten sehr stark. Durch Bestimmung einer Himmelsrichtung und/oder einer Uhrzeit und/oder eines Datums kann der Sonnenstand bestimmt werden. Mit einem Verfahren der Strahlverfolgung (Ray-Tracing-Verfahren) wird bei einem bevorzugten Ausführungsbeispiel der Erfindung der Schattenverlauf nachgerechnet. So kann beispielsweise in das genannte Google-3D-Modell ein Schatten zu einer aktuellen Uhrzeit in das Modell hineingerechnet werden. Die Schattierung wird beispielsweise nach einer Retinex-Theorie berechnet.

Im Folgenden wird beschrieben, wie eine optionale Bewegungsdetektion erfolgen kann. Diesbezüglichen wird zuerst darauf eingegangen, wie eine Eigenbewegung ausgewertet werden kann. Das Fahrzeug (in bzw. an dem die Kamera befestigt ist) bewegt sich beispielsweise linear, beschleunigt oder führt eine Drehbewegung aus. Je nach Geschwindigkeit und Radialabstand werden Einzelbilder nicht mehr aufgelöst (vergleiche z. B. Bahnschwellen auf einem Nachbargleis in einem ICE-Zug), jedoch sind weiter entfernte Objekte scharf sichtbar. Detektierte verschwommene Ränder sind somit von einem konstant sichtbaren Teil getrennt. Geschwindigkeitsabhängige Fließmuster hingegen werden nicht zur Analyse (beispielsweise zum Vergleich des Kamerabilds mit dem Modellbild bzw. zur Positionsbestimmung) herangezogen.

Durch die lineare oder beschleunigte Eigenbewegung rücken Objekte näher ran. Dies wird durch ein Heranzoomen eines Referenzmodells kompensiert. Durch die Eigenbewegung fallen Objekte aus dem Gesichtsfeld heraus. Dies wird durch ein simultane Vorrücken des Referenzmodells berücksichtigt. Durch die Drehbewegung fallen Objekte aus dem Gesichtsfeld heraus. Dies wird durch eine simultane Drehung des Referenzmodells berücksichtigt.

Im Folgenden wird beschrieben, wie einer Verwackelung entgegengewirkt werden kann. Zur Bildstabilisierung wird die Kamera bevorzugt schüttelfrei gelagert bzw. es wird optional eine elektronische Verwackelungskompensationseinheit eingebaut.

Im Folgenden wird beschrieben, wie eine Relativbewegung ausgewertet bzw. berücksichtigt werden kann. Andere Fahrzeuge bewegen sich relativ zu dem Fahrzeug (also beispielsweise zu dem Fahrzeug, an dem die Kamera montiert ist). Beispielsweise überholen andere Fahrzeuge, nähern sich, entfernen sich oder kreuzen die Fahrbahn. Da dies (also die beweglichen Fahrzeuge) keine verlässlichen Merkmale sind, werden sie bevorzugt aus dem Bild (also aus dem Kamerabild bzw. aus dem vorverarbeiteten Kamerabild) herausgerechnet. Zu diesem Zweck werden die anderen Fahrzeuge beispielsweise mit dem OnMove-Detektor erfasst und gekennzeichnet.

Ferner sei darauf hingewiesen, dass der Wind die Wolken bewegt und die Bäume rascheln lässt. Diese Strukturen werden als "wuschig und flauschig" markiert, da sie keine spezifische Aussagekraft haben.

Im Folgenden wird ein Monotoniedetektor beschrieben, der beispielsweise eine Längs-/Hoch-Histogrammierung verwendet. Eine Horizontalhistogrammierung oder Vertikalhistogrammierung ist ein Monotoniedetektor, der eine hohe Aussagekraft für robuste Merkmale hergibt. Die Merkmalsvektoren sind eine Folge von raumzeitlichen 3D-Farbwürfeln, die je nach Geschwindigkeit und Entfernung expandieren bzw. sich kontrahieren. Eine zeitlich dehnbare Aufenthaltszeit wird in der Mustersuche durch skaleninvariante Suchalgorithmen unterstützt.

Im Folgenden wird beschrieben, wie auch durch eine Blende eine Ortsbestimmung verbessert werden kann. Die Kamera ist bevorzugt mit einer automatisch einstellbaren Blende versehen, bzw. regelt automatisch ab, um Blendwirkung durch direkte Sonneneinstrahlung zu mildern.

Im Folgenden wird beschrieben, wie eine Suche erfolgen kann. Bei einem bevorzugten Ausführungsbeispiel wird jeder Bildsequenz ein Mustervektor zugeordnet. Mit Hilfe eines Suchalgorithmus bzw. mit Hilfe von mehreren Suchalgorithmen wird die Folge von Mustervektoren mit abgespeicherten Folgen verglichen, und es wird ein Abstand zwischen einer Mustervektorensequenz und einer Vorlagensequenz (also beispielsweise einer abgespeicherten Folge) ausgegeben. Aus dem Abstand wird dann beispielsweise die Position bestimmt.

Es sei im Übrigen darauf hingewiesen, dass weitere Informationen, die für ein Verständnis der vorliegenden Erfindung nützlich sein können, beispielsweise den folgenden Veröffentlichungen entnommen werden können:

Jorge Nuno de Almeida e Sousa Lobo: "Inertial Sensor Data Integration in Computer Vision Systems" (M. Sc. Thesis an der University of Coimbra, Faculty of Science and Technology, Electrical and Computer Engineering Department);

A. Bartels und S. Zeki: "The Architecture of the Color Center in the Human Visual Brain, New Result and a Preview" (Eur. J. Neurosci. 12 (1), 172 - 193 (2000));

J. Romaya: " A Computer Model of the Land Mondrian Retinex Experiment" (Eur. J. Neurosci. 12 (1), 191 - 193 (2000));

A. Bartels und S. Zeki: "The chronoarchitecture of the cerebral cortex" (Philosophical Transactions of the Royal Society B (2005) 360, 733 - 750);

K. Gegenfurtner: "Color in the Cortex Revisited" (Nature Neuroscience, Vol. 4, Nr. 4, April 2001, Nature Publishing Group);

L. Rüttiger u. a.: "Selective Color Constancy Deficits after Circumscribed Unilateral Brain Lesions" (The Journal of Neuroscience, April 15, 1999, 19 (8): 3098 - 23106).

Zusammenfassend lässt sich somit festhalten, dass ein wesentlicher Aspekt des vorliegenden Patents die retinale Vorverarbeitung darstellt. Dabei wird erfindungsgemäß eine Farbkonstanz erreicht (vergleiche auch die Veröffentlichungen von Zeki). Ferner werden verschiedene Retinaoperatoren eingesetzt (vergleiche auch die Veröffentlichungen von Roska). Ferner wird ein Hubel-Wiese-Netzwerk eingesetzt, wie dies beispielsweise von Klefenz beschrieben wurde. Ein weiterer wichtiger Aspekt der vorliegenden Erfindung besteht in der Google-3D-Häuserreferenzierung mit Drehen des Modells in eine momentane Blickrichtung.

Ein weiterer Aspekt der vorliegenden Erfindung besteht im Übrigen darin, dass in dem 3D-Modell beispielsweise (zumindest im Hinblick auf eine Farbgebung) ein Originalanstrich von Gebäuden oder Häusern verwendet wird.

Es sei im Übrigen darauf hingewiesen, dass die Erzeugung der Modellbilder für die erfindungsgemäße Positionsbestimmung einem Fahrsimulator entspricht, der beispielsweise von Retinabildern gespeist wird. In anderen Worten, während ein Benutzer sich mit seinem Fahrzeug bewegt, werden Modellbilder erzeugt, die an eine ungefähre bzw. geschätzte Position des Benutzers angepasst sind. Eine präzise bzw. feine Bestimmung der Position erfolgt beispielsweise, indem die Modellbilder mit den Kamerabilder bzw. vorverarbeiteten Kamerabildern verglichen werden. Es entsteht also gemäß einem Ausführungsbeispiel der vorliegenden Erfindung ein weltweiter Fahrsimulator, der von Retinabildern gespeist wird.

Im Folgenden wird noch ein weiterer Aspekt der vorliegenden Erfindung beschrieben. Gemäß einem Aspekt der vorliegenden Erfindung gilt:

```
Form = Farbfläche + Kontur.
```

So können beispielsweise durch Retinex und Farbraumhintransformation und -rücktransformation farbverhältniskonstante Farbflächen generiert werden. Eine Kontur umrandet die Farbfläche. Es werden daraufhin lokale Extrema bestimmt, wie dies beispielsweise in der nicht vorveröffentlichten deutschen Patentanmeldung DE 102005047160.9-53 mit dem Titel "Vorrichtung, Verfahren und Computerprogramm zum Ermitteln einer Information über eine Form und/oder eine Lage einer Ellipse in einem graphischen Bild" (Erfinder: Frank Klefenz) beschrieben ist. Jedes lokale Extremum trägt auch eine Information über einen lokalen Krümmungsradius (beispielsweise in Pixeln). Damit kann ein beliebig geformtes Objekt stetig fortsetzbar durch die Stützstellen der Extrema und ihrer gedachten Rekonstruktion und Approximation durch die Krümmungsradien durch die Extrema zusammengesetzt werden. Damit ist eine Objekterkennung auf effiziente und einfache Weise möglich. Beispielsweise eignet sich das Verfahren zur Schrifterkennung. Ein "O" beispielsweise hat vier Extrema. Werden durch die vier Extrema die entsprechenden Krümmungsradien gelegt, ist das "O" stetig fortsetzbar aufbaubar. Das Verfahren kann beispielsweise auf reale Objektszenen erweitert werden, z. B. auf Autos. Ergänzend werden geradlinige Elemente unterschiedlicher Steigung gesucht, was beispielsweise mit einem parallelen Hough-Transformationsverfahren bei entsprechender Musterprogrammierung ebenfalls möglich ist. Ein Hough-Transformationsverfahren ist beispielsweise in der US6732046 beschrieben.

Es sei darauf hingewiesen, dass die beschriebene Weise der Mustererkennung von Zeichen der Art entspricht, wie jeder selbst Zeichen malt. Beispielsweise ist ein B ein vertikaler Strich mit zwei Bögen ("Kringeln"). Wie aus Inhalts-Widergewinnungsverfahren (Content Retrieval Verfahren) bekannt ist, werden in Blockumgebungen eine Anzahl an horizontalen und vertikalen Linien bestimmt und in einem Histogramm aufgezeichnet. Das erfindungsgemäße Verfahren ist viel präziser, da gemäß einem Aspekt der vorliegenden Erfindung ein Histogramm aus Krümmungsradien aufgetragen wird, in denen gezählt wird, wie oft beispielsweise verschiedene Krümmungsradien (beispielsweise mit drei, vier, fünf, sechs, sieben oder unendlich vielen Pixeln als Krümmungsradius) in dem Bild gezählt wurden. Das abgespeicherte Histogramm wird mit dem aktuellen Histogramm eines Suchmusters verglichen.

In anderen Worten, erfindungsgemäßer Weise wird bei der Durchführung einer Hough-Transformation festgestellt, welche Krümmung ein erkannter Linienverlauf aufweist. Dann wird ein Histogramm erstellt, in dem die Häufigkeit von verschiedenen Krümmungsradien ausgetragen sind. Ein entsprechendes Histogramm, das für ein Modellbild erstellt wurde, wird dann mit einem Histogramm für ein aktuelles Kamerabild bzw. ein vorverarbeitetes Kamerabild verglichen. Besteht eine ausreichende Übereinstimmung, so wird festgestellt, dass das aktuelle Kamerabild bzw. das vorverarbeitete Kamerabild mit ausreichender Genauigkeit mit dem Modellbild übereinstimmt. In anderen Worten, das genannte Histogramm, das eine Information über die Häufigkeit des Auftretens von gekrümmten Linien mit verschiedenen Krümmungsradien liefert, kann beispielsweise Teil des oben beschriebenen Merkmalsvektors sein.

Im übrigen sei darauf hingewiesen, dass die Doktorarbeit "Parallel Hardware Architectures for the Life Sciences" von A. Epstein eine komplette Schaltungstechnische Realisierung eines Smith-Watermann Algorithmus zur lokalen Ausrichtung ("Smith-Watermann local alignment algorithmus") beschreibt. Der genannte Algorithmus kann beispielsweise auch in einer "Datenbankabfrage durch Summen"-Anwendung (Query by Humming-Anwendung) eingesetzt werden. Der genannte Algorithmus ist ferner in der DE 10117870 mit dem Titel "Verfahren und Vorrichtung zum Überführen eines Musiksignals in eine Noten-basierte Beschreibung, und Verfahren und Vorrichtung zum Referenzieren eines Musiksignals in einer Datenbank" (Erfinder: Frank Klefenz, Karlheinz Brandenburg und Matthias Kaufmann) beschrieben.

Eine DNA-Sequenzierung (DNA-Sequencing)ist bei einer "Datenbankabfrage durch Summen"-Anwendung (Query by Humming-Anwendung) nicht ein limitierender Zeitfaktor. Bei einer videogestützten Navigation wird es jedoch bevorzugt, eine maximale Rechenleistung eines zur Verfügung stehenden Chips auszunutzen. Durch einen Einsatz eines Hough-Transformations-Chips (zur Durchführung einer Mustererkennung bzw. zur Identifizierung von Liniensegmenten), wie er in Kapitel 7 der Doktorarbeit von Epstein beschrieben ist, und eines DNA-Sequenzierung-Chips, wie er beispielsweise in Kaptiel 8 der Doktorarbeit von Epstein beschrieben ist, kann ein Realzeitsystem geschaffen werden, das Straßenszenen symbolisch mit voller Leistung referenziert. Es sei darauf hingewiesen, dass der Hough-Transformations-Chip gemäß Epstein eine komplette schaltungstechnische Implementierung der Vorrichtung bzw. des Verfahrens gemäß der EP 1032891 ("Verfahren und Einrichtung zur Detektion und Koinzidenzbringung abschnittsweise in monotone und stetige Trajektorien wandelbarer Signalformen"; Erfinder: Frank Klefenz) darstellt.

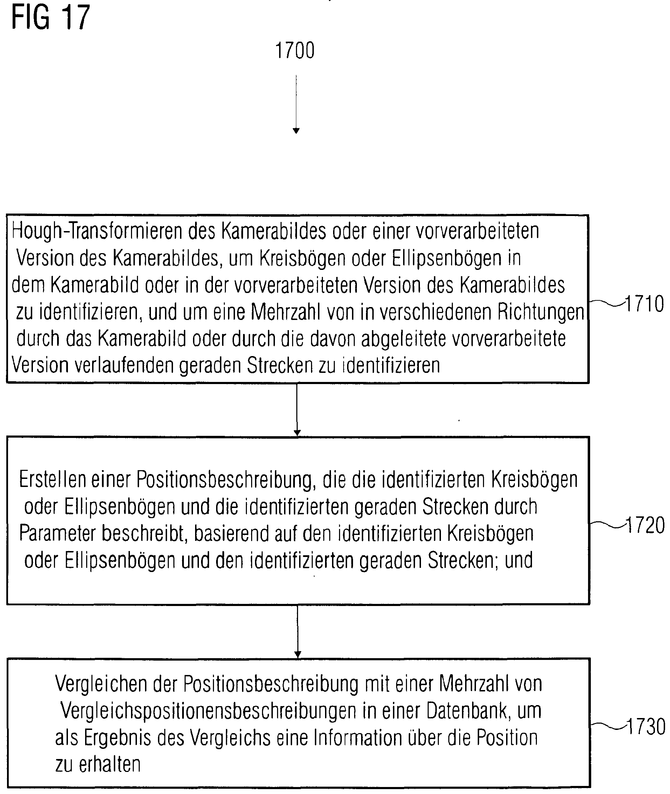

Fig. 17 zeigt ein Flussdiagramm eines erfindungsgemäßen Verfahrens zum Bestimmen einer Position basierend auf einem Kamerabild von einer Kamera. Das Verfahren gemäß der Fig. 17 ist in seiner Gesamtheit mit 1700 bezeichnet. Das Verfahren 1700 umfasst in einem ersten Schritt 1710 ein Hough-Transformieren des Kamerabildes oder einer vorverarbeiteten Version des Kamerabildes, um Kreisbögen oder Ellipsenbögen in dem Kamerabild oder in der vorverarbeiteten Version des Kamerabildes zu identifizieren, und um eine Mehrzahl von in verschiedenen Richtungen durch das Kamerabild oder durch die davon abgeleitete vorverarbeitete Version verlaufenden geraden Strecken zu identifizieren. Das Verfahren 1700 umfasst in einem zweiten Schritt 1720 ein Erstellen einer Positionsbeschreibung, die die identifizierten Kreisbögen oder Ellipsenbögen und die identifizierten geraden Strekcne durch Parameter beschreibt, basierend auf den identifizierten Kreisbögen oder Ellipsenbögen und den identifizierten geraden Strecken. Das Verfahren 1700 umfasst ferner in einem dritten Schritt 1730 ein Vergleichen der Positionsbeschreibung mit einer Mehrzahl von Vergleichs-Positionsbeschreibungen in einer Datenbank, um als Ergebnis des Vergleichs eine Information über die Position zu erhalten.

Das Verfahren 1700 kann ferner um all die Schritte ergänzt werden, die im Rahmen der vorliegenden Beschreibung erläutert wurden.

Die Vorliegende Erfindung umfasst auch ein entsprechendes Computerprogramm. In anderen Worten, die erfindungsgemäße Vorrichtung und das erfindungsgemäße Verfahren kann in Hardware oder in Software implementiert werden. Die Implementation kann auf einem digitalen Speichermedium, beispielsweise einer Diskette, einer CD, einer DVD, in einem ROM, PROM, EPROM, EEPROM oder einem FLASH-Speicher mit elektronisch auslesbaren Steuersignalen erfolgen, die so mit einem programmierbaren Computersystem zusammenwirken können, dass das entsprechende Verfahren ausgeführt wird. Allgemein besteht die vorliegende Erfindung somit auch in einem Computer-Programm-Produkt mit auf einem maschinenlesbaren Träger gespeichertem Programmcode zur Durchführung des erfindungsgemäßen Verfahrens, wenn das Computerprogramm-Produkt auf einem Rechner abläuft. In anderen Worten ausgedrückt, die vorliegende Erfindung kann als ein Computer-Programm mit einem Programmcode zur Durchführung des erfindungsgemäßen Verfahrens, wenn das Computer-Programm auf einem Computer abläuft, realisiert werden.

**Patentansprüche**

1. Vorrichtung (100) zum Bestimmen einer Position basierend auf einem Kamerabild (112) von einer Kamera, mit folgenden Merkmalen:

   einem Hough-Transformator (110), der ausgelegt ist, um Kreisbögen oder Ellipsenbögen in dem Kamerabild oder in einer davon abgeleiteten vorverarbeiteten Version des Kamerabildes zu identifizieren, und um eine Mehrzahl von in verschiedenen Richtungen durch das Kamerabild oder durch die vorverarbeitete Version verlaufenden geraden Strecken zu identifizieren, wobei der Hough-Transformator ausgelegt ist, um eine Information über eine Lage eines identifizierten Kreisbogens oder Ellipsenbogens zu liefern, und um eine Information über einen Krümmungsradius des identifizierten Kreisbogens oder Ellipsenbogens zu liefern;
   einem Positions-Beschreibungs-Ersteller (120), der ausgelegt ist, um basierend auf den identifizierten Kreisbögen oder Ellipsenbögen und auf den identifizierten geraden Strecken eine Positionsbeschreibung (122) zu erhalten, die die identifizierten Kreisbögen oder Ellipsenbögen und die identifizierten geraden Strecken durch Parameter beschreibt, wobei die Positionsbeschreibung für identifizierte Kreisbögen oder Ellipsenbögen eine Information über eine Lage eines identifizierten Kreisbogens oder Ellipsenbogens und eine Information über einen Krümmungsradius des identifizierten Kreisbogens oder Ellipsenbogens umfasst; und
   einen Datenbank-Vergleicher (130), der ausgelegt ist, um die Positionsbeschreibung mit einer Mehrzahl von Vergleichs-Positionsbeschreibungen (132) zu vergleichen, und um als Ergebnis des Vergleichs eine Information (134) über eine Position zu erhalten, wobei der Datenbank-Vergleicher (130) ausgelegt ist, um einen Unterschied zwischen einem Merkmalsvektor der Positionsbeschreibung (122) und Merkmalsvektoren der Vergleichs-Positionsbeschreibungen (132) zu bilden, und um ansprechend darauf, dass der Unterschied für eine der Vergleichs-Positions-Beschreibungen ausreichend klein ist, eine zu der entsprechenden Vergleichs-Positions-Beschreibung (132) gehörige Positionsinformation als Ergebnis auszugeben, wobei der Positions-Beschreibungs-Ersteller (120) ausgelegt ist, um als die Positionsbeschreibung eine Beschreibung eines Streckenverlaufs zu erhalten, die den Streckenverlauf als eine geordnete Beschreibung (370) von identifizierten Kreisbögen oder Ellipsenbögen und geraden Strecken wiedergibt.

2. Vorrichtung gemäß Anspruch 1, wobei der Positions-Beschreibungs-Ersteller (120) ausgelegt ist, um die Positionsbeschreibung (122) so zu erhalten, dass die Positionsbeschreibung eine Beschreibung eines Fahrbahnrandes (256a, 256b; 274b, 274c), einer Fahrspurbegrenzung oder einer Fahrbahnmitte umfasst.

3. Vorrichtung (100) gemäß einem der Ansprüche 1 bis 2, wobei der Hough-Transformator (110) ausgelegt ist, um eine Information über eine Lage, eine Bogenlänge, einen Krümmungsradius oder einen Krümmungswinkel der identifizierten Kreisbögen oder Ellipsenbögen befreitzustellen, und um eine Information über eine Lage, eine Länge oder eine Richtung der identifizierten geraden Strecken bereitzustellen.

4. Vorrichtung (100) gemäß einem der Ansprüche 1 bis 3, wobei der Positions-Beschreibungs-Ersteller (120) ausgelegt ist, um aus durch den Hough-Transformator (110) gelieferten Bogen-Verlaufs-Parametern und StreckenVerlaufs-Parametern, die die identifizierten Kreisbögen oder Ellipsenbögen und die identifizierten geraden Strecken beschreiben, die Positionsbeschreibung (122) zu erhalten.

5. Vorrichtung (100) gemäß einem der Ansprüche 1 bis 4, wobei der Positions-Beschreibungs-Ersteller (120) ausgelegt ist, um eine Beschreibung des Streckenverlaufs durch Aneinanderfügen von ausgewählten benachbarten identifizierten Kreisbögen oder Ellipsenbögen oder geraden Strecken zu erstellen, wobei der Positions-Beschreibungs-Ersteller (120) ausgelegt ist, um die für die Beschreibung des Streckenverlaufs verwendeten ausgewählten Kreisbögen oder Ellipsenbögen oder geraden Strecken so aus einer Gesamtheit von identifizierten Kreisbögen oder Ellipsenbögen und identifizierten geraden Strecken auszuwählen, dass die ausgewählten Kreisbögen oder Ellipsenbögen und geraden Strecken einen durchgehenden Streckenverlauf von einem vorgegebenen Ausgangspunkt (354) zu einem vorgegebenen Endpunkt (356) beschreiben.

6. Vorrichtung (100) gemäß einem der Ansprüche 1 bis 5, wobei die Vorrichtung einen Bild-Abbilder (264) umfasst, der ausgelegt ist, um das Bild (208) von der Kamera oder ein vorverarbeitetes Kamerabild durch eine projektive Abbildung so abzubilden, dass ein dadurch entstehendes vorverarbeitetes Bild eine Draufsicht (266) auf eine von der Kamera aufgenommene Landschaft zeigt, wenn das Bild (208) von der Kamera eine Panoramaansicht der Landschaft zeigt.

7. Vorrichtung (100) gemäß einem der Ansprüche 1 bis 6, wobei der Positions-Beschreibungs-Ersteller (120) ausgelegt ist, um basierend auf den identifizierten Kreisbögen oder Ellipsenbögen und auf den identifizierten geraden Strecken einen Merkmalsvektor zu erzeugen, der aufeinanderfolgende Abschnitte des Streckenverlaufs beschreibt.

8. Vorrichtung (100) gemäß Anspruch 7, wobei der Datenbank-Vergleicher (130) ausgelegt ist, um den Merkmalsvektor (122) mit einer Mehrzahl von Vergleichs-Merkmalsvektoren (132) zu vergleichen, die Positionen zugeordnet sind,
um ein Maß für Unterschiede zwischen dem Merkmalsvektor und den Vergleichs-Merkmalsvektoren zu erhalten, und
um basierend auf dem Maß für den Unterschied, die zu dem Merkmalsvektor gehörige Position (134) zu bestimmen.

9. Vorrichtung (100) gemäß Anspruch 1, wobei die Vorrichtung einen Kantenerkenner (210) umfasst, der ausgelegt ist, um Kanten in dem Bild zu erkennen und um basierend auf dem Bild ein Kantenbild zu erzeugen;
wobei der Hough-Transformator (110) ausgelegt ist, um eine Lageinformation (114) über die identifizierten Kreisbögen oder Ellipsenbögen bereitzustellen, und
um eine Lageinformation (116) über die identifizierten geraden Strecken bereitzustellen;
wobei der Positions-Beschreibungs-Ersteller (120) ausgelegt ist, um basierend auf den identifizierten Kreisbögen oder Ellipsenbögen und den identifizierten geraden Strecken eine Beschreibung (122) des Streckenverlaufs in Form einer geordneten Zusammenstellung (370) von Kreisbögen oder Ellipsenbögen und von geraden Strecken, die zusammen den Streckenverlauf beschreiben, zu erzeugen; und
wobei der Datenbank-Vergleicher (130) ausgelegt ist, um die Beschreibung des Streckenverlaufs in Form der geordneten Beschreibung (370) mit einer Mehrzahl von Vergleichs-Beschreibungen (132), die Vergleichs-Streckenverläufe in Form von geordneten Zusammenstellungen von Kreisbögen oder Ellipsenbögen und von geraden Strecken beschreiben, und denen Positionsinformationen zugeordnet sind, zu vergleichen,
um ein Maß für Abweichungen zwischen der Beschreibung des Streckenverlaufs und den Vergleichs-Beschreibungen zu ermitteln, und
um die einem bestimmten Vergleichs-Streckenverlauf zugeordnete Positionsinformation als die bestimmte Position (134) zu liefern, wenn eine Abweichung zwischen der Beschreibung des Streckenverlaufs und der Vergleichs-Beschreibung des bestimmten Vergleichs-Streckenverlaufs kleiner als eine vorgegebene Schranke oder kleiner als für die übrigen Vergleichs-Streckenverläufe bestimmte Abweichungen ist.

10. Vorrichtung (100) gemäß einem der Ansprüche 1 bis 9, wobei die Vorrichtung ausgelegt ist, um eine Position eines Fahrzeugs basierend auf dem Kamerabild (112) oder basierend auf der Mehrzahl von Kamerabildern zu bestimmen.

11. Vorrichtung (100) gemäß einem der Ansprüche 1 bis 10, wobei der Positions-Beschreibungs-Ersteller (120) ausgelegt ist, um als die Positionsbeschreibung (122) eine Beschreibung einer Umgebung zu erhalten, die die Umgebung als eine Darstellung von identifizierten Kreisbögen oder Ellipsenbögen oder geraden Strecken beschreibt.

12. Vorrichtung (100) gemäß Anspruch 11, wobei der Datenbank-Vergleicher (130) ausgelegt ist, um die Positionsbeschreibung (122) mit einer Mehrzahl von Vegleichs-Positionsbeschreibungen (132) zu vergleichen, um als Ergebnis des Vergleichs die Information (134) über die Position zu erhalten, wobei die Vergleichs-Positionsbeschreibungen Kreisbögen oder Ellipsenbögen und gerade Strecken, die in einem dreidimensionalen Umgebungsmodell enthalten sind, beschreiben.

13. Verfahren (1700) zum Bestimmen einer Position basierend auf einem Kamerabild von einer Kamera, mit folgenden Schritten:

Hough-Transformieren (1710) des Kamerabildes oder einer vorverarbeiteten Version des Kamerabildes, um Kreisbögen oder Ellipsenbögen in dem Kamerabild oder in der vorverarbeiteten Version des Kamerabildes zu identifizieren, und um eine Mehrzahl von in verschiedenen Richtungen durch das Kamerabild oder durch die davon abgeleitete vorverarbeitete Version verlaufenden geraden Strecken zu identifizieren, wobei durch das Hough-Transformieren eine Information über eine Lage eines identifizierten Kreisbogens oder Ellipsenbogens und eine Information über einen Krümmungsradius des identifizierten Kreisbogens oder Ellipsenbogens geliefert wird; Erstellen (1720) einer Positionsbeschreibung, die die identifizierten Kreisbögen oder Ellipsenbögen und die identifizierten geraden Strecken durch Parameter beschreibt, basierend auf den identifizierten Kreisbögen oder Ellipsenbögen und den identifizierten geraden Strecken, wobei die Positionsbeschreibung für identifizierte Kreisbögen oder Ellipsenbögen eine Information über eine Lage eines identifizierten Kreisbogens oder Ellipsenbogens und eine Information über einen Krümmungsradius des identifizierten Kreisbogens oder Ellipsenbogens umfasst; und Vergleichen (1730) der Positionsbeschreibung mit einer Mehrzahl von Vergleichspositionsbeschreibungen in einer Datenbank, um als Ergebnis des Vergleichs eine Information über die Position zu erhalten, wobei ein Unterschied zwischen einem Merkmalsvektor der Positionsbeschreibung (122) und Merkmalsvektoren der Vergleichs-Positionsbeschreibungen (132) gebildet wird, und wobei ansprechend darauf, dass der Unterschied für eine der Vergleichs-Positions-Beschreibungen ausreichend klein ist, eine zu der entsprechenden Vergleichs-Positions-Beschreibung (132) gehörige Positionsinformation als Ergebnis ausgegeben wird; wobei als die Positionsbeschreibung eine Beschreibung eines Streckenverlaufs erhalten wird, die den Streckenverlauf als eine geordnete Beschreibung (370) von identifizierten Kreisbögen oder Ellipsenbögen und geraden Strecken wiedergibt.

14. Computerprogramm -Produkt zur Durchführung eines Verfahrens gemäß dem Patentanspruch 13, wenn das Computerprogramm -Produkt auf einem Computer abläuft.

**Claims**

1. Apparatus (100) for determining a position on the basis of a camera image (112) from a camera, comprising:

a Hough transformer (110) formed to identify circular arcs or elliptical arcs in the camera image or in a preprocessed version of the camera image derived therefrom, and to identify a plurality of straight stretches passing in various directions through the camera image or through the preprocessed version, wherein the Hough transformer is formed to provide information on a position of an identified circular arc or elliptical arc, and to provide information on a radius of curvature of the identified circular arc or elliptical arc; a positional description establisher (120) formed to obtain a positional description (122) describing the identified circular arcs or elliptical arcs and the identified straight stretches by parameters, on the basis of the identified circular arcs or elliptical arcs and on the identified straight stretches, wherein the positional description for identified circular arcs or elliptical arcs comprises information on a position of an identified circular arc or elliptical arc and information on a radius of curvature of the identified circular arc or elliptical arc; and

a database comparator (130) formed to compare the positional description with a plurality of comparative positional descriptions (132), and to obtain information (134) on a position as a result of the comparison,

wherein the database comparator (130) is formed to form a difference between a feature vector of the positional description (122) and feature vectors of the comparative positional descriptions (132),

and, responsive to the difference for one of the comparative positional descriptions being sufficiently small, to output positional information belonging to the corresponding comparative positional descriptions (132) as a result,

wherein the positional description establisher (120) is formed to obtain a description of a course of the road, which reproduces the course as an ordered description (370) of identified circular arcs or elliptical arcs and straight stretches, as the positional description.

2. Apparatus according to claim 1, wherein the positional description establisher (120) is formed to obtain the positional description (122) so that the positional description includes a description of a roadway edge (256a, 256b; 274b, 274c), a lane boundary or a roadway center.

3. Apparatus (100) according to one of claims 1 or 2, wherein the Hough transformer (110) is formed to provide information on a location, an arc length, a radius of curvature, or an angle of curvature of the identified circular arcs or elliptical arcs, and provide information on a location, a length or a direction of the identified straight stretches.

4. Apparatus (100) according to one of claims 1 to 3, wherein the positional description establisher (120) is formed to obtain the positional description (122) from arc course parameters and straight stretch course parameters provided by the Hough transformer (110), which describe the identified circular arcs or elliptical arcs and the identified straight stretches.

5. Apparatus (100) according to one of claims 1 to 4, wherein the positional description establisher (120) is formed to establish a description of the course of the road by patching selected adjacent identified circular arcs or elliptical arcs or straight stretches together,

wherein the positional description establisher (120) is formed to select the selected circular arcs or elliptical arcs or straight stretches used for the description of the course of the road from an entirety of identified circular arcs or elliptical arcs and identified straight stretches so that the selected circular arcs or elliptical arcs and straight stretches describe a continuous course of the road from a default starting point (354) to a default end point (356).

6. Apparatus (100) according to one of claims 1 to 5, wherein the apparatus includes an image mapper (264), which is formed to map the image (208) from the camera or a preprocessed camera image by projective mapping so that a preprocessed image developing thereby shows a top view (266) onto a landscape captured by the camera when the image (208) from the camera shows a panoramic view of the landscape.

7. Apparatus (100) according to one of claims 1 to 6, wherein the positional description establisher (120) is formed to generate a feature vector describing successive sections of the course of the road on the basis of the identified circular arcs or elliptical arcs and on the identified straight stretches.

8. Apparatus (100) according to claim 7, wherein the database comparator (130) is formed to compare the feature vector (122) with a plurality of comparative feature vectors (132) associated with positions, to obtain a measure of differences between the feature vector and the comparative feature vectors, and to determine the position (134) belonging to the feature vector on the basis of the measure of the difference.

9. Apparatus (100) according to claim 1, wherein the apparatus includes an edge detector (210), which is formed to detect edges in the image and to generate an edge image on the basis of the image;

wherein the Hough transformer (110) is formed to provide location information (114) on the identified circular arcs or elliptical arcs, and to provide location information (116) on the identified straight stretches;

wherein the positional description establisher (120) is formed to generate a description (122) of the course of the road in form of an ordered combination (370) of circular arcs or elliptical arcs and of straight stretches, which together describe the course of the road, on the basis of the identified circular arcs or elliptical arcs and the identified straight stretches; and

wherein the database comparator (130) is formed to compare the description of the course of the road in form of the ordered description (370) with a plurality of comparative descriptions (132), which describe comparative courses of roads in form of ordered combinations of circular arcs or elliptical arcs and of straight stretches and to which positional information are associated,
to determine a measure of deviations between the description of the course of the road and the comparative descriptions, and
to provide the positional information associated with a certain comparative course of the road as the particular position (134) if a deviation between the description of the course of the road and the comparative description of the particular comparative course of the road is smaller than a default threshold or smaller than deviations determined for the remaining comparative courses of roads.

10. Apparatus (100) according to one of claims 1 to 9, wherein the apparatus is formed to determine a position of a vehicle on the basis of the camera image (112) or on the basis of the plurality of camera images.

11. Apparatus (100) according to one of claims 1 to 10, wherein the positional description establisher (120) is formed to obtain a description of an environment describing the environment as a representation of identified circular arcs or elliptical arcs or straight stretches, as the positional description (122).

12. Apparatus (100) according to claim 11, wherein the database comparator (130) is formed to compare the positional description (122) with a plurality of comparative positional descriptions (132), to obtain the information (134) on the position as a result of the comparison, wherein the comparative positional descriptions describe circular arcs or elliptical arcs and straight stretches included in a three-dimensional model of the environment.

13. Method (1700) of determining a position on the basis of a camera image from a camera, comprising:

Hough-transforming (1710) the camera image or a preprocessed version of the camera image, in order to identify circular arcs or elliptical arcs in the camera image or in the preprocessed version of the camera image, and to identify a plurality of straight stretches passing in various directions through the camera image or through the preprocessed version derived therefrom, wherein information on a position of an identified circular arc or elliptical arc and information on a radius of curvature of the identified circular arc or elliptical arc are provided by the Hough-transforming;
establishing (1720) a positional description describing the identified circular arcs or elliptical arcs and the identified straight stretches by parameters, on the basis of the identified circular arcs or elliptical arcs and the identified straight stretches,
wherein the positional description for identified circular arcs or elliptical arcs comprises information on a position of an identified circular arc or elliptical arc and information on a radius of curvature of the identified circular arc or elliptical arc; and
comparing (1730) the positional description with a plurality of comparative positional descriptions in a database, in order to obtain information on the position as a result of the comparison, wherein a difference between a feature vector of the positional description (122) and feature vectors of the comparative positional descriptions (132) are formed, and wherein, responsive to the difference for one of the comparative positional descriptions being sufficiently small, positional information belonging to the corresponding comparative positional description (132) are output as a result; wherein a description of a course of the road, which reproduces the course as an ordered description (370) of identified circular arcs or elliptical arcs and straight stretches, is obtained as the positional description.

14. Computer program product for performing a method according to claim 13, when the computer program product is executed on a computer.

**Revendications**

1. Dispositif (100) pour déterminer une position sur base d'une image de caméra (112) d'une caméra, aux caractéristiques suivantes:

un transformateur de Hough (110) conçu pour identifier des arcs de cercle ou des arcs d'ellipse dans l'image de caméra ou dans une version prétraitée de l'image de caméra dérivée de cette dernière, et pour identifier une pluralité de lignes droites s'étendant dans différentes directions dans l'image de caméra ou dans la version prétraitée, dans lequel le transformateur de Hough est conçu pour fournir une information sur un emplacement d'un arc de cercle ou d'un arc d'ellipse identifié, et pour fournir une information sur un rayon de courbure de l'arc de cercle ou de l'arc d'ellipse identifié;
un créateur de description de position (120) conçu pour recevoir, sur base des arcs de cercle ou des arcs d'ellipse identifiés, et sur base des lignes droites identifiées, une description de position (122) décrivant par des paramètres les arcs de cercle ou les arcs d'ellipse identifiés, et les lignes droites identifiées,

dans lequel la description de position pour les arcs de cercle ou les arcs d'ellipse identifiés comprend une information sur un emplacement d'un arc de cercle ou d'un arc d'ellipse identifié, et une information sur un rayon de courbure de l'arc de cercle ou de l'arc d'ellipse identifié; et un comparateur de base de données (130) conçu pour comparer la description de position avec une pluralité de descriptions de position de comparaison (132), et

pour obtenir, comme résultat de la comparaison, une information (134) sur une position,

dans lequel le comparateur de base de données (130) est conçu pour former une différence entre un vecteur de caractéristique de la description de position (122) et des vecteurs de caractéristique des descriptions de position de comparaison (132),

et pour sortir comme résultat, en réponse au fait que la différence pour l'une des descriptions de position de comparaison est suffisamment petite, une information de position appartenant à la description de position de comparaison correspondante (132),

dans lequel le créateur de description de position (120) est conçu pour obtenir, comme description de position, une description d'un parcours qui reproduit le parcours comme une description ordonnée (370) des arcs de cercle ou des arcs d'ellipse et des lignes droites identifiés.

2. Dispositif selon la revendication 1, dans lequel le créateur de description de position (120) est conçu pour obtenir la description de position (122) de sorte que la description de position comprenne une description d'un bord de route (256a, 256b; 274b, 274c), d'une délimitation de voie de circulation, ou d'un centre de route.

3. Dispositif (130) selon l'une des revendications 1 à 2, dans lequel le transformateur de Hough (110) est conçu pour mettre à disposition une information sur un emplacement, une longueur d'arc, un rayon de courbure ou un angle de courbure des arcs de cercle ou des arcs d'ellipse identifiés, et pour mettre à disposition une information sur un emplacement, une longueur ou une direction des lignes droites identifiées.

4. Dispositif (100) selon l'une des revendications 1 à 3, dans lequel le créateur de description de position (120) est conçu pour obtenir, à partir des paramètres de parcours d'arc et des paramètres de parcours de ligne fournis par le transformateur de Hough (110) qui décrivent les arcs de cercle ou les arcs d'ellipse identifiés et les lignes droites identifiées, la description de position (122).

5. Dispositif (130) selon l'une des revendications 1 à 4, dans lequel le créateur de description de position (120) est conçu pour créer une description du parcours en assemblant les arcs de cercle ou les arcs d'ellipse ou les lignes droites voisins identifiés sélectionnés,

dans lequel le créateur de description de position (120) est conçu pour sélectionner parmi un ensemble d'arcs de cercle ou d'arcs d'ellipse identifiés et de lignes droites identifiées les arcs de cercle ou les arcs d'ellipse ou les lignes droites sélectionnés utilisés pour la description du parcours de sorte que les arcs de cercle ou les arcs d'ellipse et les lignes droites sélectionnés décrivent un parcours continu d'un point de départ prédéterminé (354) à un point final prédéterminé (356).

6. Dispositif (130) selon l'une des revendications 1 à 5, dans lequel le dispositif comporte un reproducteur d'image (264) conçu pour reproduire l'image (208) de la caméra ou une image de caméra prétraitée par une reproduction projective de sorte que l'image prétraitée qui en résulte montre une vue de dessus (266) d'un paysage capturé par la caméra lorsque l'image (208) de la caméra montre une vue panoramique du paysage.

7. Dispositif (100) selon l'une des revendications 1 à 6, dans lequel le créateur de description de position (120) est conçu pour générer, sur base des arcs de cercle ou des arcs d'ellipse identifiés et des lignes droites identifiées, un vecteur de caractéristique qui décrit des segments successifs du parcours.

8. Dispositif (100) selon la revendication 7, dans lequel le comparateur de base de données (130) est conçu pour comparer le vecteur de caractéristique (122) avec une pluralité de vecteurs de caractéristique (132) associés à des positions,

pour obtenir une mesure des différences entre le vecteur de caractéristique et les vecteurs de caractéristique de comparaison, et

pour déterminer, sur base de la mesure de la différence, la position (134) appartenant au vecteur caractéristique.

9. Dispositif (130) selon la revendication 1, dans lequel le dispositif comporte un identificateur de bord (210) conçu pour reconnaître des bords dans l'image et pour générer une image de bord sur base de l'image;

dans lequel le transformateur de Hough (110) est conçu pour mettre à disposition une information d'emplacement (114) sur les arcs de cercle ou les arcs d'ellipse identifiés, et

pour mettre à disposition une information d'emplacement (116) sur les lignes droites identifiées;

dans lequel le créateur de description de position (120) est conçu pour générer, sur base des arcs de cercle ou des arcs d'ellipse identifiés et des lignes droites identifiées, une description (122) du parcours sous forme d'un assemblage ordonné (370) d'arcs de cercle ou d'arcs d'ellipse et de lignes droites qui, ensemble, décrivent le parcours; et

dans lequel le comparateur de base de données (130) est conçu pour comparer la description du parcours sous forme de la description ordonnée (370) avec une pluralité de descriptions de comparaison (132) qui décrivent des parcours de comparaison sous forme d'assemblages ordonnés d'arcs de cercle ou d'arcs d'ellipse et de lignes droites et auxquels sont associées des informations de position,

pour déterminer une mesure d'écarts entre la description du parcours et les descriptions de comparaison, et

pour fournir l'information de position associée à un parcours de comparaison déterminé comme position déterminée (134) lorsqu'un écart entre la description du parcours et la description de comparaison du parcours de comparaison déterminé est inférieur à une limite prédéterminée ou inférieur aux écarts déterminés pour les parcours de comparaison restants.

10. Dispositif (130) selon l'une des revendications 1 à 9, dans lequel le dispositif est conçu pour déterminer une position d'un véhicule sur base de l'image de caméra (112) ou sur base de la pluralité d'images de caméra.

11. Dispositif (130) selon l'une des revendications 1 à 10, dans lequel le créateur de description de position (120) est conçu pour obtenir, comme description de position (122), une description d'un environnement qui décrit l'environnement comme une représentation des arcs de cercle ou des arcs d'ellipse ou des lignes droites identifiés.

12. Dispositif (100) selon la revendication 11, dans lequel le comparateur de base de données (130) est conçu pour comparer la description de position (122) avec une pluralité de descriptions de position de comparaison (132),

pour obtenir, comme résultat de la comparaison, l'information (134) sur la position,

dans lequel les descriptions de position de comparaison décrivent des arcs de cercle ou des arcs d'ellipse et des lignes droites qui sont contenus dans un modèle d'environnement tridimensionnel.

13. Procédé (1700) de détermination d'une position sur base d'une image d'une caméra, aux étapes suivantes consistant à:

effectuer une transformation de Hough (1710) de l'image de caméra ou d'une version prétraitée de l'image de caméra pour identifier des arcs de cercle ou des arcs d'ellipse dans l'image de caméra ou dans la version prétraitée de l'image de caméra, et pour identifier une pluralité de lignes droites s'étendant dans différentes directions dans l'image de caméra ou dans la version prétraitée dérivée de cette dernière,

dans lequel est fournie, par la transformation de Hough, une information sur un emplacement d'un arc de cercle ou d'un arc d'ellipse identifié et une information sur un rayon de courbure de l'arc de cercle ou de l'arc d'ellipse identifié;

créer (1720) une description de position qui décrit par des paramètres les arcs de cercle ou les arcs d'ellipse identifiés et les lignes droites identifiées, sur base des arcs de cercle ou des arcs d'ellipse identifiés et des lignes droites identifiées,

dans lequel la description de position pour les arcs de cercle ou les arcs d'ellipse identifiés comporte une information sur un emplacement d'un arc de cercle ou d'un arc d'ellipse identifié et une information sur un rayon de courbure de l'arc de cercle ou de l'arc d'ellipse identifié; et

comparer (1730) la description de position avec une pluralité de descriptions de position de comparaison dans une base de données, pour obtenir, comme résultat de la comparaison, une information sur la position,

dans lequel est formée une différence entre un vecteur de caractéristique de la description de position (122) et les vecteurs de caractéristique des descriptions de position de comparaison (132),

et dans lequel est sortie comme résultat, en réponse au fait que la différence pour l'une des descriptions de position de comparaison est suffisamment petite, une information de position appartenant à la description de position de comparaison correspondante

dans lequel est obtenue, comme description de position, une description d'un parcours qui reproduit le parcours sous forme d'une description ordonnée (370) des arcs de cercle ou des arcs d'ellipse et des lignes droites identifiés.

14. Produit de programme d'ordinateur pour la mise en oeuvre d'un procédé selon la revendication 13 lorsque le produit de programme d'ordinateur est exécuté sur un ordinateur.

# FIG 1

100

Kamerabild

112

| Hough-Transforamtor | 110 |

Information über Kreisbögen
oder Ellipsenbögen in dem Bild

Information über in
verschiedenen
Richtungen durch das Bild
verlaufende gerade Strecken

114                116

| Postions-Beschreibungs-Ersteller | 120 |

Positionsbeschreibung

Vergleichs-
Positionsbeschreibungen

122

130    Datenbank-Vergleicher

132

134    Information über
eine Position

# FIG 2A

Bild

200

208

Bildvorverarbeitung:
* Binarisierung
* Kantendetektion
  (optional)

210

212 — vorverarbeitetes Bild

Hough-Transformation

200

222 — Information über Extrempunkte von Kreisbögen oder Ellipsen in dem vorverarbeiteten Bild

Entfernen von Extrema,
deren Krümmungsradius sich von einem
Krümmungsradius benachbarter Extrema
um mehr als eine vorgegebene maximal
zulässige Abweichung unterscheidet (optional)

230

232

Extremabild

240

242c

242b

244c

244b

242a

244a

## FIG 2B

Extremabild

↓ ～232

| Fluchtpunktbestimmung (Schnittpunkt von Geraden) | ～252 |

↓ ～254

| Entfernung von Punkten oberhalb des Fluchtpunktes oder oberhalb des Horizonts | ～260 |

↓ ～262

Extremabild ohne Himmel

↓

| Projektive Abbildung | ～264 |

↓ ～266

Draufsicht auf Extremabild

zusätzliche Draufsichten auf Extremabilder

270a  270b  ～270c

↓  ↓  ↓  ↓

| Zusammensetzen mehrer Draufsichten auf Extremabild | ～272 |

↓ ～274

zusammengesetzte Draufsicht auf Extremabild

↓

256 · 257a · 256c · 256c · 256b · 257b · 256a · 256b

268

Zusammengesetzte Draufsicht
auf Extremabild

280

282

Entfernung von
nicht-Straßen-
Elementen
(z.B., gezackten Linien)

"Stetigkeit der
Krümmungsradien"

Kleiner Star-
Ojekte
(Gebüsch,
Personen...)

Entfernte Punkte, die kleinen benachbarten Punkt aufweisen, dessen
Krümmungsradius sich um weniger
als eine vorgegebene Abweichung
unterscheidet

284

zusammengesetzte Draufsicht auf Extremabild,
die keine unregelmäßigen oder gezachten
Verläufe mehr umfasst

284a

284

Konturen, die Waldrand,
Felder, Gebäude am
Straßenrand (mit
wesentlichen geraden
Berandungen)
beschreiben

Weitere Entfernung von Punkten,
die nicht Straßenränder sind

286

288

zusammengesetzte Draufsicht auf Extremabild,
die nur noch Straßenränder umfasst.

2.Hough-Transformation

290

292

Liste von Geraden und Bögen

linker Straßenrand

274b

274c  rechter Straßenrand

288a

## FIG 2C

292a

↓

① Bogen 1:
Mittelpunkt (M)
Radius (r)

② Bogen 2: M, r

③ Gerade 1:
Richtung
(absolut oder
relativ)
Länge

④ :

⑤ :

⑥ :

⊢~292

Liste von Geraden
und Bögen

| Erstellung einer
Positionsbeschreibung | ~294 |

⊢~296

| Datenbank- Vergleich | ~298 |

⊢~299

Information über eine Position

# FIG 2D

FIG 2E

288a
↓

288i  288j
288h
288g
288f
288e
288d          288l
288c
288b
288k

288n
↓

288h 288i 288j
288g
288f
288e
288d
288c
288b

FIG 3A

320
↓

322   324   326

FIG 3B

340
↓

352

356
×  Endpunkt
348e
⑤
④ 348d
348c
③
348b
②
346
348a
①
342   350   354   Anfangspunkt

FIG 3C

370
↓

① Gerade Strecke, Länge 500m
② Bogen Rechts, Krümmungsradius 150m, Winkel 30°
③ Gerade Strecke, Länge 300m
④ Bogen Links, Krümmungsradius 100m, Winkel 30°
⑤ Gerade Strecke, Länge 400m

# FIG 4

410

430

412

432

←— 450

←— 470

FIG 5

500 →

FIG 6

FIG 7

700 →

FIG 8

800 →

900

FIG 9

Originalvideobild
**FIG 10A**

Thresholdbild
**FIG 10B**

Konturbild
**FIG 10C**

Extremabild
**FIG 10D**

**Preview**

Extremabild

# FIG 10E

---

WinDelayLine

File Start Demo Stop About

Raw Ellipses: 255
Result Ellipses: 35
Time Calc Ellipses: 1306.129
Dir 0 Points: 2048
Dir 1 Points: 461
Dir 2 Points: 2700
Dir 3 Points: 680
Dir 0 Objects: 236
Dir 1 Objects: 101
Dir 2 Objects: 199
Dir 3 Objects: 79

$e = 0.067$
$xm = 10.119$
$ym = 26.579$
$a = 4.418$
$b = 5.869$
$rot = -47.926$

Raw ?
Threshold ?          104
Edge?
Votes?
Delaylines?
Ellipse?
Frame:          1
Ellipse:          0
Ellipse Raw:          0

Core Size:          10
Top Line:          10
Bottom Line:          3
DL not SUM:          2
Hough Thr          4

Parametersatz

# FIG 10F

Preview

Extremabild

FIG 10G

WinDelayLine

File  Start  Demo  Stop  About

Raw Ellipses:  255
Result Ellipses: 29
Time Calc Ellipses:  68.255 m
Dir 0 Points:  564
Dir 1 Points:  16
Dir 2 Points:  622
Dir 3 Points:  18
Dir 0 Objects:  130
Dir 1 Objects:  9
Dir 2 Objects:  167
Dir 3 Objects:  7

e = 0.730
xm = 48.444
ym = 111.556
a = 23.338
b = 134.752
rot = -86.859

Raw ?
Threshold ?                    104
Edge?
Votes?
Delaylines?
Ellipse?
Frame:                    1
Ellipse:                    0
Ellipse Raw:                    0

Core Size:                    16
Top Line:                    7
Bottom Line:                    4
DL not SUM:                    4
Hough Thr                    6

Parametersatz

FIG 10H

FIG 11A

FIG 11B

EP 2 087 459 B1

2100

2112
Kamerabild

2110
Vorverarbeitungs-Einrichtung

2114
Vorverarbeitetes
Kamerabild
(Patche)

2120
Vergleichs-einrichtung

2126
Position

optional

3-Dimensionales
Umgebungsmodell

2134

2130
Modellbild-Erzeugungs-Einrichtung

Modellbild
mit Ortsinformation

2124

FIG 12

# FIG 13

Kamerabild —2212    2210    1250

**Bewegungserkennenung** 2290

optional

**Kantenerkennung
Flächen-Umriss-Erkennung** —2248 2290

2244
**Flächenerkennung** —2252

Bewegte Objekte
in dem Kamerabild

Kanten in dem Kamerabild

Flächen in dem Kamerabild

optional

optional

**Optional:
Konsistenzprüfer** —2260

**Farbkorrigieren** —2280

optional

**Patcherzeuger** —2270

Vorverarbeitungs-
Einrichtung

2224 —Modellbild

Farbflächen, begrenzt durch erkannte
Linien = vorverarbeitetes Kamerabild —2214

**Modellbild-Kamerabild-Vergelciher** —2220

—2226
Position

EP 2 087 459 B1

## FIG 13A

1250

1258

1256

1252a

1252

1254

1254a

## FIG 13B

Vergleichsmuster

1260

1262a          1262d

1262b          1262c

1264b          1264a

1264d

1264c

1266a

1266d

1266b

1266c

1272a — 1272d

1272b — 1272c

# FIG 13C

2300

| 2320 | 2322 | 2324 | 2326 | 2330 |

3-dimensionales Modell
einer Umgebung

optional:
Uhrzeit/Datum

optional:
Beleuchtungsinformation

optional:
Sichtverhältnisse-
Information

optional:
Kamera-Ausrichtungs-
Information

optional:
Kamera-Positions-
Information

Modellbild-Bestimmer

✕ 3D-Modell-zu-2D-Modellbild-Umsetzer
✕ optional: Beleuchtungs-Modellieler
✕ optional: Sichtvehältniss-Modellierer
✕ optional: Jahreszeit-Modellierer

2310

2328

Modellbild
umfassend eine Mehrzahl von
einfarbigen Farbflächen

2340

FIG 14

# FIG 15

2400

Modellbild ～2430                vorverarbeitetes Kamerabild
2410                                           ～2414

Mehrmalsextraktor ～2460          Mehrmalsextraktor

～2412                                        2422～  ＼2420

Merkmale oder Merkmalsvektor, z.B.,     Merkmale oder Merkmalsvektor

✗ Horizontalhistogramm
✗ Vertikalhistogramm
✗ Charakteristische Flächen
✗ Farbmerkmale
✗ Objektkategorien/Objektklassen
✗ Fluchpunkte
✗ Entfernungsmerkmale

Merkmalsvergleicher
2440～  qualitativer Merkmalsvergleicher
quantitativer Merkmalsvergleicher

2450～

Positionsinformation

# FIG 16

2500

Erzeugen eines voverarbeiteten Kamerabildes basierend auf einem Kamerabild von einer Kamera, so dass in dem voverarbeiteten Kamerabild zusammengehörige Bereiche des Kamerabildes durch zugehörige, einfarbige, ausgedehnte Flächen dargestellt sind, wobei eine Zuordnung zwischen Farben der Bereiche des Kamerabildes und Farben der zugehörigen einfarbigen Flächen in dem vorverarbeiteten Kamerabild besteht, so dass Bereiche, die sich in dem Kamerabild farblich unterscheiden in dem vorverarbeiteten Kamerabild durch verschiedenfarbige Flächen dargestellt sind
~2510

Vergleichen des vorverarbeiteten Kamerabildes mit einem Modelbild, das auf einem Umgebungsmodell basiert, das eine Aussicht einer Umgebung in Form einer Mehrzahl von einfarbigen Flächen beschreibt, und das zugeordnete Ortsinformation aufweist, um eine Position zu bestimmen, von der an das Kamerabild aufgenommen wurde
~520

# FIG 17

1700

Hough-Transformieren des Kamerabildes oder einer vorverarbeiteten Version des Kamerabildes, um Kreisbögen oder Ellipsenbögen in dem Kamerabild oder in der vorverarbeiteten Version des Kamerabildes zu identifizieren, und um eine Mehrzahl von in verschiedenen Richtungen durch das Kamerabild oder durch die davon abgeleitete vorverarbeitete Version verlaufenden geraden Strecken zu identifizieren ～1710

Erstellen einer Positionsbeschreibung, die die identifizierten Kreisbögen oder Ellipsenbögen und die identifizierten geraden Strecken durch Parameter beschreibt, basierend auf den identifizierten Kreisbögen oder Ellipsenbögen und den identifizierten geraden Strecken; und ～1720

Vergleichen der Positionsbeschreibung mit einer Mehrzahl von Vergleichspositionensbeschreibungen in einer Datenbank, um als Ergebnis des Vergleichs eine Information über die Position zu erhalten ～1730

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10248534 A1
- EP 1677076 A
- DE 10117870
- EP 1032891 A
- WO 102005047160 A
- DE 102005047160953
- US 6732046 B

### In der Beschreibung aufgeführte Nicht-Patentliteratur

- Inertial sensor data integration in computer vision systems. **J. LOBO.** M. Sc. Thesis. University of Coimbra, Februar 2002
- **J. LOBO.** Inertial sensor data integration in computer vision systems. University of Coimbra, 37 ff
- Improving calibration of 3D-Videooculography systems. **K. SCHREIBER ; T. HASLWANTER.** IEEE transactions on biomedical engineering. 04. April 2004, vol. 51
- **A. BRÜCKMANN ; F. KLEFENZ ; A. WÜNSCHE BESCHRIEBEN.** A neural net vor 2D slope and sinusoidal shape detection. *International Scientific Journal of Computing,* 2004, vol. 3 (1), 21-26
- **K. GEGENFURTNER.** Colour in the cortex revisited. *Nature Neuroscience,* April 2001, vol. 4 (4
- **AVI EPSTEIN.** Parallel hardware architectures for the life sciences. Technische Universität Delft
- **J. HÄMORI ; T. ROSKA.** Receptive Field Atlas of the Retinotopic visual pathway and some other sensory organs using dynamic cellular neural network models
- Analogical and neural computing laboratory, computer and automation institute. Hungarian Academy of Sciences
- **A. K. LÄZÄR ; R. WAGNER ; D. BÄLYA ; T. ROSKA BESCHRIEBEN.** *Functional representations of retina channels via the RefineC retina simulator*
- **C.-T. HO ; L.-H. CHEN.** A high-speed-algorithm for elliptical object detection. *IEEE transactions on image processing,* Marz 1996, vol. 5 (3), 547-550
- **VINCENT WALSH.** How does the Cortex construct color?. *Proceedings of the National Academy of Sciences of the United States of America,* 23. November 1999, vol. 96 (24), 13594-13596
- **VINCENT WALSH.** *How does the Cortex Construct Color?*
- **J. HÄMORI ; T. ROSKA.** *Receptive Field Atlas of the Retinotopic Visual Pathway and some other Sensory Organs using Dynamic cellular Neural Network Models*
- Farbkonstanz und Farbkontrast - Eine Untersuchung mit Hilfe der farbigen Schatten. **A. J. KALLMANN.** Fachbereich Biologie. Johannes-Gutenberg-Universität Mainz
- **JORGE NUNO ; DE ALMEIDA ; E SOUSA LOBO.** Inertial Sensor Data Integration in Computer Vision Systems. M. Sc. Thesis an der University of Coimbra, Faculty of Science and Technology, Electrical and Computer Engineering Department
- **A. BARTELS ; S. ZEKI.** The Architecture of the Color Center in the Human Visual Brain, New Result and a Preview. *Eur. J. Neurosci.,* 2000, vol. 12 (1), 172-193
- **J. ROMAYA.** A Computer Model of the Land Mondrian Retinex Experiment. *Eur. J. Neurosci.,* 2000, vol. 12 (1), 191-193
- **A. BARTELS ; S. ZEKI.** The chronoarchitecture of the cerebral cortex. *Philosophical Transactions of the Royal Society B,* 2005, vol. 360, 733-750
- Color in the Cortex Revisited. **K. GEGENFURTNER.** Nature Neuroscience. Nature Publishing Group, April 2001, vol. 4
- **L. RÜTTIGER U. A.** Selective Color Constancy Deficits after Circumscribed Unilateral Brain Lesions. *The Journal of Neuroscience,* 15. April 1999, vol. 19 (8), 3098-23106